(19) Europäisches Patentamt
European Patent Office
Office européen des brevets

(11) EP 4 429 381 A1

(12) **EUROPEAN PATENT APPLICATION**
published in accordance with Art. 153(4) EPC

(43) Date of publication:
**11.09.2024 Bulletin 2024/37**

(21) Application number: **22919110.1**

(22) Date of filing: **30.12.2022**

(51) International Patent Classification (IPC):
***H04W 72/23*** *(2023.01)* ***H04W 72/04*** *(2023.01)*

(52) Cooperative Patent Classification (CPC):
**H04W 72/04; H04W 72/23**

(86) International application number:
**PCT/KR2022/021744**

(87) International publication number:
**WO 2023/132573 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2022 KR 20220001661**

(71) Applicant: **Samsung Electronics Co., Ltd.**
**Suwon-si, Gyeonggi-do 16677 (KR)**

(72) Inventors:
- **JANG, Youngrok**
**Suwon-si, Gyeonggi-do 16677 (KR)**
- **PARK, Kyoungmin**
**Suwon-si, Gyeonggi-do 16677 (KR)**
- **ABEBE, Ameha Tsegaye**
**Suwon-si, Gyeonggi-do 16677 (KR)**
- **LIM, Seongmok**
**Suwon-si, Gyeonggi-do 16677 (KR)**
- **JI, Hyoungju**
**Suwon-si, Gyeonggi-do 16677 (KR)**

(74) Representative: **HGF**
**HGF Limited**
**1 City Walk**
**Leeds LS11 9DX (GB)**

(54) **METHOD AND DEVICE FOR DYNAMIC SWITCHING BETWEEN DOWNLINK DATA CHANNEL TRANSMISSION OR RECEPTION SCHEMES IN WIRELESS COMMUNICATION SYSTEM**

(57) The present disclosure relates to a 5G or 6G communication system for supporting higher data transfer rates. Specifically, the present discourse provides a method of receiving, by a terminal, transmission configuration indicator (TCI) state information in a wireless communication system, the method comprising the steps of: receiving information on a TCI state from a base station; obtaining a parameter relating to at least one of an uplink transmission beam and a downlink reception beam on the basis of the received information on the TCI state; and transmitting or receiving data to or from the base station on the basis of the determined parameter.

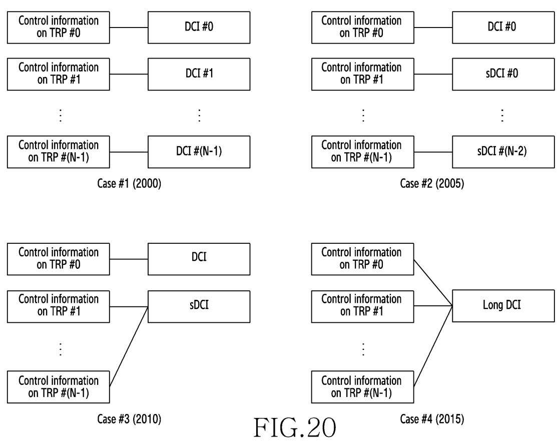


FIG.20

EP 4 429 381 A1

## Description

[Technical Field]

The disclosure relates to an operation of a terminal and a base station in a wireless communication system (or mobile communication system). Specifically, the disclosure relates to a method of dynamic switching between techniques of transmitting or receiving a downlink data channel in a wireless communication system, and a device capable of performing same.

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands (e.g., 60GHz (80GHz) bands) so as to accomplish higher data rates. To decrease the propagation loss of the radio waves and increase the transmission distance of radio waves in the ultrahigh frequency (mmWave) bands, beamforming, massive multiple-input multiple-output (massive MIMO), full dimensional MIMO (FD-MIMO), array antenna, an analog beam forming, and large scale antenna techniques have been discussed in the 5G communication system.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like. In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply a 5G communication system (5th generation communication system or new radio (NR)) to an IoT network. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

With the advance of wireless communication systems as described above, various services can be provided, and accordingly there is a need for ways to effectively provide these services, in particular, a method for performing dynamic switching between downlink data channel transmission/reception techniques.

[Disclosure of Invention]

[Technical Problem]

A disclosed embodiment is to provide a method and a device enabling effective provision of a service in a mobile communication system.

[Solution to Problem]

A method performed by a terminal according to an embodiment of the disclosure includes receiving, from a base station, first downlink control information (DCI) for indicating a unified transmission configuration indicator (TCI) state, the first DCI including first information indicating at least one unified TCI state, receiving, from the base station, second DCI for scheduling a physical downlink shared channel (PDSCH), the second DCI including second information on a unified TCI state applied for reception of the PDSCH among the at least one unified TCI state, and receiving the PDSCH from the base station by applying the unified TCI state identified based on the second information.

A method performed by a base station according to an embodiment of the disclosure includes transmitting, to a terminal, first downlink control information (DCI) for indicating a unified transmission configuration indicator (TCI) state, the first DCI including first information indicating at least one unified TCI state, transmitting, to the terminal, second DCI for scheduling a physical downlink shared channel (PDSCH), the second DCI including second information on a unified TCI state applied for the PDSCH among the at least one unified TCI state, and transmitting the PDSCH to the terminal, based on the unified TCI state identified based on the second information.

A terminal according to an embodiment of the disclosure includes a transceiver and a controller connected to the transceiver, wherein the controller is configured to receive, from a base station, first downlink control information (DCI) for indicating a unified transmission configuration indicator (TCI) state, the first DCI including first information indicating at least one unified TCI state, receive, from the base station, second DCI for scheduling a physical downlink shared channel (PDSCH), the second DCI including second information on a unified TCI state applied for reception of the PDSCH among the at least one unified TCI state, and receive the PDSCH from the base station by applying the unified TCI state identified based on the second information.

A base station according to an embodiment of the disclosure includes a transceiver and a controller connected to the transceiver, wherein the controller is configured to transmit, to a terminal, first downlink control information (DCI) for indicating a unified transmission configuration indicator (TCI) state, the first DCI including first information indicating at least one unified TCI state, transmit, to the terminal, second DCI for scheduling a physical downlink shared channel (PDSCH), the second DCI including second information on a unified TCI state applied for the PDSCH among the at least one unified TCI state, and transmit the PDSCH to the terminal, based on the unified TCI state identified based on the second information.

[Advantageous Effects of Invention]

A disclosed embodiment provides a method and a device enabling effective provision of a service in a mobile communication system.

[Brief Description of Drawings]

FIG. 1 is a diagram illustrating a basic structure of a time-frequency domain in a wireless communication system according to an embodiment of the disclosure.

FIG. 2 is a diagram illustrating a structure of a frame, a subframe, and a slot in a wireless communication system according to an embodiment of the disclosure.

FIG. 3 is a diagram illustrating an example of bandwidth part configuration in a wireless communication system according to an embodiment of the disclosure.

FIG. 4 is a diagram illustrating an example of control resource set configuration of a downlink control channel in a wireless communication system according to an embodiment of the disclosure.

FIG. 5A is a diagram illustrating a structure of a downlink control channel in a wireless communication system according to an embodiment of the disclosure.

FIG. 5B is a diagram illustrating, in terms of spans, a case in which a UE may have multiple PDCCH monitoring occasions inside a slot in a wireless communication system according to an embodiment of the disclosure.

FIG. 6 is a diagram illustrating an example of a discontinuous reception (DRX) operation in a wireless communication system according to an embodiment of the disclosure.

FIG. 7 is a diagram illustrating an example of base station beam allocation according to transmission configuration indication (TCI) state configuration in a wireless communication system according to an embodiment of the disclosure.

FIG. 8 is a diagram illustrating an example of a method for TCI state allocation with regard to a PDCCH in a wireless communication system according to an embodiment of the disclosure.

FIG. 9 is a diagram illustrating a TCI indication medium access control (MAC) control element (CE) signaling structure for a PDCCH demodulation reference signal (DMRS) in a wireless communication system according to an embodiment of the disclosure.

FIG. 10 is a diagram illustrating an example of beam configuration with regard to a control resource set and a search space in a wireless communication system according to an embodiment of the disclosure.

FIG. 11 is a diagram for explaining a method in which a base station and a UE transmit/receive data in consideration of a downlink data channel and a rate matching resource in a wireless communication system according to an embodiment of the disclosure.

FIG. 12 is a diagram for explaining a method in which, upon receiving a downlink control channel, a UE selects a receivable control resource set in consideration of priority in a wireless communication system according to an embodiment of the disclosure.

FIG. 13 is a diagram illustrating an example of frequency domain resource allocation with regard to a physical downlink shared channel (PDSCH) in a wireless communication system according to an embodiment of the disclosure.

FIG. 14 is a diagram illustrating an example of time domain resource allocation with regard to a PDSCH in a wireless communication system according to an embodiment of the disclosure.

FIG. 15 is a diagram illustrating an example of time domain resource allocation according to a subcarrier spacing with regard to a data channel and a control channel in a wireless communication system according to an embodiment of the disclosure.

FIG. 16 is a diagram illustrating a process for beam configuration and activation with regard to a PDSCH.

FIG. 17 is a diagram illustrating physical uplink shared channel (PUSCH) repeated transmission type B in a wireless communication system according to an embodiment of the disclosure.

FIG. 18 is a diagram illustrating radio protocol structures of a base station and a UE in single cell, carrier aggregation, and dual connectivity situations in a wireless communication system according to an embodiment of the disclosure.

FIG. 19 is a diagram illustrating an example of an antenna port configuration and resource allocation for cooperative communication in a wireless communication system according to an embodiment of the disclosure;

FIG. 20 is a diagram illustrating a configuration of downlink control information (DCI) for cooperative communication in a wireless communication system according to an embodiment of the disclosure;

FIG. 21 is a diagram illustrating an enhanced PDSCH TCI state activation/deactivation MAC-CE structure;

FIG. 22 is a diagram illustrating an RLM RS selection process according to an embodiment of the disclosure;

FIG. 23 is a diagram illustrating a MAC-CE structure for joint TCI state activation and indication in a wireless communication system according to an embodiment of the disclosure;

FIG. 24 is a diagram illustrating another MAC-CE structure for joint TCI state activation and indication in a wireless communication system according to an embodiment of the disclosure;

FIG. 25 is a diagram illustrating another MAC-CE structure for joint TCI state activation and indication in a wireless communication system according to an embodiment of the disclosure;

FIG. 26 is a diagram illustrating a MAC-CE structure for separate TCI state activation and indication in a wireless communication system according to an embodiment of the disclosure;

FIG. 27 is a diagram illustrating another MAC-CE structure for separate TCI state activation and indication in a wireless communication system according to an embodiment of the disclosure;

FIG. 28 is a diagram illustrating another MAC-CE structure for separate TCI state activation and indication in a wireless communication system according to an embodiment of the disclosure;

FIG. 29 is a diagram illustrating another MAC-CE structure for separate TCI state activation and indication in a wireless communication system according to an embodiment of the disclosure;

FIG. 30 is a diagram illustrating a MAC-CE structure for joint and separate TCI state activation and indication in a wireless communication system according to an embodiment of the disclosure;

FIG. 31 is a diagram illustrating another MAC-CE structure for joint and separate TCI state activation and indication in a wireless communication system according to an embodiment of the disclosure;

FIG. 32 is a diagram illustrating a beam application time (BAT) which may be considered when a unified TCI scheme is used in a wireless communication system according to an embodiment of the disclosure;

FIG. 33 is a diagram illustrating a MAC-CE structure for activation and indication of multiple joint TCI states in a wireless communication system according to an embodiment of the disclosure;

FIG. 34 is a diagram illustrating a MAC-CE structure for activation and indication of multiple separate TCI states in a wireless communication system according to an embodiment of the disclosure;

FIG. 35 is a diagram illustrating another MAC-CE structure for activation and indication of multiple separate TCI states in a wireless communication system according to an embodiment of the disclosure;

FIG. 36 is a diagram illustrating a structure of a UE in a wireless communication system according to an embodiment of the disclosure.

FIG. 37 is a diagram illustrating a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types to the embodiments of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. The contents of the disclosure can be applied to FDD and TDD systems.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description of the disclosure, detailed descriptions of known functions or configurations incorporated herein will be omitted when it is determined that the description may make the subject matter of the disclosure unnecessarily unclear. Hereinafter, embodiments of the disclosure will be described with reference to the accompanying drawings.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/$km^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

FIG. 2 illustrates a structure of a frame, a subframe, and a slot in a wireless communication system according to an embodiment of the disclosure.

FIG. 2 illustrates an example of a structure of a frame 200, a subframe 201, and a slot 202. One frame 200 may be defined as 10ms. One subframe 201 may be defined as 1 millisecond (ms), and thus one frame 200 may include a total of ten subframes 201. One slot 202 or 203 may be defined as 14 OFDM symbols (that is, the number of symbols per one slot $N_{symb}^{slot}=14$ ). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{sunframe,\mu}$ may differ depending on the subcarrier spacing configuration value $\mu$, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{sunframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

FIG. 3 illustrates an example of bandwidth part configuration in a wireless communication system according to an embodiment of the disclosure.

FIG. 3 illustrates an example in which a UE bandwidth 300 is configured to include two bandwidth parts, that is bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                          SEQUENCE {
    bwp-Id                           BWP-Id,
    (bandwidth part identifier)
    locationAndBandwidth         INTEGER (1..65536),
    (bandwidth part location)
    subcarrierSpacing            ENUMERATED {n0, n1, n2, n3, n4, n5},
    (subcarrier spacing)
    cyclicPrefix                 ENUMERATED { extended }
    (cyclic prefix)
}
```

Of course, the bandwidth part configuration is not limited by Table 2, and in addition to the configuration information in Table 2, various parameters related to the bandwidth part may be configured for the UE. The configuration information may be transferred from the base station to the UE through upper layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). To be more specific, in order to receive system information (which may correspond to remaining system information (RMSI) or system information block 1 (SIB1)) required for initial access through the MIB, the UE may receive, in the initial access stage, configuration information on a search space and a control resource set (CORESET) through which a PDCCH is transmissible. Each of the control resource set and the search space configured through the MIB may be considered identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion regarding control resource set #0, that is, configuration information regarding control resource set #0, through the MIB. The UE may consider that a frequency domain configured by control resource set #0 acquired from the MIB is an initial bandwidth part for initial access. The ID of the initial bandwidth part may be considered to be 0.

According to an embodiment of the disclosure, the bandwidth part-related configuration supported by 5G may be used for various purposes.

According to an embodiment, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing, and when data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth (for example, 100MHz) and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

According to an embodiment of the disclosure, in connection with the bandwidth part configuration method, UEs, before being RRC-connected, may receive configuration information regarding the initial bandwidth part through the MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured through the MIB may be regarded as an initial bandwidth part, and the UE may receive, through the configured initial bandwidth part, a PDSCH through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may instruct to the UE to change (or switch) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined, for example, as follows. Obviously, the example given below is not limiting.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (that is, the last symbol of slot n+K-1).

[SS/PBCH block]

Next, synchronization signal (SS)/PBCH blocks in 5G will be described.

An SS/PBCH block may refer to a physical layer channel block including a primary SS (PSS), a secondary SS (SSS), and a PBCH. Details thereof are as follows.

PSS: a signal which becomes a reference of downlink time/frequency synchronization, and provides partial information of a cell ID.

SSS: becomes a reference of downlink time/frequency synchronization, and provides remaining cell ID information not provided by the PSS. Additionally, the SSS may serve as a reference signal (RS) for demodulation of a PBCH.

PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.

SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and from this, CORESET #0 (which may correspond to a control resource set having a control resource set index of 0) may be configured for the UE. The UE may perform monitoring of control resource set #0, based on an assumption that a selected SS/PBCH block and a demodulation reference signal (DMRS) transmitted in control resource set #0 have a relationship of quasi co-location (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[DRX]

FIG. 6 illustrates discontinuous reception (DRX).

DRX refers to an operation in which a UE currently using a service discontinuously receives data in an RRC-connected state in which a radio link is configured between the base station and the UE. If the DRX is applied, the UE may turn on a receiver at a specific timepoint so as to monitor a control channel, and may turn off the receiver if there is no data received for a predetermined period of time, thereby reducing power consumed by the UE. The DRX operation may be controlled by a MAC layer device, based on various parameters and timers.

Referring to FIG. 6, the active time 605 refers to a time during which the UE wakes up at each DRX cycle and monitors the PDCCH. The active timer 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, and the like are timers having values configured by the base station, and have functions which cause the UE to monitor the PDCCH in a situation in which a predetermined condition is satisfied.

drx-onDurationTimer 615 is a parameter for configuring the minimum time during which the UE is awake at the DRX cycle. drx-InactivityTimer 620 is a parameter for configuring a time during which the UE is additionally awake upon receiving (630) a PDCCH indicating new uplink transmission or downlink transmission. drx-RetransmissionTimerDL is a parameter for configuring the maximum time during which the UE is awake in order to receive downlink retransmission in a downlink HARQ procedure. drx-RetransmissionTimerUL is a parameter for configuring the maximum time during which the UE is awake in order to receive an uplink retransmission grant in an uplink HARQ procedure. drx-onDurationTimer, drx-InactivityTimer, drx-RetransmissionTimerDL, and drx-RetransmissionTimerUL may be configured as, for example, time, the number of subframes, the number of slots, and the like. ra-ContentionResolutionTimer is a parameter for monitoring the PDCCH in a random access procedure.

The inActive time 610 refers to a time configured such that the PDCCH is not monitored during the DRX operation or a time configured such that the PDCCH is not received, and the inActive time 610 may be obtained by subtracting the active timer 605 from the entire time during which the DRX operation is performed. If the UE does not monitor the PDCCH during the active time 605, the UE may enter a sleep or inActive state, thereby reducing power consumption.

The DRX cycle refers to the cycle at which the UE wakes up and monitors the PDCCH. That is, the DRX cycle refers to the time interval between when the UE monitors a PDCCH and when the next PDCCH is monitored, or the cycle at which on-duration occurs. There are two kinds of DRX cycles: a short DRX cycle and a long DRX cycle. The short DRX cycle may be optionally applied.

The long DRX cycle 625 is the longer cycle between two DRX cycles configured for the UE. While operating with long DRX, the UE restarts the drx-onDurationTimer 615 at a timepoint at which the long DRX cycle 625 has elapsed from the start point (for example, start symbol) of the drx-onDurationTimer 615. When operating at the long DRX cycle 625, the UE may start the drx-onDurationTimer 615 in a slot after drx-SlotOffset in a subframe satisfying Equation 1 below. As used herein, drx-SlotOffset refers to a delay before the drx-onDurationTimer 615 is started. The drx-SlotOffset may be configured, for example, as time, the number of slots, or the like.

[Equation 1]

$$[(\text{SFN X } 10) + \text{subframe number}]\ \text{modulo}(\text{drx-LongCycle}) = \text{drx-StartOffset}$$

wherein drx-LongCycleStartOffset may be used to define the long DRX cycle 625, and drx-StartOffset may be used to define a subframe to start the long DRX cycle 625. drx-LongCycleStartOffset may be configured as, for example, time, the number of subframes, the number of slots, or the like.

[PDCCH: regarding DCI]

Next, downlink control information (DCI) in a 5G communication system will be described in detail.

In a 5G communication system, scheduling information regarding uplink data (or physical uplink shared channel (PUSCH)) or downlink data (or physical downlink shared channel (PDSCH)) may be transferred from a base station to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check is attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted, but is transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling the PUSCH, and the CRC may be scrambled by a C-RNTI. DCI format 0_0 in which the CRC is scrambled by a C-RNTI may include the following pieces of information in Table 4 below, for example. Obviously, the example given below is not limiting.

[Table 4]

| |
|---|
| - Identifier for DCI formats - [1] bit<br>- Frequency domain resource assignment $-[\lceil log_2(N_{RB}^{UL,BWP}(N_{RB}^{UL,BWP}+1)/2)\rceil]$ bits |

(continued)

| |
|---|
| - Time domain resource assignment - X bits<br>- Frequency hopping flag - 1 bit.<br>- Modulation and coding scheme - 5 bits<br>- New data indicator - 1 bit<br>- Redundancy version - 2 bits<br>- HARQ process number - 4 bits<br>- Transmit power control (TPC) command for scheduled PUSCH- [2] bits<br>- Uplink/supplementary uplink indicator (UL/SUL indicator) - 0 or 1 bit |

DCI format 0_1 may be used as non-fallback DCI for scheduling the PUSCH, and the CRC may be scrambled by a C-RNTI. DCI format 0_1 in which the CRC is scrambled by a C-RNTI may include the following pieces of information, for example. Obviously, the example given below is not limiting.

[Table 5]

| |
|---|
| - Carrier indicator - 0 or 3 bits<br>- UL/SUL indicator - 0 or 1 bit<br>- Identifier for DCI formats - [1] bits<br>- Bandwidth part indicator - 0, 1 or 2 bits<br>- Frequency domain resource assignment<br>• For resource allocation type 0, $\lceil N_{RB}^{UL,BWP} / P \rceil$ bits<br>• For resource allocation type 1, $\lceil \log_2(N_{RB}^{UL,BWP}(N_{RB}^{UL,BWP}+1)/2) \rceil$ bits<br>- Time domain resource assignment -1, 2, 3, or 4 bits<br>- Virtual resource block-to-physical resource block (VRB-to-PRB) mapping - 0 or 1 bit, only for resource allocation type 1.<br>• 0 bit if only resource allocation type 0 is configured;<br>• 1 bit otherwise.<br>- Frequency hopping flag - 0 or 1 bit, only for resource allocation type 1.<br>• 0 bit if only resource allocation type 0 is configured;<br>• 1 bit otherwise.<br>- Modulation and coding scheme - 5 bits<br>- New data indicator - 1 bit<br>- Redundancy version - 2 bits<br>- HARQ process number - 4 bits<br>- 1st downlink assignment index- 1 or 2 bits<br>• 1 bit for semi-static HARQ-ACK codebook;<br>• 2 bits for dynamic HARQ-ACK codebook with single HARQ-ACK codebook.<br>- 2nd downlink assignment index - 0 or 2 bits<br>• 2 bits for dynamic HARQ-ACK codebook with two HARQ-ACK sub-codebooks;<br>• 0 bit otherwise.<br>- TPC command for scheduled PUSCH - 2 bits<br>- SRS resource indicator - $\left\lceil \log_2\left(\sum_{k=1}^{L_{max}} \binom{N_{SRS}}{k}\right) \right\rceil$ or $\lceil \log_2(N_{SRS}) \rceil$ bits<br>• $\left\lceil \log_2\left(\sum_{k=1}^{L_{max}} \binom{N_{SRS}}{k}\right) \right\rceil$ bits for non-codebook based PUSCH transmission; |

(continued)

| |
|---|
| • $\lceil \log_2(N_{SRS}) \rceil$ bits for codebook based PUSCH transmission. |
| - Precoding information and number of layers-up to 6 bits |
| - Antenna ports - up to 5 bits |
| - SRS request - 2 bits |
| - CSI request - 0, 1, 2, 3, 4, 5, or 6 bits |
| - Code block group (CBG) transmission information - 0, 2, 4, 6, or 8 bits |
| - Phase tracking reference signal (PTRS)-demodulation reference signal (DMRS) association- 0 or 2 bits. |
| - beta offset indicator- 0 or 2 bits |
| - DMRS sequence initialization- 0 or 1 bit |

DCI format 1_0 may be used as fallback DCI for scheduling the PDSCH, and the CRC may be scrambled by a C-RNTI. DCI format 1_0 in which the CRC is scrambled by a C-RNTI may include the following pieces of information, for example. Obviously, the example given below is not limiting.

[Table 6]

| |
|---|
| - Identifier for DCI formats - [1] bit |
| - Frequency domain resource assignment - $[\lceil \log_2(N_{RB}^{DL,BWP}(N_{RB}^{DL,BWP}+1)/2) \rceil]$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Physical uplink control channel (PUCCH) resource indicator- 3 bits |
| - PDSCH-to-HARQ feedback timing indicator- [3] bits |

DCI format 1_1 may be used as non-fallback DCI for scheduling the PDSCH, and the CRC may be scrambled by a C-RNTI. DCI format 1_1 in which the CRC is scrambled by a C-RNTI may include the following pieces of information, for example. Obviously, the example given below is not limiting.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| • For resource allocation type 0, $\lceil N_{RB}^{DL,BWP}/P \rceil$ bits |
| • For resource allocation type 1, $\lceil \log_2(N_{RB}^{DL,BWP}(N_{RB}^{DL,BWP}+1)/2) \rceil$ bits |
| - Time domain resource assignment -1, 2, 3, or 4 bits |
| - VRB-to-PRB mapping - 0 or 1 bit, only for resource allocation type 1. |
| • 0 bit if only resource allocation type 0 is configured; |
| • 1 bit otherwise. |
| - PRB bundling size indicator - 0 or 1 bit |
| - Rate matching indicator - 0, 1, or 2 bits |
| - ZP CSI-RS trigger - 0, 1, or 2 bits |
| For transport block 1: |

(continued)

| |
|---|
| - Modulation and coding scheme - 5 bits<br>- New data indicator - 1 bit<br>- Redundancy version - 2 bits<br>For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits<br>- Transmission configuration indication- 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

[PDCCH: CORESET, REG, CCE, and Search Space]

Hereinafter, a downlink control channel in a 5G communication system will be described in more detail with reference to the accompanying drawings.

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 403 within the entire UE bandwidth part 410 along the frequency axis. One or multiple OFDM symbols may be configured along the time axis, and this may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information.

[Table 8]

```
ControlResourceSet ::=                    SEQUENCE {
    -- Corresponds to L1 parameter 'CORESET-ID'

    controlResourceSetId                  ControlResourceSetId,
    (control resource set identity))
    frequencyDomainResources              BIT STRING (SIZE (45)),
    (frequency domain resource assignment information)
    duration                              INTEGER (1..maxCoReSetDuration),
    (time domain resource assignment information)
    cce-REG-MappingType                        CHOICE {
    (CCE-to-REG mapping type)
      interleaved                            SEQUENCE {

        reg-BundleSize                         ENUMERATED {n2, n3, n6},
        (REG bundle size)

        precoderGranularity                    ENUMERATED {sameAsREG-
      bundle, allContiguousRBs},

        interleaverSize                        ENUMERATED {n2, n3, n6}
        (interleaver size)

        shiftIndex
        INTEGER(0..maxNrofPhysicalResourceBlocks-1)
            OPTIONAL
        (interleaver shift)
        },
      nonInterleaved                         NULL
    },
    tci-StatesPDCCH                          SEQUENCE(SIZE (1..maxNrofTCI-
      StatesPDCCH)) OF TCI-StateId             OPTIONAL,
    (QCL configuration information)
    tci-PresentInDCI                      ENUMERATED {enabled}
                            OPTIONAL, -- Need S
}
```

In Table 8, tci-StatesPDCCH (simply referred to as transmission configuration indication (TCI) state) configuration information may include information of one or multiple synchronization signal (SS)/physical broadcast channel (PBCH) block index or channel state information reference signal (CSI-RS) index, which is quasi-co-located with a DMRS transmitted in a corresponding control resource set. Obviously, the example given above is not limiting.

FIG. 5A illustrates an example of the basic unit of time and frequency resources constituting a downlink control channel available in 5G. According to FIG. 5A, the basic unit of time and frequency resources constituting a control channel may be referred to as a resource element group (REG) 503, and the REG 503 may be defined by one OFDM symbol 501 along the time axis and one physical resource block (PRB) 502 (that is, 12 subcarriers) along the frequency axis. The base station may configure a downlink control channel allocation unit by concatenating the REGs 503.

Provided that the basic unit of downlink control channel allocation in 5G is a control channel element 504 as illustrated in FIG. 5A, one CCE 504 may include multiple REGs 503. To describe the REG 503 illustrated in FIG. 5A, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5A, that is, the REG 503 may include both REs to which DCI is mapped, and an area to which a reference signal (DMRS 505) for decoding the same is mapped. As in FIG. 5A, three DRMSs 505 may be transmitted inside one REG 503. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while having no information regarding the downlink control channel, and a search space indicating a set of CCEs has thus been defined for blind decoding. The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured ALs.

Search spaces may be classified into common search spaces and UE-specific search spaces. A group of UEs or all UEs may search a common search space of the PDCCH in order to receive cell-common control information such as a paging message or dynamic scheduling regarding system information. For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a pre-promised set of CCEs. Scheduling allocation information regarding a UE-specific PDSCH or PUSCH may be received by investigating the UE-specific search space of the PDCCH. The UE-specific search space may be defined UE-specifically as a function of various system parameters and the identity of the UE.

In 5G, a parameter regarding a search parameter regarding a PDCCH may be configured for the UE by the base station through upper layer signaling (for example, SIB, MIB, RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the parameter may include the following pieces of information given in Table 9 below. Obviously, the example given below is not limiting.

[Table 9]

```
SearchSpace ::=                          SEQUENCE {
    -- Identity of the search space. SearchSpaceId = 0 identifies the SearchSpace configured
       via PBCH (MIB) or ServingCellConfigCommon.
    searchSpaceId                             SearchSpaceId,
    (search space identity)
    controlResourceSetId                      ControlResourceSetId,
    (control resource set identity)
    monitoringSlotPeriodicityAndOffset        CHOICE {
    (monitoring slot level periodicity)
       sl1                                       NULL,
       sl2                                       INTEGER (0..1),
       sl4                                       INTEGER (0..3),
       sl5                                    INTEGER (0..4),
       sl8                                       INTEGER (0..7),
       sl10                                   INTEGER (0..9),
       sl16                                   INTEGER (0..15),
       sl20                                   INTEGER (0..19)
    }
                                              OPTIONAL,
    duration(monitoring duration)                INTEGER (2..2559)
    monitoringSymbolsWithinSlot                  BIT STRING (SIZE (14))
                                                 OPTIONAL,
    (monitoirng symbols within slot)
    nrofCandidates                            SEQUENCE {
    (number of PDCCH candidates for each aggregation level)
       aggregationLevel1                      ENUMERATED {n0, n1, n2, n3, n4, n5,
       n6, n8},
       aggregationLevel2                      ENUMERATED {n0, n1, n2, n3, n4, n5,
       n6, n8},
       aggregationLevel4                      ENUMERATED {n0, n1, n2, n3, n4, n5,
       n6, n8},
```

```
aggregationLevel8                    ENUMERATED {n0, n1, n2, n3, n4, n5,
n6, n8},
aggregationLevel16                   ENUMERATED {n0, n1, n2, n3, n4, n5,
n6, n8}
},

searchSpaceType                      CHOICE {
(search space type)
-- Configures this search space as common search space (CSS) and DCI formats to
monitor.
common                               SEQUENCE {
(common search space)
}
ue-Specific                          SEQUENCE {
(UE-specific search space)
-- Indicates whether the UE monitors in this USS for DCI formats 0-0 and 1-0 or for
formats 0-1 and 1-1.
formats                              ENUMERATED {formats0-0-
And-1-0, formats0-1-And-1-1},
...
}
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs given below may be monitored in a UE-specific search space. Obviously, the example given below is not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH

Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given below.

[Table 10]

| DCI format | Usage |
|---|---|
| 0_0 | Scheduling of PUSCH in one cell |
| 0 1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 2 below

[Equation 2]

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $i = 0, \ldots, L-1$

- $Y_{p,n_{s,f}^{\mu}} = \left( A_p \cdot Y_{p,n_{s,f}^{\mu}-1} \right) mod\ D$ , $Y_{p,-1} = n_{RNTI} \neq 0$ , $A_p = 39827$ *for pmod*3 = 0 , $A_p = 39829$ *for pmod*3 = 1 , $A_p = 39839$ *for pmod*3 = 2, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[PDCCH: span]

The UE may perform UE capability reporting at each subcarrier spacing with regard to a case in which the same has multiple PDCCH monitoring occasions inside a slot, and the concept "span" may be used in this regard. A span refers to consecutive symbols configured such that the UE can monitor the PDCCH inside the slot, and each PDCCH monitoring occasion is inside one span. A span may be described by (X,Y) wherein X refers to the minimum number of symbols by which the first symbols of two consecutive spans are spaced apart from each other, and Y refers to the number of consecutive symbols configured such that the PDCCH can be monitored inside one span. The UE may monitor the PDCCH in a range inside a span corresponding to Y symbols from the first symbol of the span.

FIG. 5B illustrates, in terms of spans, a case in which a UE may have multiple PDCCH monitoring occasions inside a slot in a wireless communication system. Possible spans are (X,Y) = (7,3), (4,3), (2,2), and the three cases are indicated by (5100), (5105), and (5110) in FIG. 5B, respectively. As an example, (5100) describes a case in which there are two spans described by (7,4) inside a slot. The spacing between the first symbols of two spans is described as X=7, a PDCCH monitoring occasion may exist inside a total of Y=3 symbols from the first symbol of each span, and search spaces 1 and 2 exist inside Y=3 symbols, respectively. As another example, (5105) describes a case in which there are a total of three spans described by (4,3) inside a slot, and the second and third spans are spaced apart by X'=5 symbols which are larger than X=4.

[PDCCH: UE capability report]

The slot location at which the above-described common search space and the UE-specific search space are positioned is indicated by parameter "monitoringSymbolsWitninSlot" in Table 11-1, and the symbol location inside the slot is indicated as a bitmap through parameter "monitoringSymbolsWithinSlot" in Table 9. Meanwhile, the symbol location inside a slot at which the UE can monitor search spaces may be reported to the base station through the following UE capabilities.

UE capability 1 (hereinafter, used interchangeably with feature group (FG) 3-1): UE capability 1 has the following meaning: if there is one monitoring occasion (MO) regarding type 1 and type 3 common search spaces or UE-specific search spaces inside a slot, as in following Table 11-1, the UE can monitor the corresponding MO when the corresponding MO is located inside the first three symbols inside the slot. UE capability 1 is a mandatory capability which is to be supported by all UEs that support NR, and whether or not UE capability 1 is supported is not explicitly reported to the base station. Obviously, the example given above is not limiting.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

UE capability 2 (hereinafter, used interchangeably with FG 3-2): UE capability 2 has the following meaning: if there is one monitoring occasion (MO) regarding a common search space or a UE-specific search space inside a slot, as in following Table 11-2, the UE can monitor the corresponding MO no matter what of the start symbol location of the corresponding MO may be. UE capability 2 is optionally supported by the UE, and whether or not UE capability 2 is supported is explicitly reported to the base station. Obviously, the example given below is not limiting.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

UE capability 3 (hereinafter, used interchangeably with FG 3-5, 3-5a, or 3-5b): UE capability 3 has the following meaning: if there are multiple monitoring occasions (MO) regarding a common search space or a UE-specific search space inside a slot, as in following Table 11-3, the pattern of the MO which the UE can monitor is indicated. The above-mentioned pattern includes the spacing X between start symbols of different MOs, and the maximum symbol length Y regarding one MO. The combination of (X,Y) supported by the UE may be one or multiple among {(2,2), (4,3), (7,3)}. UE capability 3 is optionally supported by the UE, and whether or not UE capability 3 is supported and the above-mentioned combination of (X,Y) are explicitly reported to the base station. Obviously, the example given below is not limiting.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions*<br>{<br>3-5. *withoutDCI-Gap*<br>3-5a. *withDCI-Gap*<br>} |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCP<br>- 11OFDM symbols for 120kHz Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br>For the set of monitoring occasions which are within the same span:<br>• Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD<br>• Processing two unicast DCI scheduling DL and one unicast DCI scheduling UL per scheduled CC across this set of monitoring occasions for TDD<br>The number of different start symbol indices of spans for all PDCCH monitoring occasions per slot, including PDCCH monitoring occasions of FG-3-1, is no more than floor(14/X) (X is minimum among values reported by UE).<br>The number of different start symbol indices of PDCCH monitoring occasions per slot including PDCCH monitoring occasions of FG-3-1, is no more than 7. | |

(continued)

| Index | Feature group | Components | Field name in TS 38.331 [2] |
|---|---|---|---|
| | | The number of different start symbol indices of PDCCH monitoring occasions per half-slot including PDCCH monitoring occasions of FG-3-1 is no more than 4 in SCell. | |

The UE may report whether the above-described capability 2 and/or capability 3 are supported and relevant parameters to the base station. The base station may allocate time-domain resources to the common search space and the UE-specific search space, based on the UE capability report. During the resource allocation, the base station may ensure that the MO is not positioned not at a location at which the UE cannot monitor the same.

[PDCCH: BD/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^{\mu}$ of PDCCH candidates that the UE can monitor may follow Table 12-1 given below if the same is defined with reference to a slot in a cell configured to have a subcarrier spacing of $15\cdot2^{\mu}$ kHz, and may follow Table 12-2 given below if the same is defined with reference to a span.

[Table 12-1]

| $\mu$ | **Maximum number of PDCCH candidates per slot and per serving cell ($M^{\mu}$)** |
|---|---|
| 0 | 44 |
| 1 | 36 |
| 2 | 22 |
| 3 | 20 |

[Table 12-2]

| | **Maximum number $M^{\mu}$ of monitored PDCCH candidates per span for combination (X,Y) and per serving cell** | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^{\mu}$ of CCEs

constituting the entire search space (as used herein, the entire search space refers to the entire CCE set corresponding to a union domain of multiple search space sets) may follow Table 12-3 given below if the same is defined with reference to a slot in a cell configured to have a subcarrier spacing of $15 \cdot 2^{\mu}$ kHz, and may follow Table 12-4 given below if the same is defined with reference to a span.

[Table 12-3]

| $\mu$ | **Maximum number of non-overlapped CCEs per slot and per serving cell ($C^{\mu}$)** |
|---|---|
| 0 | 56 |
| 1 | 56 |
| 2 | 48 |
| 3 | 32 |

[Table 12-4]

| | **Maximum number $C^{\mu}$ of non-overlapped CCEs per span for combination (X,Y) and per serving cell** | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific timepoint will be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific timepoint. If condition A is not satisfied at a specific timepoint, the UE may select and monitor only some of search space sets configured to satisfy condition A at the corresponding timepoint, and the base station may transmit a PDCCH to the selected search space set.

A method for selecting some search spaces from all configured search space sets may follow methods given below.

If condition A regarding a PDCCH fails to be satisfied at a specific timepoint (slot), the UE (or the base station) may preferentially select a search space set having a search space type configured as a common search space, among search space sets existing at the corresponding timepoint, over a search space set configured as a UE-specific search space.

If all search space sets configured as common search spaces have been selected (that is, if condition A is satisfied even after all search spaces configured as common search spaces have been selected), the UE (or the bae station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[QCL, TCI state]

In a wireless communication system, one or more different antenna ports (which may be replaced with one or more channels, signals, and combinations thereof, but will be referred to as different antenna ports, as a whole, for convenience of description of the disclosure) may be associated with each other by a quasi-co-location (QCL) configuration as in Table 10 below. A TCI state is for publishing the QCL relation between a PDCCH (or a PDCCH DRMS) and another RS or channel, and the description that a reference antenna port A (reference RS #A) and another target antenna port B (target RS #B) are QCLed with each other may mean that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 13 below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 14 below. Referring to Table 14, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) that each TCI state includes the serving cell index and the BWP index of the reference RS indicated by the corresponding QCL information, the type and ID of the reference BS, and a QCL type as in Table 13 above. Obviously, the example given above is not limiting.

[Table 14]

```
TCI-State ::=                       SEQUENCE {
    tci-StateId                         TCI-StateId,
    (ID of corresponding TCI state)
    qcl-Type1                           QCL-Info,
    (QCL information of first refernece RS of RS (target RS) referring to corresponding TCI state ID)
    qcl-Type2                           QCL-Info                OPTIONAL,   -- Need R
    (QCL information of second refernece RS of RS (target RS) referring to corresponding TCI state ID)
    ...
}

QCL-Info ::=                        SEQUENCE {
    cell                                ServCellIndex           OPTIONAL,   -- Need R
    (serving cell index of reference RS indicated by corresponding QCL information)
    bwp-Id                                  BWP-Id                      OPTIONAL,   --
Cond CSI-RS-Indicated
    (BWP index of reference RS indicated by corresponding QCL information)
    referenceSignal                     CHOICE {
        csi-rs                                  NZP-CSI-RS-ResourceId,
        ssb                                     SSB-Index
        (one of CSI-RS ID or SSB ID indicated by corresponding QCL information)
    },
    qcl-Type                            ENUMERATED {typeA, typeB, typeC, typeD},
    ...
}
```

FIG. 7 illustrates an example of base station beam allocation according to TCI state configuration. Referring to FIG. 7, the base station may transfer information regarding N different beams to the UE through N different TCI states. For example, in the case of N=3 as in FIG. 7, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters (that is, different beams).

Tables 15-1 to 15-5 below enumerate valid TCI state configurations according to the target antenna port type.

Table 15-1 enumerates valid TCI state configurations when the target antenna port is a CSI-RS for tracking (TRS). The TRS refers to an NZP CSI-RS which has no repetition parameter configured therefor, and trs-Info of which is configured as "true", among CRI-RSs. In Table 15-1, configuration no. 3 may be used for an aperiodic TRS. Obviously, the example given below is not limiting.

[Table 15-1]

| Valid TCI state configurations when the target antenna port is a CSI-RS for tracking (TRS) | | | | |
|---|---|---|---|---|
| **Valid TCI state Configuration** | **DL RS 1** | **qcl-Type1** | **DL RS 2 (If configured)** | **qcl-Type2 (if configured)** |
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 enumerates valid TCI state configurations when the target antenna port is a CSI-RS for CSI. The CSI-RS for CSI may refer to an NZP CSI-RS which has no parameter indicating repetition (for example, repetition parameter) configured therefor, and trs-Info of which is not configured as "true", among CRI-RSs. Obviously, the example given below is not limiting.

[Table 15-2]

| TCI state configurations when the target antenna port is a CSI-RS for CSI | | | | |
|---|---|---|---|---|
| **Valid TCI state Configuration** | **DLRS 1** | **qcl-Type1** | **DLRS 2 (If configured)** | **qcl-Type2 (if configured)** |
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs. Obviously, the example given below is not limiting.

[Table 15-3]

| Valid TCI state configurations when the target antenna port is a CSI-RS for BM (for L1 RSRP reporting) | | | | |
|---|---|---|---|---|
| **Valid TCI state Configuration** | **DLRS 1** | **qcl-Typel** | **DLRS 2 (If configured)** | **qcl-Type2 (If configured)** |
| 1 | TRS | QCL-TypeA | TRS (same as DL RS 1) | QCL-TypeD |
| 2 | TRS | QCL-TypeA | CSI-RS (BM) | QCL-TypeD |

(continued)

| Valid TCI state configurations when the target antenna port is a CSI-RS for BM (for L1 RSRP reporting) | | | | |
|---|---|---|---|---|
| **Valid TCI state Configuration** | **DLRS 1** | **qcl-TypeI** | **DLRS 2 (If configured)** | **qcl-Type2 (If configured)** |
| 3 | SS/PBCH Block | QCL-TypeC | SS/PBCH Block | QCL-TypeD |

Table 15-4 enumerates valid TCI state configurations when the target antenna port is a PDCCH DMRS. Obviously, the example given below is not limiting.

[Table 15-4]

| Valid TCI state configurations when the target antenna port is a PDCCH DMRS | | | | |
|---|---|---|---|---|
| **Valid TCI state Configuration** | **DL RS 1** | **qcl-Type1** | **DL RS 2 (If configured)** | **qcl-Type2 (If configured)** |
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 enumerates valid TCI state configurations when the target antenna port is a PDSCH DMRS. Obviously, the example given below is not limiting.

[Table 15-5]

| Valid TCI state configurations when the target antenna port is a PDSCH DMRS | | | | |
|---|---|---|---|---|
| **Valid TCI state Configuration** | **DLRS 1** | **qcl-TypeI** | **DLRS 2 (If configured)** | **qcl-Type2 (If configured)** |
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 15-1 to 15-5 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it may be possible to help the UE's receiving operation by associating statistical characteristics that can be measured from the SSB and TRS with respective antenna ports.

[PDCCH: regarding TCI state]

Specific TCI state combinations applicable to a PDCCH DMRS antenna port are given in Table 16 below. The fourth row in Table 16 corresponds to a combination assumed by the UE before RRC configuration, and no configuration is possible after the RRC.

[Table 16]

| **Valid TCI state Configuration** | **DL RS 1** | **qcl-Type1** | **DL RS 2 (if configured)** | **qcl-Type2 (if configured)** |
|---|---|---|---|---|
| 1 | TRS | QCL-TypeA | TRS | QCL-TypeD |

(continued)

| Valid TCI state Configuration | DL RS 1 | qcl-Type1 | DL RS 2 (if configured) | qcl-Type2 (if configured) |
|---|---|---|---|---|
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

In NR, a hierarchical signaling method as illustrated in FIG. 8 is supported for dynamic allocation regarding a PDCCH beam. Referring to FIG. 8, the base station may configure N TCI states 805, 810, ..., 820 for the UE through RRC signaling 800, and may configure some thereof as TCI states for a CORESET (825). The base station may then indicate one of the TCI states 830, 835, and 340 for the CORESET to the UE through MAC CE signaling (845). The UE then receives a PDCCH, based on beam information included in the TCI state indicated by the MAC CE signaling.

FIG. 9 illustrates a TCI indication MAC CE signaling structure for a PDCCH DMRS. Referring to FIG. 9, the TCI indication MAC CE signaling for the PDCCH DMRS is configured by 2 bytes (16 bits), and includes a 5-bit serving cell ID 915, a 4-bit CORESET ID 920, and a 7-bit TCI state ID 925.

FIG. 10 illustrates an example of beam configuration with regard to a control resource set (CORESET) and a search space according to the above description. Referring to FIG. 10, the base station may indicate one of TCI state lists included in CORESET 1000 configuration through MAC CE signaling (1005). Until a different TCI state is indicated for the corresponding CORESET through different MAC CE signaling, the UE considers that identical QCL information (beam #1) 1005 is all applied to one or more search spaces 1010, 1015, and 1020 connected to the CORESET. The above-described PDCCH beam allocation method has a problem in that it is difficult to indicate a beam change faster than MAC CE signaling delay, and the same beam is unilaterally applied to each CORESET regardless of search space characteristics, thereby making flexible PDCCH beam operation difficult. In the following embodiments of the disclosure, more flexible PDCCH beam configuration and operation methods will be provided. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding control resource set, based on QCL information in the activated TCI state.

With regard to a control resource set having a configured index of 0 (control resource set #0), if the UE has failed to receive a MAC CE activation command regarding the TCI state of control resource set #0, the UE may assume that the DMRS transmitted in control resource set #0 has been QCL-ed with a SS/PBCH block identified in the initial access process, or in a non-contention-based random access process not triggered by a PDCCH command.

With regard to a control resource set having a configured index value other than 0 (control resource set #X), if the UE has no TCI state configured regarding control resource set #X, or if the UE has one or more TCI states configured therefor but has failed to receive a MAC CE activation command for activating one thereof, the UE may assume that the DMRS transmitted in control resource set #X has been QCL-ed with a SS/PBCH block identified in the initial access process.

[PDCCH: regarding QCL prioritization rule]

Hereinafter, operations for determining QCL priority regarding a PDCCH will be described in detail.

If multiple control resource sets which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific control resource set according to a QCL priority determining operation and may monitor control resource sets having the same QCL-TypeD characteristics as the corresponding control resource set. That is, if multiple control resource sets overlap temporally, only one QCL-TypeD characteristic can be received. The QCL priority may be determined by the following criteria.

Criterion 1: A control resource set connected to a common search space having the lowest index inside a cell corresponding to the lowest index among cells including a common search space
Criterion 2: A control resource set connected to a UE-specific search space having the lowest index inside a cell corresponding to the lowest index among cells including a UE-specific search space

As described above, if one criterion among the criteria is not satisfied, the next criterion is applied. For example, if control resource sets overlap temporally in a specific PDCCH monitoring occasion, and if all control resource sets are not connected to a common search space but connected to a UE-specific search space (that is, if criterion 1 is not satisfied), the UE may omit application of criterion 1 and apply criterion 2. Obviously, the example given above is not limiting.

If selecting control resource set according to the above-mentioned criteria, the UE may additionally consider the two aspects with regard to QCL information configured for the control resource set. Firstly, if control resource set 1 has CSI-RS 1 as a reference signal having a relation of QCL-TypeD, if this CSI-RS 1 has a relation of QCL-TypeD with reference signal SSB 1, and if another control resource set 2 has a relation of QCL-TypeD with reference signal SSB 1, the UE may consider that the two control resource sets 1 and 2 have different QCL-TypeD characteristics. Secondly, if control resource set 1 has CSI-RS 1 configured for cell 1 as a reference signal having a relation of QCL-TypeD, if this CSI-RS 1 has a relation of QCL-TypeD with reference signal SSB 1, if control resource set 2 has a relation of QCL-TypeD with reference signal CSI-RS 2 configured for cell 2, and if this CSI-RS 2 has a relation of QCL-TypeD with the same reference signal SSB 1, the UE may consider that the two control resource sets have the same QCL-TypeD characteristics.

FIG. 12 illustrates a method in which, upon receiving a downlink control channel, a UE selects a receivable control resource set in view of priority in a wireless communication system according to an embodiment of the disclosure. As an example, the UE may be configured to receive multiple control resource sets overlapping temporally in a specific PDCCH monitoring occasion 1210, and such multiple control resource sets may be connected to a common search space or a UE-specific search space with regard to multiple cells. In the corresponding PDCCH monitoring occasion, control resource set no. 1 1215 connected to common search space no. 1 may exist in bandwidth part no. 1 1200 of cell no. 1, and control resource set no. 1 1220 connected to common search space no. 1 and control resource set no. 2 1225 connected to UE-specific search space no. 2 may exist in bandwidth part no. 1 1205 of cell no. 2. The control resource sets 1215 and 1220 may have a relation of QCL-TypeD with CSI-RS resource no. 1 configured in bandwidth part no. 1 of cell no. 1, and the control resource set 1225 may have a relation of QCL-TypeD with CSI-RS resource no. 1 configured in bandwidth part no. 1 of cell no. 2. Therefore, if criterion 1 is applied to the corresponding PDCCH monitoring occasion 1210, all other control resource sets having the same reference signal of QCL-TypeD as control resource set no. 1 1215 may be received. Therefore, the UE may receive the control resource sets 1215 and 1220 in the corresponding PDCCH monitoring occasion 1210.

As another example, the UE may be configured to receive multiple control resource sets overlapping temporally in a specific PDCCH monitoring occasion 1240, and such multiple control resource sets may be connected to a common search space or a UE-specific search space with regard to multiple cells. In the corresponding PDCCH monitoring occasion, control resource set no. 1 1245 connected to UE-specific search space no. 1 and control resource set no. 2 1250 connected to UE-specific search space no. 2 may exist in bandwidth part no. 1 1230 of cell no. 1, and control resource set no. 1 1255 connected to UE-specific search space no. 1 and control resource set no. 2 1260 connected to UE-specific search space no. 3 may exist in bandwidth part no. 1 1235 of cell no. 2. The control resource sets 1245 and 1250 may have a relation of QCL-TypeD with CSI-RS resource no. 1 configured in bandwidth part no. 1 of cell no. 1, the control resource set 1255 may have a relation of QCL-TypeD with CSI-RS resource no. 1 configured in bandwidth part no. 1 of cell no. 2, and the control resource set 1260 may have a relation of QCL-TypeD with CSI-RS resource no. 2 configured in bandwidth part no. 1 of cell no. 2. If criterion 1 is applied to the corresponding PDCCH monitoring occasion 1240, there is no common search space, and the next criterion, that is, criterion 2, may thus be applied. If criterion 2 is applied to the corresponding PDCCH monitoring occasion 1240, all other control resource sets having the same reference signal of QCL-TypeD as control resource set no. 1 1245 may be received. Therefore, the UE may receive the control resource sets 1245 and 1250 in the corresponding PDCCH monitoring occasion 1240.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

The base station may transmit channel A after mapping the same only to remaining resource domains other than resource C (area overlapping resource B) among the entire resource A which is to be used to transmit symbol sequence A to the UE. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may send symbol sequence A after successively mapping the same to remaining resources {resource#1, resource#2, resource#4} other than {resource#3} (corresponding to resource C) among resource A. Consequently, the base station may transmit symbol sequence {symbol# 1, symbol#2, symbol#3} after mapping the same to {resource# 1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol# 1, symbol#2, symbol#3} has been transmitted after being mapped to {resource#1, resource#2, resource#4}, respectively. Obviously, the example given above is not limiting.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, assuming that symbol sequence A is configured as {symbol#1, symbol#2, symbol#3, symbol4}, resource A is {resource#1, resource#2, resource#3, resource#4}, and resource B is {resource#3, resource#5}, the base station may map symbol sequence {symbol#1, symbol#2, symbol#3, symbol#4} to resource A {resource#1, resource#2, resource#3, resource#4}, respectively, may transmit only symbol sequence {symbol# 1, symbol#2, symbol#4} corresponding to remaining resources {resource#!, resource#2, resource#4} other than {resource#3} (corresponding to resource C) among resource A, and may not transmit {symbol#3} mapped to {resource#3} (corresponding to resource C). Consequently, the base station may transmit symbol sequence {symbol# 1, symbol#2, symbol#4} after mapping the same to {resource# 1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to { resource#3 } (corresponding to resource C) is not transmitted, and based on the assumption that symbol sequence {symbol# 1, symbol#2, symbol#4} corresponding to remaining resources {resource# 1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol# 1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

FIG. 11 illustrates a method in which a base station and a UE transmit/receive data in view of a PDSCH and a rate matching resource.

FIG. 11 illustrates a PDSCH 1101 and a rate matching resource 1102. The base station may configure one or multiple rate matching resources 1102 for the UE through upper layer signaling (for example, RRC signaling). Rate matching resource 1102 configuration information may include time-domain resource allocation information 1103, frequency-domain resource allocation information 1104, and periodicity information 1105. A bitmap corresponding to the frequency-domain resource allocation information 1104 will hereinafter be referred to as "first bitmap", a bitmap corresponding to the time-domain resource allocation information 1103 will be referred to as "second bitmap", and a bitmap corresponding to the periodicity information 1105 will be referred to as "third bitmap". If all or some of time and frequency resources of the scheduled PDSCH 1101 overlap a configured rate matching resource 602, the base station may rate-match and transmit the PDSCH 1101 in a rate matching resource 1102 part, and the UE may perform reception and decoding after assuming that the PDSCH 1101 has been rate-matched in a rate matching resource 1102 part.

The base station may dynamically notify the UE, through DCI, of whether the PDSCH will be rate-matched in the configured rate matching resource part through an additional configuration (corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, "1" may mean that rate matching is to be conducted, and "0" may mean that rate matching is not to be conducted.

5G supports granularity of "RB symbol level" and "RE level" as a method for configuring the above-described rate matching resources for a UE. More specifically, the following configuration method may be followed.

RB symbol level

The UE may have a maximum of four RateMatchPatterns configured per each bandwidth part through upper layer signaling, and one RateMatchPattern may include the following contents. Obviously, the example given below is not limiting.

may include, in connection with a reserved resource inside a bandwidth part, a resource having time and frequency resource domains of the corresponding reserved resource configured as a combination of an RB-level bitmap and a symbol-level bitmap in the frequency domain. A time domain pattern (periodicityAndPattern) may be additionally configured wherein time and frequency domains including respective RB-level and symbol-level bitmap pairs are repeated.

may include a resource area corresponding to a time domain pattern configured by time and frequency domain resource areas configured by a control resource set inside a bandwidth part and a search space configuration in which corresponding resource areas are repeated.

RE level

The UE may have the following contents configured through upper layer signaling. Obviously, the example given below is not limiting.

configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

may include configuration information regarding a resource set corresponding to one or multiple zero power (ZP) CSI-RSs inside a bandwidth part.

[Regarding LTE CRS rate match]

For coexistence between long term evolution (LTE) and new RAT (NR) (LTE-NR coexistence), NR provides an NR UE with a function for configuring the pattern of cell-specific reference signal (CRS) of LTE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function such that one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP.

That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 17 shows a ServingCellConfig IE including the CRS patterns, and Table 18 shows a RateMatchPatternLTE-CRS IE including at least one parameter regarding CRS patterns.

[Table 17]

| ServingCellConfig ::= SEQUENCE { |
|---|

```
    tdd-UL-DL-ConfigurationDedicated                TDD-UL-DL-ConfigDedicated
OPTIONAL,   -- Cond TDD
    initialDownlinkBWP                              BWP-DownlinkDedicated
OPTIONAL,   -- Need M
    downlinkBWP-ToReleaseList                SEQUENCE (SIZE (1..maxNrofBWPs)) OF BWP-Id
OPTIONAL,   -- Need N
    downlinkBWP-ToAddModList                 SEQUENCE (SIZE (1..maxNrofBWPs)) OF BWP-
Downlink                OPTIONAL,   -- Need N
    firstActiveDownlinkBWP-Id                       BWP-Id
OPTIONAL,   -- Cond SyncAndCellAdd
    bwp-InactivityTimer              ENUMERATED {ms2, ms3, ms4, ms5, ms6, ms8, ms10, ms20,
ms30,
                                                ms40,ms50,  ms60,  ms80,ms100,
ms200,ms300, ms500,
                                                ms750, ms1280, ms1920, ms2560, spare10,
spare9, spare8,
                                                spare7, spare6, spare5, spare4, spare3, spare2,
spare1 }    OPTIONAL,   --Need R
    defaultDownlinkBWP-Id                           BWP-Id
OPTIONAL,   -- Need S
    uplinkConfig                                    UplinkConfig
OPTIONAL,   -- Need M
    supplementaryUplink                             UplinkConfig
OPTIONAL,   -- Need M
    pdcch-ServingCellConfig                  SetupRelease { PDCCH-ServingCellConfig }
OPTIONAL,   -- Need M
    pdsch-ServingCellConfig                  SetupRelease { PDSCH-ServingCellConfig }
OPTIONAL,   -- Need M
    csi-MeasConfig                           SetupRelease { CSI-MeasConfig }
OPTIONAL,   -- Need M
    sCellDeactivationTimer           ENUMERATED {ms20, ms40, ms80, ms160, ms200, ms240,
                                                ms320, ms400, ms480, ms520, ms640,
ms720,
                                                ms840,  ms1280,  spare2,spare1}
OPTIONAL,   -- Cond ServingCellWithoutPUCCH
    crossCarrierSchedulingConfig                    CrossCarrierSchedulingConfig
OPTIONAL,   -- Need M
    tag-Id                           TAG-Id,
    dummy                                           ENUMERATED {enabled}
OPTIONAL,   -- Need R
    pathlossReferenceLinking                        ENUMERATED {spCell, sCell}
OPTIONAL,   -- Cond SCellOnly
    servingCellMO                                   MeasObjectId
OPTIONAL,   -- Cond MeasObject
    ...,
    [[
    lte-CRS-ToMatchAround                    SetupRelease { RateMatchPatternLTE-CRS }
OPTIONAL,   -- Need M
    rateMatchPatternToAddModList     SEQUENCE (SIZE (1..maxNrofRateMatchPatterns)) OF
RateMatchPattern        OPTIONAL,   -- Need N
    rateMatchPatternToReleaseList    SEQUENCE (SIZE (1..maxNrofRateMatchPatterns)) OF
RateMatchPatternId      OPTIONAL,   -- Need N
    downlinkChannelBW-PerSCS-List    SEQUENCE (SIZE (1..maxSCSs)) OF SCS-SpecificCarrier
OPTIONAL    -- Need S
    ]],
    [[
    supplementaryUplinkRelease                      ENUMERATED {true}
OPTIONAL,   -- Need N
    tdd-UL-DL-ConfigurationDedicated-IAB-MT-r16     TDD-UL-DL-ConfigDedicated-IAB-MT-r16
OPTIONAL,   -- Cond TDD_IAB
    dormantBWP-Config-r16                    SetupRelease { DormantBWP-Config-r16 }
OPTIONAL,   -- Need M
```

```
    ca-SlotOffset-r16                    CHOICE {
        refSCS15kHz                          INTEGER (-2..2),
        refSCS30KHz                          INTEGER (-5..5),
        refSCS60KHz                          INTEGER (-10..10),
        refSCS120KHz                         INTEGER (-20..20)
    }
OPTIONAL,    -- Cond AsyncCA
    channelAccessConfig-r16                      SetupRelease { ChannelAccessConfig-r16 }
OPTIONAL,    -- Need M
    intraCellGuardBandsDL-List-r16               SEQUENCE (SIZE (1..maxSCSs)) OF
IntraCellGuardBandsPerSCS-r16          OPTIONAL,    -- Need S
    intraCellGuardBandsUL-List-r16               SEQUENCE (SIZE (1..maxSCSs)) OF
IntraCellGuardBandsPerSCS-r16          OPTIONAL,    -- Need S
    csi-RS-ValidationWith-DCI-r16                        ENUMERATED {enabled}
OPTIONAL,    -- Need R
    lte-CRS-PatternList1-r16                     SetupRelease { LTE-CRS-PatternList-r16 }
OPTIONAL,    -- Need M
    lte-CRS-PatternList2-r16                     SetupRelease { LTE-CRS-PatternList-r16 }
OPTIONAL,    -- Need M
    crs-RateMatch-PerCORESETPoolIndex-r16                ENUMERATED {enabled}
OPTIONAL,    -- Need R
    enableTwoDefaultTCI-States-r16                       ENUMERATED {enabled}
OPTIONAL,    -- Need R
    enableDefaultTCI-StatePerCoresetPoolIndex-r16        ENUMERATED {enabled}
OPTIONAL,    -- Need R
    enableBeamSwitchTiming-r16                           ENUMERATED {true}
OPTIONAL,    -- Need R
    cbg-TxDiffTBsProcessingType1-r16                     ENUMERATED {enabled}
OPTIONAL,    -- Need R
    cbg-TxDiffTBsProcessingType2-r16                     ENUMERATED {enabled}
OPTIONAL     -- Need R
    ]]
}
```

[Table 18]

– *RateMatchPatternLTE-CRS*

The IE *RateMatchPatternLTE-CRS* is used to configure a pattern to rate match around LTE CRS. See TS 38.214 [19], clause 5.1.4.2.

***RateMatchPatternLTE-CRS* information element**

```
-- ASN1START
-- TAG-RATEMATCHPATTERNLTE-CRS-START

RateMatchPatternLTE-CRS ::=            SEQUENCE {
    carrierFreqDL                          INTEGER (0..16383),
    carrierBandwidthDL                     ENUMERATED {n6, n15, n25, n50, n75, n100, spare2,
spare1},
    mbsfn-SubframeConfigList                              EUTRA-MBSFN-SubframeConfigList
OPTIONAL,    -- Need M
    nrofCRS-Ports                          ENUMERATED {n1, n2, n4},
    v-Shift                                ENUMERATED {n0, n1, n2, n3, n4, n5}
}

LTE-CRS-PatternList-r16  ::=             SEQUENCE  (SIZE  (1..maxLTE-CRS-Patterns-r16))  OF
RateMatchPatternLTE-CRS

-- TAG-RATEMATCHPATTERNLTE-CRS-STOP
-- ASN1STOP
```

| ***RateMatchPatternLTE-CRS* field descriptions** |
|---|
| ***carrierBandwidthDL***<br>BW of the LTE carrier in number of PRBs (see TS 38.214 [19], clause 5.1.4.2). |
| ***carrierFreqDL***<br>Center of the LTE carrier (see TS 38.214 [19], clause 5.1.4.2). |
| ***mbsfn-SubframeConfigList***<br>LTE MBSFN subframe configuration (see TS 38.214 [19], clause 5.1.4.2). |
| ***nrofCRS-Ports***<br>Number of LTE CRS antenna port to rate-match around (see TS 38.214 [19], clause 5.1.4.2). |
| ***v-Shift***<br>Shifting value v-shift in LTE to rate match around LTE CRS (see TS 38.214 [19], clause 5.1.4.2). |

[PDSCH: regarding frequency resource allocation]

FIG. 13 illustrates an example of frequency domain resource allocation with regard to a PDSCH in a wireless communication system according to an embodiment of the disclosure.

FIG. 13 illustrates three frequency domain resource allocation methods of type 0 1300, type 1 1305, and dynamic switch 1310 which can be configured through an upper layer in an NR wireless communication system.

Referring to FIG. 13, in the case 1300 in which a UE is configured to use only resource type 0 through upper layer signaling, partial downlink control information (DCI) for allocating a PDSCH to the UE include a bitmap including $N_{RBG}$ bits. The conditions for this will be described later. As used herein, $N_{RBG}$ refers to the number of resource block groups (RBGs) determined according to the BWP size allocated by a BWP indicator and upper layer parameter rbg-Size, as in Table 19 below, and data is transmitted in RBGs indicated as "1" by the bitmap.

[Table 19]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |

(continued)

| Bandwidth Part Size | Configuration 1 | Configuration 2 |
|---|---|---|
| 145 - 275 | 16 | 16 |

In the case 1305 in which the UE is configured to use only resource type 1 through upper layer signaling, partial DCI includes frequency domain resource allocation information including $\lceil log_2(N_{RB}^{DL,BWP}(N_{RB}^{DL,BWP}+1)/2\rceil$ bits. The conditions for this will be described later. The base station may thereby configure a starting VRB 1320 and the length 1325 of a frequency domain resource allocated continuously therefrom.

In the case 1310 in which the UE is configured to use both resource type 0 and resource type 1 through upper layer signaling, partial DCI for allocating a PDSCH to the corresponding UE may include frequency domain resource allocation information including as many bits as the larger value 1335 between the payload 1315 for configuring resource type 0 and the payload 1320 and 1325 for configuring resource type 1. The conditions for this will be described later. One bit may be added to the foremost part (MSB) of the frequency domain resource allocation information inside the DCI, and if the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure table regarding time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (corresponding to a slot-unit time interval between a timepoint at which a PDCCH is received and a timepoint at which a PDSCH scheduled by the received PDCCH is transmitted; labeled K0), PDCCH-to-PUSCH slot timing (corresponding to a slot-unit time interval between a timepoint at which a PDCCH is received and a timepoint at which a PUSCH scheduled by the received PDCCH is transmitted; labeled K2), information regarding the location and length of the start symbol by which a PDSCH or PUSCH is scheduled inside a slot, the mapping type of a PDSCH or PUSCH, and the like. For example, information such as in Table 20 or Table 21 below may be transmitted from the base station to the UE. Obviously, the example given above is not limiting.

[Table 20]

***PDSCH-TimeDomainResourceAllocationList information element***

```
PDSCH-TimeDomainResourceAllocationList ::=   SEQUENCE (SIZE(1..maxNrofDL-Allocations)) OF
PDSCH-TimeDomainResourceAllocation

PDSCH-TimeDomainResourceAllocation ::=    SEQUENCE {
        k0                                                    INTEGER(0..32)
    OPTIONAL,    -- Need S
        (PDCCH-to-PDSCH timing, slot unit)
    mappingType                               ENUMERATED {typeA, typeB},
        (PDSCH mapping type)
    startSymbolAndLength                  INTEGER (0..127)
    (start symbol and length of PDSCH)
}
```

[Table 21]

| PUSCH-TimeDomainResourceAllocationList information element |
|---|
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE {<br>k2 INTEGER(0..32) OPTIONAL, -- Need S<br>(PDCCH-to-PUSCH timing, slot unit)<br>mappingType ENUMERATED {typeA, typeB},<br>(PUSCH mapping type)<br>startSymbolAndLength INTEGER (0..127)<br>(start symbol and length of PUSCH) |
| } |

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

FIG. 14 illustrates an example of time domain resource allocation with regard to a PDSCH in a wireless communication system according to an embodiment of the disclosure.

Referring to FIG. 14, the base station may indicate the time domain location of a PDSCH resource according to the subcarrier spacing (SCS)($\mu_{PDSCH}$, $\mu_{PDCCH}$) of a data channel and a control channel configured by using an upper layer, the scheduling offset (K0) value, and the OFDM symbol start location 1400 and length 1405 within one slot dynamically indicated through DCI.

FIG. 15 illustrates an example of time domain resource allocation according to a subcarrier spacing with regard to a data channel and a control channel in a wireless communication system according to an embodiment of the disclosure.

Referring to FIG. 15, if the data channel and the control channel have the same subcarrier spacing 1500 ($\mu_{PDSCH} = \mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings 1505 ($_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PDSCH: processing time]

Next, a PDSCH processing time (PDSCH processing procedure time) will be described. When the base station schedules the UE to transmit a PDSCH by using DCI format 1_0, 1_1 or 1_2, the UE may need a PDSCH processing time for receiving a PDSCH by applying a transmission method (modulation/demodulation and coding indication index (MCS), demodulation reference signal-related information, time and frequency resource allocation information, and the like) indicated through DCI. The PDSCH processing time has been defined in NR in consideration thereof. The PDSCH processing time of the UE may follow [Equation 3] given below.

[Equation 3]

$$T_{proc,1} = (N_1 + d_{1,1} + d_2)(2048 + 144)\,\kappa 2^{-\mu}\,T_c + T_{ext}$$

Each parameter in $T_{proc}$,1 described above in Equation 3 may have the following meaning.

$N_1$: the number of symbols determined according to UE processing capability 1 or 2 based on the UE's capability and numerology $\mu$. $N_1$ may have a value in [Table 22] if UE processing capability 1 is reported according to the UE's capability report, and may have a value in [Table 23] if UE processing capability 2 is reported, and if availability of UE processing capability 2 is configured through upper layer signaling. The numerology $\mu$ may correspond to the minimum value among $\mu_{PDCCH}$, $\mu_{PDSCH}$, $\mu_{UL}$ so as to maximize $T_{proc,1}$, and $\mu_{PDCCH}$, $\mu_{PDSCH}$, $\mu_{UL}$ may refer to the numerology of a PDCCH that scheduled a PDSCH, the numerology of the scheduled PDSCH, and numerology of an uplink channel in which a HARQ-ACK is to be transmitted.

[Table 22]

| PDSCH processing time in the case of PDSCH processing capability 1 | | |
|---|---|---|
| $\mu$ | PDSCH decoding time $N_1$ [symbols] | |
| | If PDSCH mapping type A and B both correspond to dmrs-AdditionalPosition = pos0 inside DMRS-DownlinkConfig which is upper layer signaling | If PDSCH mapping type A and B both do not correspond to dmrs-AdditionalPosition = pos0 inside DMRS-DownlinkConfig which is upper layer signaling, or if no upper layer parameter is configured |
| 0 | 8 | $N_{1,0}$ |
| 1 | 10 | 13 |
| 2 | 17 | 20 |
| 3 | 20 | 24 |

[Table 23]

| PDSCH processing time in the case of PDSCH processing capability 2 | |
|---|---|
| $\mu$ | PDSCH decoding time $N_1$ [symbols] |
| | If PDSCH mapping type A and B both correspond to dmrs-AdditionalPosition = pos0 inside DMRS-DownlinkConfig which is upper layer signaling |
| 0 | 3 |
| 1 | 4.5 |
| 2 | 9 for frequency range 1 |
| k: 64<br>$T_{ext}$: if the UE uses a shared spectrum channel access scheme, the UE may calculate $T_{ext}$ and apply the same to the PDSCH processing time. Otherwise, $T_{ext}$ is assumed to be 0. | |

If $l_1$ which represents the PDSCH DMRS location value is 12, $N_{1,0}$ in [table 22] above has the value of 14, and otherwise has the value of 13.

With regard to PDSCH mapping type A, if the last symbol of the PDSCH is the $i^{th}$ symbol in the slot in which the PDSCH is transmitted, and if i<7, $d_{1,1}$ is then 7-i, and $d_{1,1}$ is otherwise 0.

$d_2$: if a PUCCH having a high priority index temporally overlaps another PUCCH or a PUSCH having a low priority index, $d_2$ of the PUCCH having a high priority index may be configured as a value reported from the UE. Otherwise, $d_2$ is 0.

If PDSCH mapping type B is used with regard to UE processing capability 1, the $d_{1,1}$ value may be determined by the number (L) of symbols of a scheduled PDSCH and the number of overlapping symbols between the PDCCH that schedules the PDSCH and the scheduled PDSCH, as follows.

If $L \geq 7$, then $d_{1,1} = 0$.

If - $L \geq 4$ and $L \leq 6$, then $d_{1,1} = 7 - L$.

If L = 3, then $d_{1,1}$ = min (d, 1).

If L=2, then $d_{1,1} = 3 + d$.

If PDSCH mapping type B is used with regard to UE processing capability 2, the $d_{1,1}$ value may be determined by the number (L) of symbols of a scheduled PDSCH and the number of overlapping symbols between the PDCCH that schedules the PDSCH and the scheduled PDSCH, as follows.

If $L \geq 7$, then $d_{1,1} = 0$.

If - $L \geq 4$ and $L \leq 6$, then $d_{1,1} = 7 - L$.

If L=2,

If the scheduling PDCCH exists inside a CORESET including three symbols, and if the CORESET and the scheduled PDSCH have the same start symbol, then $d_{1,1} = 3$.

Otherwise, $d_{1,1} = d$.

In the case of a UE supporting capability 2 inside a given serving cell, the PDSCH processing time based on UE processing capability 2 may be applied by the UE if processingType2Enabled (upper layer signaling) is configured as "enable" with regard to the corresponding cell.

If the location of the first uplink transmission symbol of a PUCCH including HARQ-ACK information (in connection with the corresponding location, $K_1$ defined as the HARQ-ACK transmission timepoint, a PUCCH resource used to transmit the HARQ-ACK, and the timing advance effect may be considered) does not start earlier than the first uplink transmission symbol that comes after the last symbol of the PDSCH over a time of $T_{proc,1}$, the UE needs to transmit a valid HARQ-ACK message. That is, the UE needs to transmit a PUCCH including a HARQ-ACK only if the PDSCH processing time is sufficient. Otherwise, the UE cannot provide the base station with valid HARQ-ACK information corresponding to the scheduled PDSCH. The $T_{proc,1}$ may be used in the case of either a normal or an expanded CP. In the case of a PDSCH having two PDSCH transmission locations configured inside one slot, $d_{1,1}$ is calculated with reference to the first PDSCH transmission location inside the corresponding slot.

[PDSCH: reception preparation time during cross-carrier scheduling]

Next, in the case of cross-carrier scheduling in which the numerology ($\mu_{PDCCH}$) by which a scheduling PDCCH is transmitted and the numerology ($\mu_{PDSCH}$) by which a PDSCH scheduled by the corresponding PDCCH is transmitted are different from each other, the PDSCH reception reparation time ($N_{pdsch}$) of the UE defined with regard to the time interval between the PDCCH and PDSCH will be described.

If $\mu_{PDCCH} < \mu_{PDSCH}$, the scheduled PDSCH cannot be transmitted before the first symbol of the slot coming after $N_{pdsch}$ symbols from the last symbol of the PDCCH that scheduled the corresponding PDSCH. The transmission symbol of the corresponding PDSCH may include a DM-RS.

If $\mu_{PDCCH} > \mu_{PDSCH}$, the scheduled PDSCH may be transmitted after $N_{pdsch}$ symbols from the last symbol of the PDCCH that scheduled the corresponding PDSCH. The transmission symbol of the corresponding PDSCH may include a DM-RS.

[Table 24]

| Npdsch $N_{pdsch}$ based on scheduled PDCCH subcarrier spacing | |
|---|---|
| $\mu_{PDCCH}$ | $N_{pdsch}$ [symbols] |
| 0 | 4 |
| 1 | 5 |
| 2 | 10 |
| 3 | 14 |

[PDSCH: TCI state activation MAC-CE]

Next, a beam configuration method regarding a PDSCH will be described. FIG. 16 illustrates a process for beam configuration and activation with regard to a PDSCH. A list of TCI states regarding a PDSCH may be indicated through an upper layer list such as RRC (16-00). The list of TCI states may be indicated by tci-StatesToAddModList and/or tci-StatesToReleaseList inside a BWP-specific PDSCH-Config IE, for example. Next, a part of the list of TCI states may be activated through a MAC-CE (16-20). The maximum number of activated TCI states may be determined by the capability reported by the UE. Reference numeral 16-50 illustrates an example of MAC-CE structure for PDSCH TCI state activation/deactivation.

The meaning of respective fields inside the MAC CE and values configurable for respective fields are as follows.

- **Serving Cell ID:** This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

(continued)

| |
|---|
| - **BWP ID:** This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;<br>- $T_i$ (TCI state ID): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;<br>- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE. |

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

srs-ResourceSetId: SRS resource set index

srs-ResourceIdList: a set of SRS resource indices referred to by SRS resource sets

resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.

usage: a configuration regarding the place of use of SRS resources referred to by SRS resource sets, and may be configured as one of "beamManagement", "codebook", "nonCodebook",and "antennaSwitching".

alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". This may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission by the UE through upper layer signaling including RRC signaling or MAC CE signaling, or L1 signaling (for example, DCI). For example, the base station may activate or deactivate periodic SRS transmission by the UE through upper layer signaling. The base station may indicate activation of an SRS resource set having resource Type configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission by the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource.

In addition, the spatial domain transmission filter applied to the transmitted SRS resource may refer to spatial relation info configured for the SRS resource, or may refer to associated CSI-RS configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

For example, the base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set.

Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS configured for the SRS resource set including the SRS resource. The UE may transmit the SRS resource inside the uplink BWP activated with regard to the aperiodic SRS resource triggered through DCI.

When the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in view of UE processing capability that follows the UE's capability with reference to the UE's PUSCH preparation procedure time. In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 25]

```
SRS-Resource ::=                          SEQUENCE {
    srs-ResourceId                            SRS-ResourceId,
    nrofSRS-Ports                             ENUMERATED {port1, ports2, ports4},
    ptrs-PortIndex                            ENUMERATED {n0, n1 }
 OPTIONAL,     -- Need R
    transmissionComb                          CHOICE {
        n2                                        SEQUENCE {
            combOffset-n2                             INTEGER (0..1),
            cyclicShift-n2                            INTEGER (0..7)
        },
        n4                                        SEQUENCE {
            combOffset-n4                             INTEGER (0..3),
            cyclicShift-n4                            INTEGER (0..11)
        }
    },
    resourceMapping                           SEQUENCE {
        startPosition                             INTEGER (0..5),
        nrofSymbols                               ENUMERATED {n1, n2, n4},
        repetitionFactor                          ENUMERATED {n1, n2, n4}
    },
    freqDomainPosition                        INTEGER (0..67),
    freqDomainShift                           INTEGER (0..268),
    freqHopping                               SEQUENCE {
        c-SRS                                     INTEGER (0..63),
        b-SRS                                     INTEGER (0..3),
        b-hop                                     INTEGER (0..3)
    },
    groupOrSequenceHopping                    ENUMERATED { neither, groupHopping,
sequenceHopping },
    resourceType                              CHOICE {
        aperiodic                                 SEQUENCE {
            ...
        },
        semi-persistent                           SEQUENCE {
            periodicityAndOffset-sp                   SRS-PeriodicityAndOffset,
            ...
        },
        periodic                                  SEQUENCE {
            periodicityAndOffset-p                    SRS-PeriodicityAndOffset,
            ...
        }
    },
    sequenceId                                INTEGER (0..1023),
```

```
    spatialRelationInfo                       SRS-SpatialRelationInfo
 OPTIONAL,     -- Need R
        ...
}
```

Configuration information spatialRelationInfo in Table 25 above is applied, with reference to one reference signal, to a beam used for SRS transmission corresponding to beam information of the corresponding reference signal. For example, configuration of spatialRelationInfo may include information as in Table 30 below. Obviously, the example given below is not limiting.

[Table 26]

```
SRS-SpatialRelationInfo ::=        SEQUENCE {
    servingCellId                       ServCellIndex                 OPTIONAL,    -- Need S
    referenceSignal                     CHOICE {
        ssb-Index                           SSB-Index,
        csi-RS-Index                        NZP-CSI-RS-ResourceId,
        srs                                 SEQUENCE {
            resourceId                          SRS-ResourceId,
            uplinkBWP                           BWP-Id
        }
    }
}
```

Referring to the spatialRelationInfo configuration, an SS/PBCH block index, CSI-RS index, or SRS index may be configured as the index of a reference signal to be referred to in order to use beam information of a specific reference signal. Upper signaling reference Signal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "'csi-RS-Index", the UE may apply the reception beam which was used to receive the CSI-RS corresponding to csi-RS-Index as the transmission beam for the corresponding SRS transmission. If upper signaling referenceSignal has a configured value of "'srs", the UE may apply the reception beam which was used to transmit the SRS corresponding to srs as the transmission beam for the corresponding SRS transmission.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 27 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 27 through upper signaling. If PUSCH transmission is operated by a configured grant, parameters applied to the PUSCH transmission are applied through configuredGrantConfig (upper signaling) in Table 27 except for dataScramblingIdentityPUSCH, txConfig, codebookSubset, maxRank, and scaling of UCI-OnPUSCH, which are provided by pusch-Config (upper signaling) in Table 28. If provided with transformPrecoder inside configuredGrantConfig (upper signaling) in Table 27, the UE applies tp-pi2BPSK inside pusch-Config in Table 28 to PUSCH transmission operated by a configured grant. Obviously, the example given above is not limiting.

[Table 27]

```
ConfiguredGrantConfig ::=                SEQUENCE {
    frequencyHopping                         ENUMERATED {intraSlot, interSlot}
OPTIONAL,    -- Need S,
    cg-DMRS-Configuration                    DMRS-UplinkConfig,
    mcs-Table                                ENUMERATED {qam256, qam64LowSE}
OPTIONAL,    -- Need S
    mcs-TableTransformPrecoder               ENUMERATED {qam256, qam64LowSE}
OPTIONAL,    -- Need S
    uci-OnPUSCH                              SetupRelease { CG-UCI-OnPUSCH }
OPTIONAL,    -- Need M
    resourceAllocation                       ENUMERATED { resourceAllocationType0,
resourceAllocationType1, dynamicSwitch },
    rbg-Size                                 ENUMERATED {config2}
OPTIONAL,    -- Need S
```

```
    powerControlLoopToUse                    ENUMERATED {n0, n1},
    p0-PUSCH-Alpha                           P0-PUSCH-AlphaSetId,
    transformPrecoder                        ENUMERATED {enabled, disabled}
OPTIONAL,    -- Need S
    nrofHARQ-Processes                       INTEGER(1..16),
    repK                                     ENUMERATED {n1, n2, n4, n8},
    repK-RV                                  ENUMERATED {s1-0231, s2-0303, s3-
0000}                                        OPTIONAL,    -- Need R
    periodicity                              ENUMERATED {
                                                  sym2, sym7, sym1x14, sym2x14,
sym4x14, sym5x14, sym8x14, sym10x14, sym16x14, sym20x14,
                                                  sym32x14, sym40x14, sym64x14,
sym80x14, sym128x14, sym160x14, sym256x14, sym320x14, sym512x14,
                                                  sym640x14, sym1024x14,
sym1280x14, sym2560x14, sym5120x14,
                                                  sym6, sym1x12, sym2x12,
sym4x12, sym5x12, sym8x12, sym10x12, sym16x12, sym20x12, sym32x12,
                                                  sym40x12, sym64x12, sym80x12,
sym128x12, sym160x12, sym256x12, sym320x12, sym512x12, sym640x12,
                                                  sym1280x12, sym2560x12
    },
    configuredGrantTimer                     INTEGER (1..64)
OPTIONAL,    -- Need R
    rrc-ConfiguredUplinkGrant                SEQUENCE {
        timeDomainOffset                         INTEGER (0..5119),
        timeDomainAllocation                     INTEGER   (0..15),
        frequencyDomainAllocation                BIT STRING (SIZE(18)),
        antennaPort                              INTEGER (0..31),
        dmrs-SeqInitialization                   INTEGER (0..1)
OPTIONAL,    -- Need R
        precodingAndNumberOfLayers               INTEGER (0..63),
```

```
            srs-ResourceIndicator                              INTEGER (0..15)
OPTIONAL,     -- Need R
            mcsAndTBS                                              INTEGER (0..31),
            frequencyHoppingOffset                           INTEGER (1..
maxNrofPhysicalResourceBlocks-1)                         OPTIONAL,     -- Need R
            pathlossReferenceIndex                           INTEGER (0..maxNrofPUSCH-
PathlossReferenceRSs-1),
            ...
      }
OPTIONAL,     -- Need R
      ...
}
```

Next, a PUSCH transmission method will be described. The DMRS antenna port for PUSCH transmission is identical to an antenna port for SRS transmission. PUSCH transmission may follow a codebook-based transmission method and a non- codebook-based transmission method according to whether the value of txConfig inside pusch-Config (upper signaling) in Table 28 is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE perform beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE may not expect scheduling regarding PUSCH transmission through DCI format 0_0 inside a BWP having no configured PUCCH resource including pucch-spatialRelationInfo. If the UE has no configured txConfig inside pusch-Config in Table 28, the UE does not expect scheduling through DCI format 0_1.

[Table 28]

```
PUSCH-Config ::=                                SEQUENCE {
```

```
    dataScramblingIdentityPUSCH                 INTEGER (0..1023)
OPTIONAL,    -- Need S
    txConfig                                    ENUMERATED {codebook,
nonCodebook}                                    OPTIONAL,    -- Need S
    dmrs-UplinkForPUSCH-MappingTypeA            SetupRelease { DMRS-
UplinkConfig }                                  OPTIONAL,    -- Need M
    dmrs-UplinkForPUSCH-MappingTypeB            SetupRelease { DMRS-
UplinkConfig }                                  OPTIONAL,    -- Need M

    pusch-PowerControl                          PUSCH-PowerControl
OPTIONAL,    -- Need M
    frequencyHopping                            ENUMERATED {intraSlot,
interSlot}                                      OPTIONAL,    -- Need S
    frequencyHoppingOffsetLists                 SEQUENCE (SIZE (1..4)) OF
INTEGER (1.. maxNrofPhysicalResourceBlocks-1)

OPTIONAL,    -- Need M
    resourceAllocation                          ENUMERATED
{ resourceAllocationType0, resourceAllocationType1, dynamicSwitch},
    pusch-TimeDomainAllocationList              SetupRelease { PUSCH-
TimeDomainResourceAllocationList }              OPTIONAL,    -- Need M
    pusch-AggregationFactor                     ENUMERATED { n2, n4, n8 }
OPTIONAL,    -- Need S
    mcs-Table                                   ENUMERATED {qam256,
qam64LowSE}                                     OPTIONAL,    -- Need S
    mcs-TableTransformPrecoder                  ENUMERATED {qam256,
qam64LowSE}                                     OPTIONAL,    -- Need S
    transformPrecoder                           ENUMERATED {enabled, disabled}
OPTIONAL,    -- Need S
    codebookSubset                              ENUMERATED
{fullyAndPartialAndNonCoherent, partialAndNonCoherent,nonCoherent}
```

```
OPTIONAL, -- Cond codebookBased
    maxRank                                         INTEGER (1..4)
OPTIONAL, -- Cond codebookBased
    rbg-Size                                        ENUMERATED { config2}
OPTIONAL, -- Need S
    uci-OnPUSCH                                     SetupRelease { UCI-OnPUSCH}
OPTIONAL, -- Need M
    tp-pi2BPSK                                      ENUMERATED {enabled}
OPTIONAL, -- Need S
    ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determine a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with an SRI through DCI, the SRS resource indicated by the SRI refers to the SRS resource corresponding to the SRI among SRS resources transmitted prior to the PDCCH including the SRI. In addition, the TPMI and the transmission rank may be given through "precoding information and number of layers" (a field inside DCI) or configured through precodingAndNumberOfLayers (upper signaling). The TPMI may be used to indicate a precoder applied to PUSCH transmission. If one SRS resource is configured for the UE, the TPMI may be used to indicate a precoder to be applied in the configured SRS resource. If one SRS resource is configured for the UE, the TPMI may be used to indicate a precoder to be applied in the configured SRS resource.

The precoder to be used for PUSCH transmission may be selected from an uplink codebook having the same number of antenna ports as the value of nrofSRS-Ports inside SRS-Config (upper signaling). In connection with codebook-based PUSCH transmission, the UE may determine a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE may not expect that the value of codebookSubset (upper signaling) will be configured as "fullyAndPartialAndNonCoherent". In addition, if the UE reported "noncoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, UE may not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the SRS resource set. If multiple SRS resources are configured inside the SRS resource set wherein the value of usage inside SRS-ResourceSet (upper signaling) is "codebook", the UE may expect that the value of nrofSRS-Ports inside SRS-Resource (upper signaling) is identical with regard to all SRS resources.

The UE may transmit, to the base station, one or multiple SRS resources included in the SRS resource set wherein the value of usage is configured as "codebook" according to upper signaling, and the base station may select one from the SRS resources transmitted by the UE and indicate the UE to be able to transmit a PUSCH by using transmission beam information of the corresponding SRS resource. In connection with the codebook-based PUSCH transmission, the SRI may be used as information for selecting the index of one SRS resource, and may be included in DCI. Additionally, the base station may add information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non- codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE may not expect that information regarding the precoder for SRS transmission will be updated.

If the configured value of resource Type inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS may be positioned in the slot used to transmit the PDCCH including the SRS request field. In this case, TCI states configured for the scheduled subcarrier may not be configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE may not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI may refer to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources may be determined by UE capability reported to the base station by the UE. SRS resources simultaneously transmitted by the UE may occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE may apply the calculated precoder when transmitting, to the base station, one or multiple SRS resources inside the SRS resource set wherein the configured usage is "nonCodebook", and the base station may select one or multiple SRS resources from the received one or multiple SRS resources. In connection with the non-codebook-based PUSCH transmission, the SRI may indicate an index that may express one SRS resource or a combination of multiple SRS resources, and the SRI may be included in DCI. The number of SRS resources indicated by the SRI transmitted by the base station may be the number of transmission layers of the PUSCH, and the UE may transmit the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation

4 given below.

[Equation 4]

$$T_{proc,2} = \max((N_2 + d_{2,1} + d_2)(2048 + 144)\kappa 2^{-\mu} T_c + T_{ext} + T_{switch}, d_{2,2})$$

Each parameter in $T_{proc,2}$ described above in Equation 4 may have the following meaning.

$N_2$: the number of symbols determined according to UE processing capability 1 or 2, based on the UE's capability, and numerology $\mu$. $N_2$ may have a value in Table 27 if UE processing capability 1 is reported according to the UE's capability report, and may have a value in Table 28 if UE processing capability 2 is reported, and if availability of UE processing capability 2 is configured through upper layer signaling.

[Table 29]

| $\mu$ | PUSCH preparation time $N_2$ [symbols] |
|---|---|
| 0 | 10 |
| 1 | 12 |
| 2 | 23 |
| 3 | 36 |

[Table 30]

| $\mu$ | PUSCH preparation time $N_2$ [symbols] |
|---|---|
| 0 | 5 |
| 1 | 5.5 |
| 2 | 11 for frequency range 1 |
| $d_{2,1}$: the number of symbols determined to be 0 if all resource elements of the first OFDM symbol of PUSCH transmission include DM-RSs, and to be 1 otherwise.<br>$\kappa$: 64<br>$\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH. | |

$$T_c\text{: } 1/(\Delta f_{max} \cdot N_f),\ \Delta f_{max} = 480 \cdot 10^3 Hz,\ N_f = 4096.$$

$d_{2,2}$: follows a BWP switching time if DCI that schedules a PUSCH indicates BWP switching, and has 0 otherwise.

$d_2$: if OFDM symbols overlap temporally between a PUSCH having a high priority index and a PUCCH having a low priority index, the $d_2$ value of the PUSCH having a high priority index is used. Otherwise, $d_2$ is 0.

$T_{ext}$: if the UE uses a shared spectrum channel access scheme, the UE may calculate $T_{ext}$ and apply the same to a PUSCH preparation procedure time. Otherwise, $T_{ext}$ is assumed to be 0.

$T_{switch}$: if an uplink switching spacing has been triggered, $T_{switch}$ is assumed to be the switching spacing time. Otherwise, $T_{switch}$ is assumed to be 0.

The base station and the UE may determine that the PUSCH preparation procedure time is insufficient if the first symbol of a PUSCH starts earlier than the first uplink symbol in which a CP starts after $T_{proc,2}$ from the last symbol of a PDCCH including DCI that schedules the PUSCH, in view of the influence of timing advance between the uplink and the downlink and time domain resource mapping information of the PUSCH scheduled through the DCI. Otherwise, the base station and the UE may determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[PUSCH: regarding repeated transmission]

Hereinafter, repeated transmission of an uplink data channel in a 5G system will be described in detail. A 5G system supports two types of methods for repeatedly transmitting an uplink data channel, PUSCH repeated transmission type A and PUSCH repeated transmission type B. One of PUSCH repeated transmission type A and type B may be configured for a UE through upper layer signaling.

PUSCH repeated transmission type A

As described above, the symbol length of an uplink data channel and the location of the start symbol may be determined by a time domain resource allocation method in one slot, and a base station may notify a UE of the number of repeated transmissions through upper layer signaling (for example, RRC signaling) or L1 signaling (for example, DCI).
Based on the number of repeated transmissions received from the base station, the UE repeatedly transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE may omit uplink data channel transmission, but may count the number of repeated transmissions of the uplink data channel.

PUSCH repeated transmission type B

As described above, the start symbol and length of an uplink data channel may be determined by a time domain resource allocation method in one slot, and the base station may notify the UE of the number of repeated transmissions (numberofrepetitions) through upper layer signaling (for example, RRC signaling) or L1 signaling (for example, DCI).
The nominal repetition of the uplink data channel is determined as follows, based on the previously configured start symbol and length of the uplink data channel. The slot in which the nth nominal repetition starts is given by $K_s + \left\lfloor \frac{S+n\cdot L}{N_{symb}^{slot}} \right\rfloor$, and the symbol starting in that slot is given by $mod(S + n \cdot L, N_{symb}^{slot})$. The slot in which the nth nominal repetition ends is given by $K_s + \left\lfloor \frac{S+(n+1)\cdot L-1}{N_{symb}^{slot}} \right\rfloor$, and the symbol ending in that slot is given by $mod(S + (n+1) \cdot L - 1, N_{symb}^{slot})$. In this regard, n=0,..., numberofrepetitions-1, S refers to the start symbol of the configured uplink data channel, and L refers to the symbol length of the configured uplink data channel. $K_s$ refers to the slot in which PUSCH transmission starts, and $N_{symb}^{slot}$ refers to the number of symbols per slot.
The UE may determine an invalid symbol for PUSCH repeated transmission type B. A symbol configured as a downlink by tdd-UL-DL-ConfigurationCommon or tdd-UL-DL-ConfigurationDedicated may be determined as the invalid symbol for PUSCH repeated transmission type B. Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 may represent the invalid symbol. Additionally, the cycle and pattern of the bitmap may be configured through the upper layer parameter (for example, InvalidSymbolPattern). If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE may apply an invalid symbol pattern, and if the above parameter indicates 0, the UE may not apply the invalid symbol pattern. If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE may apply the invalid symbol pattern.
After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition may include a set of consecutive valid symbols available for PUSCH repeated transmission type B in one slot.
FIG. 17 illustrates PUSCH repeated transmission type B in a wireless communication system according to an embodiment of the disclosure. The UE may receive the following configurations: the start symbol S of an uplink data channel is 0, the length L of the uplink data channel is 14, and the number of repeated transmissions is 16. In this case, nominal repetitions may appear in 16 consecutive slots (1701). Thereafter, the UE may determine that the symbol configured as a downlink symbol in each nominal repetition 1701 is an invalid symbol. In addition, the UE may determine that symbols configured as 1 in the invalid symbol pattern 1702 are invalid symbols. If valid symbols other than invalid symbols in respective nominal repetitions constitute one or more consecutive symbols in one slot, they may be configured and transmitted as actual repetitions (1703).

In addition, with regard to PUSCH repeated transmission, additional methods may be defined in NR Release 16 with regard to UL grant-based PUSCH transmission and configured grant-based PUSCH transmission, across slot boundaries, as follows:

Method 1 (mini-slot level repetition): through one UL grant, two or more PUSCH repeated transmissions may be scheduled inside one slot or across the boundary of consecutive slots. In addition, in connection with method 1, time domain resource allocation information inside DCI may indicate resources of the first repeated transmission. In addition, time domain resource information of remaining repeated transmissions may be determined according to time domain resource information of the first repeated transmission, and the uplink or downlink direction determined with regard to each symbol of each slot. Each repeated transmission may occupy consecutive symbols.

Method 2 (multi-segment transmission): through one UL grant, two or more PUSCH repeated transmissions may be scheduled in consecutive slots. Transmission no. 1 may be designated with regard to each slot, and the start point or repetition length may differ between respective transmission. In addition, in method 2, time domain resource allocation information inside DCI may indicate the start point and repetition length of all repeated transmissions. In addition, when performing repeated transmissions inside a single slot through method 2, if there are multiple bundles of consecutive uplink symbols in the corresponding slot, respective repeated transmissions may be performed with regard to respective uplink symbol bundles. For example, if there is a single bundle of consecutive uplink symbols in the corresponding slot, PUSCH repeated transmission may be performed once according to the method of NR Release 15.

Method 3: two or more PUSCH repeated transmissions may be scheduled in consecutive slots through two or more UL grants. Transmission no. 1 may be designated with regard to each slot, and the $n^{th}$ UL grant may be received before PUSCH transmission scheduled by the $(n-1)^{th}$ UL grant is over.

Method 4: through one UL grant or one configured grant, one or multiple PUSCH repeated transmissions inside a single slot, or two or more PUSCH repeated transmissions across the boundary of consecutive slots may be supported. The number of repetitions indicated to the UE by the base station is only a nominal value, and the UE may actually perform a larger number of PUSCH repeated transmissions than the nominal number of repetitions. Time domain resource allocation information inside DCI or configured grant may refer to resources of the first repeated transmission indicated by the base station. Time domain resource information of remaining repeated transmissions may be determined with reference to resource information of the first repeated transmission and the uplink or downlink direction of symbols. If time domain resource information of a repeated transmission indicated by the base station spans a slot boundary or includes an uplink/downlink switching point, the corresponding repeated transmission may be divided into multiple repeated transmissions. One repeated transmission may be included in one slot with regard to each uplink period.

[PUSCH: frequency hopping process]

Hereinafter, frequency hopping of a physical uplink shared channel (PUSCH) in a 5G system will be described in detail.

5G may support two kinds of PUSCH frequency hopping methods with regard to each PUSCH repeated transmission type. First of all, in PUSCH repeated transmission type A, intra-slot frequency hopping and inter-slot frequency hopping are supported, and in PUSCH repeated transmission type B, inter-repetition frequency hopping and inter-slot frequency hopping are supported. Obviously, the example given above is not limiting.

The intra-slot frequency hopping method supported in PUSCH repeated transmission type A may include a method in which a UE transmits allocated resources in the frequency domain, after changing the same by a configured frequency offset, by two hops in one slot. The start RB of each hop in connection with intra-slot frequency hopping may be expressed by Equation 5 below.

[Equation 5]

$$RB_{start} = \begin{cases} RB_{start} & i = 0 \\ \left(RB_{start} + RB_{offset}\right) mod N_{BWP}^{size} & i = 1 \end{cases}$$

In Equation 5, i=0 and i=1 denote the first and second hops, respectively, and $RB_{start}$ denotes the start RB in a UL BWP and are calculated from a frequency resource allocation method.
$RB_{offset}$ denotes a frequency offset between two hops through an upper layer parameter. The number of symbols of the first hop may be represented by $\lfloor N_{symb}^{PUSCH,s}/2 \rfloor$, and the number of symbols of the second hop may be represented by $N_{symb}^{PUSCH,s} - \lfloor N_{symb}^{PUSCH,s}/2 \rfloor$. $N_{symb}^{PUSCH,s}$ is the length of PUSCH transmission in one slot and is expressed by the number of OFDM symbols.

Next, according to the inter-slot frequency hopping method supported in PUSCH repeated transmission types A and B, the UE transmits allocated resources in the frequency domain, after changing the same by a configured frequency offset, in each slot. The start RB during $n_s^{\mu}$ slots in connection with inter-slot frequency hopping may be expressed by Equation 6 below.

[Equation 6]

$$RB_{start}(n_s^{\mu}) = \begin{cases} RB_{start} & n_s^{\mu} mod 2 = 0 \\ (RB_{start} + RB_{offset}) mod N_{BWP}^{size} & n_s^{\mu} mod 2 = 1 \end{cases}$$

In Equation 6, $n_s^{\mu}$ denotes the current slot number during multi-slot PUSCH transmission, and $RB_{start}$ denotes the start RB inside a UL BWP and may be calculated from a frequency resource allocation method. $RB_{offset}$ may denote a frequency offset between two hops through an upper layer parameter.

Next, the inter-repetition frequency hopping method supported in PUSCH repeated transmission type B may be a method in which resources allocated in the frequency domain regarding one or multiple actual repetitions in each nominal repetition are moved by a configured frequency offset and then transmitted. The index $RB_{start}(n)$ of the start RB in the frequency domain regarding one or multiple actual repetitions in the nth nominal repetition may follow Equation 7 below.

[Equation 7]

$$RB_{start}(n) = \begin{cases} RB_{start} & n mod 2 = 0 \\ (RB_{start} + RB_{offset}) mod N_{BWP}^{size} & n mod 2 = 1 \end{cases}$$

In Equation 7, n denotes the index of nominal repetition, and $RB_{offset}$ denotes an RB offset between two hops through an upper layer parameter.

[Regarding UE capability report]

In LTE and NR, a UE may perform a procedure in which, while being connected to a serving base station, the UE reports capability supported by the UE to the corresponding base station. This will be referred to as a UE capability report in the following description.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, multiple capability enquiries may be included in one message, and may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). In addition, the UE capability enquiry message may be transmitted initially after the UE is connected to the base station, in general, but may be requested in any condition if needed by the base station.

Upon receiving the UE capability report request from the base station in the above step, the UE may configure UE capability according to band information and RAT type required by the base station. The method in which the UE configures UE capability in an NR system is summarized below:

If the UE receives a list regarding LTE and/or NR bands from the base station at a UE capability request, the UE may construct band combinations (BCs) regarding EN-DC and NR standalone (SA). That is, the UE may configure a candidate list of BCs regarding EN-DC and NR SA, based on bands received from the base station at a request through FreqBandList. In addition, bands may have priority in the order described in FreqBandList.

If the base station has set "eutra-nr-only" flag or "eutra" flag and requested a UE capability report, the UE may remove everything related to NR SA BCs from the configured BC candidate list. Such an operation may occur only if an LTE base station (eNB) requests "eutra" capability.

The UE may then remove fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same can be omitted. This step may be applied in MR-DC as well, that is, may also be applied to LTE bands. BCs remaining after this step may constitute the final "candidate BC list".

The UE may select BCs appropriate for the requested RAT type from the final "candidate BC list" and select BCs to report. In this step, the UE may configure supportedBandCombinationList in a determined order. That is, the UE may configure BCs and UE capability to report according to a preconfigured rat-Type order. (nr -> eutra-nr -> eutra). In addition, the UE may configure featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be obtained from feature set combinations of containers of UE-NR-Capabilities and UE-MRDC-Capabilities.

In addition, if the requested RAT type is eutra-nr and has an influence, featureSetCombinations may be included on both containers of UE-MRDC-Capabilities and UE-NR-Capabilities. However, the feature set of NR may be included only in UE-NR-Capabilities.

After the UE capability is configured, the UE may transfer a UE capability information message including the UE capability to the base station. The base stations may perform scheduling and transmission/reception management appropriate for the UE, based on the UE capability received from the UE.

[Regarding CA/DC]

FIG. 18 illustrates radio protocol structures of a base station and a UE in single cell, carrier aggregation, and dual connectivity situations according to an embodiment of the disclosure.

Referring to FIG. 18, the radio protocol of a next-generation mobile communication system includes an NR service data adaptation protocol (SDAP) 1825 or 1870, an NR packet data convergence protocol (PDCP) 1830 or 1865, an NR radio link control (RLC) 1835 or 1860, and an NR medium access controls (MAC) 1840 or 1855, on each of UE and NR base station sides. Obviously, the above example is not limiting, and the radio protocol may include a larger or smaller number of layers.

The main functions of the NR SDAP 1825 or 1870 may include some of functions below. Obviously, the example given below is not limiting.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device 1825 or 1875, the UE may be configured, through an RRC message, whether to use the header of the SDAP layer device 1825 or 1875 with regard to each PDCP layer device or with regard to each bearer or with regard to each logical channel, or whether to use functions of the SDAP layer device. If an SDAP header is configured, the NAS QoS reflection configuration 1-bit indicator (NAS reflective QoS) of the SDAP header and the AS QoS reflection configuration 1-bit indicator (AS reflective QoS) thereof may be indicated by the base station, so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1830 or 1865 may include some of functions below. Obviously, the example given below is not limiting.

- Header compression and decompression: robust header compression (ROHC) only
- Transfer of user data
- In-sequence delivery of upper layer PDUs

Out-of-sequence delivery of upper layer PDUs
PDCP PDU reordering for reception
Duplicate detection of lower layer SDUs
Retransmission of PDCP SDUs
Ciphering and deciphering
Timer-based SDU discard in uplink

The above-mentioned reordering of the NR PDCP device 1830 or 1865 refers to a function of reordering PDCP PDUs received from a lower layer in an order based on the PDCP sequence number (SN), and may include a function of transferring data to an upper layer in the reordered sequence. Alternatively, the reordering of the NR PDCP device 1830 or 1865 may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 1835 or 1860 may include some of functions below. Obviously, the example given below is not limiting.

Transfer of upper layer PDUs
In-sequence delivery of upper layer PDUs
Out-of-sequence delivery of upper layer PDUs
Error Correction through ARQ
Concatenation, segmentation and reassembly of RLC SDUs
Re-segmentation of RLC data PDUs
Reordering of RLC data PDUs
Duplicate detection
Protocol error detection
RLC SDU discard
RLC re-establishment

The above-mentioned in-sequence delivery of the NR RLC device 1835 or 1860 may refer to a function of successively delivering RLC SDUs received from the lower layer to the upper layer. The in-sequence delivery of the NR RLC device 1835 or 1860 may include at least one of a function of reassembling and delivering multiple RLC SDUs received, into which one original RLC SDU has been segmented, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs. The in-sequence delivery function of the NR RLC device 1835 or 1860 may include at least one of a function of, if there is a lost RLC SDU, successively delivering only RLC SDUs before the lost RLC SDU to the upper layer, and a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all currently received RLC SDUs to the upper layer.

In addition, the in-sequence delivery function of the NR RLC device 1835 or 1860 may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device.

The NR RLC device (or NR RLC layer) 1835 or 1860 may include no concatenation function, which may be performed in the NR MAC layer or replaced with a multiplexing function of the NR MAC layer.

The out-of-sequence delivery of the NR RLC device 1835 or 1860 refers to a function of instantly delivering RLC SDUs received from the lower layer to the upper layer regardless of the order, may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

The NR MAC 1840 or 1855 may be connected to multiple NR RLC layer devices configured in one UE, and the main functions of the NR MAC may include some of functions below. Obviously, the example given below is not limiting.

Mapping between logical channels and transport channels
Multiplexing/demultiplexing of MAC SDUs
Scheduling information reporting

Error correction through HARQ
Priority handling between logical channels of one UE
Priority handling between UEs by means of dynamic scheduling
MBMS service identification
Transport format selection
Padding

The NR PHY layer 1845 or 1850 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. Obviously, the example given above is not limiting.

The detailed structure of the radio protocol structure may be variously changed according to the carrier (or cell) operating scheme. As an example, assuming that the base station transmits data to the UE based on a single carrier (or cell), the base station and the UE use a protocol structure having a single structure with regard to each layer, such as 1800. On the other hand, assuming that the base station transmits data to the UE based on carrier aggregation (CA) which uses multiple carriers in a single TRP, the base station and the UE may use a protocol structure which has a single structure up to the RLC, such as 1810, but multiplexes the PHY layer through a MAC layer. As another example, assuming that the base station transmits data to the UE based on dual connectivity (DC) which uses multiple carriers in multiple TRPs, the base station and the UE use a protocol structure which has a single structure up to the RLC, such as 1820, but multiplexes the PHY layer through a MAC layer.

Referring to the above PDCCH and beam configuration-related descriptions, PDCCH repetition is not supported in current Rel-15 and Rel-16 NR and thus it may be difficult to accomplish required reliability in a scenario, such as URLLC, requiring high reliability. The disclosure provides a PDCCH repetition method using multiple transmission points (TRPs), thereby improving reliability in PDCCH reception of a terminal. A specific method is described in the following embodiments in detail.

Hereinafter, embodiments of the disclosure will be described in detail in conjunction with the accompanying drawings. The contents of the disclosure may be applied to FDD and TDD systems. As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for convenience of description, that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

[Related to NC-JT]

According to an embodiment of the disclosure, non-coherent joint transmission (NC-JT) may be used to enable a terminal to receive a PDSCH from multiple TRPs.

Unlike conventional systems, a 5G wireless communication system may support both a service having very short transmission delay and a service requiring high connection density, as well as a service requiring a high data rate. In a wireless communication network including multiple cells, transmission and reception points (TRPs), or beams, cooperative communication (coordinated transmission) between cells, TRPs, and/or beams may increase the strength of a signal received by a terminal or efficiently perform interference control between cells, TRPs, and/or beams so as to satisfy various service requirements.

Joint transmission (JT) is a representative transmission technology for cooperative communication described above, and transmits a signal to one terminal through multiple different cells, TRPs, and/or beams so as to increase the processing rate or the strength of the signal received by the terminal. Channels between cells, TRPs, and/or beams and the terminal may have large difference in the characteristic thereof. Particularly, in a case of non-coherent joint transmission (NC-JT) supporting non-coherent precoding between cells, TRPs, and/or beams, individual precoding, an MCS, resource allocation, and TCI indication may be required according to a channel characteristic for each of links between the terminal and the cells, TRPs, and/or beams.

NC-JT described above may be applied to at least one channel among a downlink data channel (PDSCH), a downlink control channel (PDCCH), an uplink data channel (PUSCH), and an uplink control channel (PUCCH). At the time of PDSCH transmission, transmission information, such as precoding, an MCS, resource allocation, and a TCI, is indicated through DL DCI, and the transmission information is required to be independently indicated for each cell, TRP, and/or beam for NC-JT. This is a main reason for increasing a payload required for DL DCI transmission and may adversely affect the reception performance of a PDCCH transmitting DCI. Therefore, in order to support JT of a PDSCH, careful design of the tradeoff between the amount of DCI information and the reception performance of control information is necessary.

FIG. 19 is a diagram illustrating an example of an antenna port configuration and resource allocation for transmitting a PDSCH by using cooperative communication in a wireless communication system according to an embodiment of the disclosure.

Referring to FIG. 19, examples for PDSCH transmission are described for respective joint transmission (JT) techniques, and embodiments for allocating a wireless resource for each TRP are illustrated.

Referring to FIG. 19, an example 1900 for coherent joint transmission (C-JT) supporting coherent precoding between cells, TRPs, and/or beams is illustrated.

In a case of C-JT, TRP A 1905 and TRP B 1910 transmit single data (PDSCH) to a terminal 1915, and multiple TRPs may perform joint precoding. This may imply that a DMRS is transmitted through the same DMRS ports to allow TRP A 1905 and TRP B 1910 to transmit the same PDSCH. For example, each of TRP A 1905 and TRP B 1910 may transmit a DMRS to the terminal through DMRS port A and DMRS B. In this case, the terminal may receive one piece of DCI information for receiving one PDSCH demodulated based on the DMRS transmitted through DMRS port A and DMRS B.

FIG. 19 illustrates an example 1920 of non-coherent joint transmission (NC-JT) supporting non-coherent precoding between cells, TRPs, and/or beams for PDSCH transmission.

In a case of NC-JT, cells, TRPs, and/or beams transmit respective PDSCHs to a terminal 1935, and individual precoding may be applied to each PDSCH. Respective cells, TRPs, and/or beams may transmit different PDSCHs or different PDSCH layers to the terminal so as to improve a processing rate compared to single cell, TRP, and/or beam transmission. In addition, respective cells, TRPs, and/or beams may repeat transmission of the same PDSCH to the terminal so as to improve reliability compared to single cell, TRP, and/or beam transmission. For convenience of explanation, hereinafter, a cell, TRP, and/or beam may be collectively called a TRP.

Various wireless resource allocations may be considered for a case 1940 where frequency and time resources used in multiple TRPs for PDSCH transmission are all the same, a case 1945 where frequency and time resources used in multiple TRPs do not overlap at all, and a case 1950 where some of frequency and time resources used in multiple TRPs overlap.

For NC-JT support, pieces of DCI having various types, structures, and relations may be considered to simultaneously allocate multiple PDSCHs to one terminal.

FIG. 20 is a diagram illustrating a configuration of downlink control information (DCI) for NC-JT wherein respective TRPs transmit different PDSCHs or different PDSCH layers to a terminal in a wireless communication system according to an embodiment of the disclosure.

Referring to FIG. 20, case #1 2000 is an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, control information for the PDSCHs transmitted from the additional (N-1) number of TRPs is transmitted independently to control information for a PDSCH transmitted from the serving TRP. That is, a terminal may obtain control information for PDSCHs transmitted from different TRPs (TRP #0 to TRP #(N-1)) through independent pieces of DCI (DCI #0 to DCI #(N-1)). The formats of the independent pieces of DCI may be identical to or different from each other, and the payloads of the pieces of DCI may also be identical to or different from each other. In case #1 described above, free control or allocation of each PDSCH may be completely ensured, but when pieces of DCI are transmitted from different TRPs, there occurs a difference in coverage between the pieces of DCI and thus reception performance may be degraded.

Case #2 2005 shows that, in a situation where different (N-1) number of PDSCHs are transmitted from additional (N-1) number of TRPs (TRP #1 to TRP #(N-1)) other than a serving TRP (TRP #0) used at the time of single PDSCH transmission, pieces of control information (DCI) for the PDSCHs of the additional (N-1) number of TRPs are transmitted respectively, and each of the pieces of DCI may be dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2, but shortened DCI (hereinafter, sDCI) (sDCI #0 to sDCI #(N-2)) that is control information for each of PDSCHs transmitted from cooperative TRPs (TRP #1 to TRP #(N-1)) may include only some of information elements of DCI format 1_0, DCI format 1_1, or DCI format 1_2. Therefore, sDCI transmitting control information for PDSCHs transmitted from the cooperative TRPs has a payload smaller than that of normal DCI (nDCI) transmitting control information related to a PDSCH transmitted from the serving TRP, and thus is able to include reserved bits compared to nDCI.

In case #2 described above, free control or allocation of each PDSCH may be limited according to the contents of information elements included in sDCI, but the reception performance of sDCI is superior to nDCI, and thus a probability that a difference in coverage between pieces of DCI may occur may be lowered.

Case #3 2010 shows that, in a situation where different (N-1) number of PDSCHs are transmitted from additional (N-1) number of TRPs (TRP #1 to TRP #(N-1)) other than a serving TRP (TRP #0) used at the time of single PDSCH transmission, one piece of control information (DCI) for the PDSCHs of the additional (N-1) number of TRPs is transmitted, and the one piece of DCI may be dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2, but in a case of control information for PDSCHs transmitted from cooperative TRPs (TRP #1 to TRP #(N-1)), it may be possible to collect only some of information elements of DCI format 1_0, DCI format 1_1, or DCI format 1_2 in one piece of "secondary" DCI (sDCI) and transmit same. For example, sDCI may include at least one piece of information among pieces of HARQ-related information, such as frequency domain resource assignment, time domain resource assignment, or an MCS of cooperative TRPs. In addition, other information not included in sDCI, such as a bandwidth part (BWP) indicator or a carrier indicator, may follow DCI (DCI #0, normal DCI, or nDCI) of the serving TRP.

Case #3 2010, free control or allocation of each PDSCH may be limited according to the contents of information elements included in sDCI, but the reception performance of sDCI is controllable and the complexity of DCI blind decoding of a terminal may be reduced compared to case #1 2000 or case #2 2005.

Case #4 2015 is an example in which, in a situation where different (N-1) number of PDSCHs are transmitted from additional (N-1) number of TRPs (TRP #1-TRP #(N-1)) other than a serving TRP (TRP #0) used at the time of single PDSCH transmission, control information for the PDSCHs transmitted from the additional (N-1) number of TRPs is transmitted through the same DCI (long DCI) as that of control information for a PDSCH transmitted from the serving TRP. That is, a terminal may obtain control information for PDSCHs transmitted from different TRPs (TRP #0-TRP #(N-1)) through single DCI. In case of case #4 2015, the complexity of DCI blind decoding of the terminal may not be increased, but a PDSCH may not be freely controlled or allocated like the number of cooperative TRPs being limited due to the limitation of a long DCI payload.

In the following description and embodiments, sDCI may be referred to as various pieces of auxiliary DCI, such as shortened DCI, secondary DCI, or normal DCI (DCI format 1_0 or 1_1 described above) including PDSCH control information transmitted from a cooperative TRP, and if there is no special explicit limitation, the above description may be similarly applicable to the various pieces of auxiliary DCI.

In the following description and embodiments, case #1 2000, case #2 2005, and case #3 2010 described above in which one or more pieces of DCI (PDCCHs) are used for NC-JT support are classified as NC-JT based on multiple PDCCHs, and case #4 2015 described above in which single DCI (PDCCH) is used for NC-JT support may be classified as NC-JT based on a single PDCCH. In PDSCH transmission based on multiple PDCCHs, a CORESET in which DCI of a serving TRP (TRP #0) is scheduled may be distinguished from a CORESET in which DCI of cooperative TRPs (TRP #1 to TRP #(N-1)) is scheduled. As a method for distinguishing between CORESETs, there may be a method of distinguishment using a higher layer indicator for each CORESET or a method of distinguishment using a beam configuration for each CORESET. In addition, in NC-JT based on a single PDCCH, single DCI schedules a single PDSCH having multiple layers rather than scheduling multiple PDSCHs, and the multiple layers may be transmitted from multiple TRPs. The connection relation between a layer and a TRP transmitting the layer may be indicated through a transmission configuration indicator (TCI) indication for the layer.

In embodiments of the disclosure, a "cooperative TRP" may be replaced with various terms including a "cooperative panel" or a "cooperative beam", when actually applied.

In embodiments of the disclosure, "a case where NC-JT is applied" is variously interpretable in accordance with a situation as "a case where a terminal simultaneously receives one or more PDSCHs in one BWP", "a case where a terminal receives a PDSCH, based on two or more TCI indications simultaneously, in one BWP", and "a case where a PDSCH received by a terminal is associated with one or more DMRS port groups". However, for convenience of explanation, one expression is used.

In the disclosure, a wireless protocol structure for NC-JT may be variously used according to a TRP-based scenario. For example, if there is no or a small backhaul delay between cooperative TRPs, a method (CA-like method) using a structure based on MAC layer multiplexing similarly to the structure 1810 in FIG. 18 is possible. On the contrary, if a backhaul delay between cooperative TRPs is large enough not to be ignorable (e.g., a time of 2 ms or longer is required for exchange of information, such as CSI, scheduling, or HARQ-ACK, between cooperative TRPs), a method (DC-like method) of using a TRP-specific independent structure from an RLC layer, similarly to the structure 1820 in FIG. 18, so as to ensure a characteristic resistant to delays is possible.

A terminal supporting C-JT/NC-JT may receive a parameter or setting value related to C-JT/NC-JT from a higher layer configuration, and set an RRC parameter of the terminal, based on the same parameter or setting value. The terminal may use a UE capability parameter, for example, tci-StatePDSCH for the higher layer configuration. The UE capability parameter, for example, tci-StatePDSCH may define TCI states for PDSCH transmission, and the number of TCI states may be configured to be 4, 8, 16, 32, 64, or 128 in FR 1 and 64 and 128 in FR 2, and a maximum of 8 states indicatable by 3 bits of a TCI field of DCI among the configured number may be configured through a MAC CE message. The maximum value 128 may mean a value indicated by maxNumberConfiguredTCIstatesPerCC in a tci-StatePDSCH parameter included in capability signaling of the terminal. As described above, a series of configuration processes from a higher layer configuration to a MAC CE configuration may be applied to a beamforming indication or beamforming change command for at least one PDSCH from one TRP.

[Multi-DCI-based multi-TRP]

As an embodiment of the disclosure, a multi-DCI-based multi-TRP transmission method is described. In the multi-DCI-based multi-TRP transmission method, a downlink control channel for NC-JT may be configured based on multiple PDCCHs.

In NC-JT based on multiple PDCCHs, at the time of DCI transmission for PDSCH scheduling by each TRP, a CORESET or a search space distinguished for each TRP may be provided. The CORESET or search space for each TRP may be configurable according to at least one of the following cases.

* Configuration of higher layer index for each CORESET: CORESET configuration information configured through a higher layer may include an index value, and the configured index value for each CORESET may be used to distinguish a TRP transmitting a PDCCH in a corresponding CORESET. That is, in a set of CORESETs having the same higher layer index value, it may be considered or determined that the same TRP transmits PDCCHs or it may be considered or determined that PDCCHs scheduling PDSCHs of the same TRP are transmitted. The index for each CORESET described above may be called CORESETPoolIndex, and it may be considered or determined that PDCCHs are transmitted from the same TRP in CORESETs configured to have the same value of CORESETPoolIndex. It may be considered or determined that a default value of CORESETPoolIndex is configured for a CORESET for which a value of CORESETPoolIndex is not configured, and the default value may be 0.

    - In the disclosure, if the number of CORESETPoolIndex types of multiple CORESETs included in the higher layer signaling PDCCH-Config exceeds 1, that is, if each CORESET has a different value of CORESETPoolIndex, a terminal may consider or determine that a base station is able to use a multi-DCI-based multi-TRP transmission method.
    - On the contrary, in the disclosure, if the number of CORESETPoolIndex types of multiple CORESETs included in PDCCH-Config that is higher layer signaling is 1, that is, if all the CORESETs have the same CORESETPoolIndex of 0 or 1, the terminal may consider or determine that the base station performs transmission by using a single TRP rather than using a multi-DCI-based multi-TRP transmission method.

* Configuration of multiple values of PDCCH-Config: Multiple values of PDCCH-Config are configured in one BWP, and each value of PDCCH-Config may include a TRP-specific PDCCH configuration. That is, a CORESET list for each TRP and/or a search space list for each TRP may be configured in one value of PDCCH-Config, and one or more CORESETs and one or more search spaces included in one value of PDCCH-Config may be considered or determined to correspond to a particular TRP.
* CORESET beam/beam group configuration: Through a beam or beam group configured for each CORESET, a TRP corresponding to a corresponding CORESET may be distinguished. For example, if the same TCI state is configured for multiple CORESETs, it may be assumed or determined that the CORESETs are transmitted through the same TRP or it may be assumed or determined that PDCCHs scheduling PDSCHs of the same TRP are transmitted in the CORESETs.
* Search space beam/beam group configuration: A beam or beam group is configured for each search space, and a TRP for each search space may be distinguished therethrough. For example, if the same beam/beam group or TCI state is configured for multiple search spaces, it may be assumed or determined that the same TRP transmits PDCCHs in the search spaces or it may be assumed or determined that PDCCHs scheduling PDSCHs of the same TRP are transmitted in the search spaces.

As described above, a CORESET or search space is distinguished for each TRP, whereby classification of a PDSCH and HARQ-ACK information for each TRP is possible and thus independent HARQ-ACK codebook generation and independent PUCCH resource usage for each TRP may also be possible.

In addition, the above configuration may be independent for each cell or each BWP. For example, two different values of CORESETPoolIndex may be configured in a PCell, and on the contrary, a value of CORESETPoolIndex may not be configured in a particular SCell. In this case, it may be assumed or determined that NC-JT is configured in the PCell, but NC-JT is not configured in the SCell in which a value of CORESETPoolIndex is not configured.

A PDSCH TCI state activation/deactivation MAC-CE which is applicable to a multi-DCI-based multi-TRP transmission method may follow FIG. 16. If CORESETPoolIndex for all CORESETs in the higher layer signaling PDCCH-Config is not configured for the terminal, the terminal may disregard a CORESET pool ID field 16-55 in a MAC-CE 16-50. If the terminal is able to support a multi-DCI-based multi-TRP transmission method, that is, if respective CORESETs in the higher layer signaling PDCCH-Config have different values of CORESETPoolIndex, the terminal may activate a TCI state in DCI included in PDCCHs transmitted in CORESETs having the same CORESETPoolIndex value as that of the CORESET pool ID field 16-55 in the MAC-CE 16-50. For example, if the value of the CORESET pool ID field 16-55 in the MAC-CE 16-50 is 0, a TCI state in DCI included in PDCCHs transmitted from CORESETs having CORESETPoolIndex of 0 may follow activation information of the MAC-CE.

In a case where the terminal is configured by the base station to be able to use a multi-DCI-based multi-TRP transmission method, that is, in a case where the number of CORESETPoolIndex types of multiple CORESETs included in the higher layer signaling PDCCH-Config exceeds 1, or in a case where the respective CORESETs have different values of CORESETPoolIndex, the terminal may recognize that PDSCHs scheduled by PDCCHs in the respective CORESETs having two different values of CORESETPoolIndex have the following restrictions.

1) If PDSCHs indicated by PDCCHs in respective CORESETs having two different values of CORESETPoolIndex entirely or partially overlap with each other, the terminal may apply TCI states indicated by the PDCCHs to different code division multiplexing (CDM) groups, respectively. That is, two or more TCI states may not be applied to one CDM group.
2) If PDSCHs indicated by PDCCHs in respective CORESETs having two different values of CORESETPoolIndex entirely or partially overlap with each other, the terminal may expect that the PDSCHs have the same number of actual front loaded DMRS symbols, the same number of actual additional DMRS symbols, the same position of an actual DMRS symbol, and the same DMRS type.
3) The terminal may expect that bandwidth parts indicated by PDCCHs in respective CORESETs having two different values of CORESETPoolIndex are the same and subcarrier spacings are also the same.
4) The terminal may expect that information on a PDSCH scheduled by a PDCCH in each of CORESETs having two different values of CORESETPoolIndex is fully included in the PDCCH.

[Single-DCI-based multi-TRP]

As an embodiment of the disclosure, a single-DCI-based multi-TRP transmission method is described. In the single-DCI-based multi-TRP transmission method, a downlink control channel for NC-JT may be configured based on a single PDCCH.

In the single-DCI-based multi-TRP transmission method, a PDSCH transmitted by multiple TRPs may be scheduled by one DCI. As a method of indicating the number of TRPs transmitting the PDSCH, the number of TCI states may be used. That is, if the number of TCI states indicated in DCI scheduling a PDSCH is 2, transmission may be considered to be single PDCCH-based NC-JT, and if the number of TCI states is 1, transmission may be considered to be single-TRP transmission. TCI states indicated in DCI may correspond to one or two TCI states among TCI states activated by a MAC-CE. If TCI states of DCI correspond to two TCI states activated by a MAC-CE, a TCI codepoint indicated in the DCI and the TCI states activated by the MAC-CE may have a correspondence relation, and this may correspond to a case where the number of the TCI states activated by the MAC-CE and corresponding to the TCI codepoint is 2.

As another example, if at least one codepoint among all codepoints of a TCI state field in DCI indicates two TCI states, a terminal may consider that a base station is able to perform transmission based on a single-DCI-based multi-TRP method. The at least one codepoint indicating two TCI states in the TCI state field may be activated through an enhanced PDSCH TCI state activation/deactivation MAC-CE.

FIG. 21 is a diagram illustrating an enhanced PDSCH TCI state activation/deactivation MAC-CE structure. The meaning of each field in the MAC CE and a value configurable in each field are as follows.

- **Serving Cell ID**: This field indicates the identity of the Serving Cell for which the MAC CE applies. The length of the field is 5 bits. If the indicated Serving Cell is configured as part of a simultaneous TCI-UpdateList1 or simultaneous TCI- UpdateList2 as specified in TS 38.331 [5], this MAC CE applies to all the Serving Cells configured in the set simultaneousTCI-UpdateList1 or simultaneousTCI-UpdateList2, respectively;
- **BWP ID**: This field indicates a DL BWP for which the MAC CE applies as the codepoint of the DCI bandwidth part indicator field as specified in TS 38.212 [9]. The length of the BWP ID field is 2 bits;
- **Ci**: This field indicates whether the octet containing TCI state IDi,2 is present. If this field is set to "1", the octet containing TCI state IDi,2 is present. If this field is set to "0", the octet containing TCI state IDi,2 is not present;
- **TCI state IDi,j**: This field indicates the TCI state identified by TCI-StateId as specified in TS 38.331 [5], where i is the index of the codepoint of the DCI Transmission configuration indication field as specified in TS 38.212 [9] and TCI state IDi,j denotes the j-th TCI state indicated for the i-th codepoint in the DCI Transmission Configuration Indication field. The TCI codepoint to which the TCI States are mapped is determined by its ordinal position among all the TCI codepoints with sets of TCI state IDij fields, i.e., the first TCI codepoint with TCI state ID0,1 and TCI state ID0,2 shall be mapped to the codepoint value 0, the second TCI codepoint with TCI state ID1,1 and TCI state ID1,2 shall be mapped to the codepoint value 1 and so on. The TCI state IDi,2 is optional based on the indication of the Ci field. The maximum number of activated TCI codepoint is 8 and the maximum number of TCI states mapped to a TCI codepoint is 2.
- **R**: Reserved bit, set to "0".

In FIG. 21, if the value of a $C_0$ field 21-05 is 1, the MAC-CE may include a TCI state $ID_{0,2}$ field 21-15 in addition to a TCI state $ID_{0,1}$ field 21-10. This implies that TCI state $ID_{0,1}$ and TCI state $ID_{0,2}$ are activated for the 0-th codepoint of a TCI state field included in DCI, and if the base station indicates the codepoint to the terminal, two TCI states may be indicated to the terminal. If the value of the $C_0$ field 21-05 is 0, the MAC-CE is unable to include the TCI state $ID_{0,2}$ field 21-15, and this implies that one TCI state corresponding to TCI state $ID_{0,1}$ is activated for the 0-th codepoint of a TCI state field included in DCI.

The above configuration may be independent for each cell or each BWP. For example, the number of activated TCI states corresponding to one TCI codepoint is a maximum of 2 in a PCell, but the number of activated TCI states corresponding to one TCI codepoint may be a maximum of 1 in a particular SCell. In this case, it may be considered or determined that NC-JT is configured in the PCell, but NC-JT is not configured in the SCell.

[Single-DCI-based multi-TRP PDSCH repetition scheme (TDM/FDM/SDM) distinguishment method]

Next, a method of distinguishing a single-DCI-based multi-TRP PDSCH repetition technique is described. Different single-DCI-based multi-TRP PDSCH repetition techniques (e.g., TDM, FDM, and SDM) may be indicated to a terminal by a base station according to a value indicated by a DCI field and a higher layer signaling configuration. Table 31 below shows a method of distinguishing between single or multi-TRP-based techniques indicated to a terminal according to a particular DCI field value and a higher layer signaling configuration.

[Table 31]

| Combination | The number of TCI states | The number of CDM groups | repetitionNumber configuration and indication condition | Related to repetitionScheme configuration | Transmission technique indicated to terminal |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |

(continued)

| Combination | The number of TCI states | The number of CDM groups | repetitionNumber configuration and indication condition | Related to repetitionScheme configuration | Transmission technique indicated to terminal |
|---|---|---|---|---|---|
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

In Table 31, each column may be described as follows.

- Number of TCI states (second column): This indicates the number of TCI states indicated by a TCI state field in DCI, and may be 1 or 2.
- Number of CDM groups (third column): This indicates the number of different CDM groups of DMRS ports indicated by an antenna port field in DCI. For example, same may be 1, 2, or 3.
- repetitionNumber configuration and indication condition (fourth column): There may be three conditions according to whether repetitionNumber is configured for all TDRA entries indicatable by a time domain resource allocation field in DCI, and whether an actually indicated TDRA entry has a repetitionNumber configuration.

  -- Condition 1: At least one of all TDRA entries indicatable by a time domain resource allocation field includes a configuration on repetitionNumber, and a TDRA entry indicated by a time domain resource allocation field in DCI includes a configuration on repetitionNumber greater than 1
  -- Condition 2: At least one of all TDRA entries indicatable by a time domain resource allocation field includes a configuration on repetitionNumber, and a TDRA entry indicated by a time domain resource allocation field in DCI does not include a configuration on repetitionNumber
  -- Condition 3: All TDRA entries indicatable by a time domain resource allocation field do not include a configuration on repetitionNumber

- Related to repetitionScheme configuration (fifth column): This may indicate whether repetitionScheme that is higher layer signaling is configured. As the higher layer signaling repetitionScheme, one of "tdmSchemeA", "fdmSchemeA", and "fdmSchemeB" may be configured.
- Transmission technique indicated to terminal (sixth column): This indicates single or multi-TRP techniques indicated by each combination (first column) represented in Table 31.

  -- Single-TRP: This indicates single-TRP-based PDSCH transmission. If pdsch-AggegationFactor in the higher layer signaling PDSCH-config is configured for a terminal, as many times of single-TRP-based PDSCH repetition as a configured number of times may be scheduled for the terminal. Otherwise, single-TRP-based PDSCH single transmission may be scheduled for the terminal.
  -- Single-TRP TDM scheme B: This indicates single-TRP-based inter-slot time resource division-based PDSCH repetition. According to condition 1 related to repetitionNumber described above, a terminal repeats PDSCH transmission on the time domain in a number of slots equal to the count of repetitionNumber greater than 1 configured in a TDRA entry indicated by a time domain resource allocation field. The terminal may apply the same start symbol and the same symbol length of a PDSCH indicated by the TDRA entry for each of the slots, the number of which is equal to the count of repetitionNumber, and apply the same TCI state to every PDSCH repetition. The single-TRP TDM scheme B is similar to a slot aggregation scheme in that inter-slot PDSCH repetition is performed on time resources, but differs from slot aggregation in that whether repetition is indicated may be dynamically determined based on a time domain resource allocation field in DCI.
  -- Multi-TRP SDM: This means a multi-TRP-based spatial resource division PDSCH transmission scheme. This is a method of receiving distributed layers from TRPs, and is not a repetition scheme, but may increase the reliability of PDSCH transmission in that the number of layers is increased to enable transmission at a lowered code rate. A terminal may apply two TCI states indicated through a TCI state field in DCI to two CDM groups indicated by a base station, respectively, so as to receive a PDSCH.
  -- Multi-TRP FDM scheme A: This means a multi-TRP-based frequency resource division PDSCH transmission scheme. This scheme provides one PDSCH transmission occasion and thus is not repetition like multi-TRP SDM. However, the amount of frequency resources is increased to lower a code rate and thus enable transmission with high reliability. Multi-TRP FDM scheme A may apply two TCI states indicated through a TCI state field in DCI to frequency resources not overlapping each other, respectively. In a case where a PRB bundling size is determined to be a wideband, if the number of RBs indicated by a frequency domain resource allocation field is N, a terminal may apply a first TCI state to a first ceil(N/2) number of RBs, and apply a second TCI state to the remaining floor(N/2) number of RBs to receive the RBs. Here, ceil(.) and floor(.) are operators indicating rounding up and down for one decimal place. If a PRB bundling size is determined to be 2 or 4, the terminal may apply the first TCI state to even-numbered PRGs and apply the second TCI state to odd-numbered PRGs to receive the PRGs.

-- Multi-TRP FDM scheme B: This means a multi-TRP-based frequency resource division PDSCH repetition scheme, and provides two PDSCH transmission occasions to repeat PDSCH transmission at the respective occasions. In the same way as multi-TRP FDM scheme A, multi-TRP FDM scheme B may also apply two TCI states indicated through a TCI state field in DCI to frequency resources not overlapping each other, respectively. In a case where a PRB bundling size is determined to be a wideband, if the number of RBs indicated by a frequency domain resource allocation field is N, a terminal may apply a first TCI state to a first ceil(N/2) number of RBs, and apply a second TCI state to the remaining floor(N/2) number of RBs to receive the RBs. Here, ceil(.) and floor(.) are operators indicating rounding up and down for one decimal place. If a PRB bundling size is determined to be 2 or 4, the terminal may apply the first TCI state to even-numbered PRGs and apply the second TCI state to odd-numbered PRGs to receive the PRGs.

-- Multi-TRP TDM scheme A: This means a multi-TRP-based time resource division intra-slot PDSCH repetition scheme. A terminal may have two PDSCH transmission occasions in one slot, and a first reception occasion may be determined based on the start symbol and the symbol length of a PDSCH indicated through a time domain resource allocation field in DCI. A start symbol of a second reception occasion of the PDSCH may be a position obtained by applying a symbol offset of the higher layer signaling StartingSymbolOffsetK to a last symbol of the first transmission occasion, and the transmission occasion may be determined to be as long as the indicated symbol length from the position. If the higher layer signaling StartingSymbolOffsetK is not configured, the symbol offset may be considered or determined to be 0.

-- Multi-TRP TDM scheme B: This means a multi-TRP-based time resource division inter-slot PDSCH repetition scheme. A terminal may have one PDSCH transmission occasion in one slot, and receive repetition, based on the same start symbol and the same symbol length of a PDSCH during a number of slots corresponding to the count of repetitionNumber indicated through a time domain resource allocation field in DCI. If repetitionNumber is 2, the terminal may receive PDSCH repetition in first and second slots by applying first and second TCI states thereto, respectively. If repetitionNumber is greater than 2, the terminal may use different TCI state application schemes according to which the higher layer signaling tciMapping is configured to be. If tciMapping is configured to be cyclicMapping, the terminal may apply first and second TCI states to first and second PDSCH transmission occasions, respectively, and also apply this TCI state application method to the remaining PDSCH transmission occasions in the same way. If tciMapping is configured to be sequenticalMapping, the terminal may apply a first TCI state to first and second PDSCH transmission occasions, apply a second TCI state to third and fourth PDSCH transmission occasions, and also apply this TCI state application method to the remaining PDSCH transmission occasions in the same way.

[Related to RLM RS]

Next, a method of selecting or determining a radio link monitoring reference signal (RLM RS) when the RLM RS is configured or not configured is described. A set of RLM RSs may be configured for each downlink bandwidth part of an SpCell by a base station for a terminal through RadioLinkMonitoringRS in the higher layer signaling RadioLinkMonitoringConfig, and a detailed higher layer signaling structure may follow Table 32.

[Table 32]

```
RadioLinkMonitoringConfig ::=          SEQUENCE {
failureDetectionResourcesToAddModList                                   SEQUENCE
(SIZE(1..maxNrofFailureDetectionResources)) OF RadioLinkMonitoringRS
OPTIONAL, -- Need N
failureDetectionResourcesToReleaseList                                  SEQUENCE
(SIZE(1..maxNrofFailureDetectionResources)) OF RadioLinkMonitoringRS-Id
OPTIONAL, -- Need N
beamFailureInstanceMaxCount                ENUMERATED {n1, n2, n3, n4, n5, n6,
n8, n10}                               OPTIONAL, -- Need R
beamFailureDetectionTimer                  ENUMERATED {pbfd1, pbfd2, pbfd3,
pbfd4, pbfd5, pbfd6, pbfd8, pbfd10}    OPTIONAL, -- Need R
...
}

RadioLinkMonitoringRS ::=              SEQUENCE {
radioLinkMonitoringRS-Id               RadioLinkMonitoringRS-Id,
purpose                                  ENUMERATED {beamFailure, rlf, both},
detectionResource                      CHOICE {
ssb-Index                               SSB-Index,
csi-RS-Index                            NZP-CSI-RS-ResourceId
},
...
}
```

Table 33 may represent configuration of an RLM RS for a particular usage or the number of selectable RLM RSs according to a maximum number of SSBs ($L_{max}$) per half frame. As shown in Table 33 below, $N_{LR-RLM}$ number of RSs may be used for link recovery or radio link monitoring according to an $L_{max}$ value, and $N_{RLM}$ number of RSs among the $N_{LR-RLM}$ number of RSs may be used for radio link monitoring.

[Table 33]

Table 5-1: $N_{LR-RLM}$ and $N_{RLM}$ as a function of maximum number $L_{max}$ of SS/PBCH blocks per half frame

| $L_{max}$ | $N_{LR-RLM}$ | $N_{RLM}$ |
|---|---|---|
| 4 | 2 | 2 |
| 8 | 6 | 4 |
| 64 | 8 | 8 |

If the higher layer signaling RadioLinkMonitoringRS has not been configured for the terminal, a TCI state for receiving a PDCCH is configured for a control resource set for the terminal, and the TCI state includes at least one CSI-RS, the terminal may select an RLM RS according to the following RLM RS selection methods.

- RLM RS selection method 1) If an activated TCI state to be used for PDCCH reception has one reference RS (i.e., one activated TCI state has only one of QCL-TypeA, B, and C), the terminal may select, as an RLM RS, the reference RS of the activated TCI state to be used for PDCCH reception.
- RLM RS selection method 2) If an activated TCI state to be used for PDCCH reception has two reference RSs (i.e., one activated TCI state has one of QCL-TypeA, B, and C and additionally has QCL-TypeD), the terminal may select, as an RLM RS, a reference RS of QCL-TypeD. The terminal may not expect that 2 QCL-TypeDs are configured for the one activated TCI state.
- RLM RS selection method 3) The terminal does not expect that an aperiodic or semi-persistent RS is selected as an RLM RS.
- RLM RS selection method 4) If $L_{max}$ = 4, the terminal may select $N_{RLM}$ number of RSs ($L_{max}$ is 4 and thus 2 RSs may be selected). Selection of an RLM RS is performed for among reference RSs of a TCI state configured for a control resource set for PDCCH reception, based on the RLM RS selection methods 1 to 3, is determined by giving high priority on a search space having a short period and connected to a control resource set, and is performed for reference RSs starting from reference RSs of a TCI state configured for a control resource set connected to a search space having the shortest period. If there are multiple control resource sets connected to multiple search spaces having the same period, RLM RS selection may be performed for reference RSs starting from a reference RS of a TCI state configured for the highest control resource set index.

FIG. 22 is a diagram illustrating an RLM RS selection process according to an embodiment of the disclosure. This diagram illustrates control resource set #1 to control resource set #3 22-05 to 22-07 connected to search space #1 to search space #4 22-01 to 22-04 having different periods in an activated downlink bandwidth part, and a reference RS of a TCI state configured for each control resource set. Based on RLM RS selection method 4, RLM RS selection uses a TCI state configured for a control resource set connected to a search space having the shorted period. However, search space #1 22-01 and search space #3 22-03 have the same period, and thus a reference RS of a TCI state configured for control resource set #2 having a higher index among control resource set #1 22-05 and control resource set #2 22-06 connected to the respective search spaces may be used as the highest priority in RLM RS selection.

In addition, the TCI state configured for control resource set #2 only has QCL-TypeA and the reference RS is a periodic RS, and thus P CSI-RS#2 22-10 may be firstly selected as an RLM RS by RLM RS selection methods 1 and 3. A reference RS of QCL-TypeD among reference RSs of a TCI state configured for control resource set #1 having the next priority may be a selection candidate according to RLM RS selection method 2. However, the reference RS of QCL-TypeD configured for control resource set #1 is a semi-persistent RS (22-09) and thus is not selected as an RLM RS according to RLM RS selection method 3. Therefore, reference RSs of a TCI state configured for control resource set #3 may be considered as the next priority, a reference RS of QCL-TypeD may be a selection candidate according to RLM RS selection method 2, and the reference RS of QCL-TypeD configured for control resource set #3 is a periodic RS, and thus P CSI-RS#4 22-12 may be secondly selected as an RLM RS by RLM RS selection method 3. Therefore, finally selected RLM RSs may be P CSI-RS#2 and P CSI-RS#4 (22-13).

For convenience in the following description of in disclosure, a cell, a transmission point, a panel, a beam, and/or a transmission direction, which is distinguishable by a higher layer/L1 parameter, such as TCI states or spatial relation information, or by an indicator, such as a cell ID, a TRP ID, or a panel ID, may be described collectively as a transmission reception point (TRP), a beam, or a TCI state. Therefore, in a practical application, a TRP, a beam, or a TCI state is able to be appropriately replaced with one of the terms.

Hereinafter, in the disclosure, a terminal may, when determining whether cooperative communication is applied, use various methods including a case where a PDCCH(s) allocating a PDSCH to which cooperative communication is applied has a particular format, a case where a PDCCH(s) allocating a PDSCH to which cooperative communication is applied includes a particular indicator indicating whether cooperative communication is applied, a case where aPDCCH(s) allocating a PDSCH to which cooperative communication is applied is scrambled by a particular RNTI, or a case where cooperative communication application is assumed in a particular interval indicated by a higher layer. Hereinafter, it will be assumed, for convenience of description, that NC-JT case refers to a case in which the UE receives a PDSCH to which cooperative communication is applied, based on conditions similar to those described above.

In the following description of the disclosure, upper layer signaling may refer to signaling corresponding to at least one signaling among the following signaling, or a combination of one or more thereof. Obviously, the example given above is not limiting.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof. Obviously, the example given above is not limiting.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through multiple embodiments, but they are not independent of each other, and one or more embodiments may be applied simultaneously or in combination.

<First embodiment: Single TCI state activation and indication method based on unified TCI scheme>

As an embodiment of the disclosure, a single TCI state indication and activation method based on a unified TCI scheme is described. The unified TCI scheme may mean a scheme of integral management through a TCI state instead of transmission and reception beam management schemes having been classified as a TCI state scheme used in downlink reception of a terminal and a spatial relation info scheme used in uplink transmission in conventional Rel-15 and 16. Therefore, in a case where a terminal receives an indication from a base station, based on the unified TCI scheme, the terminal may perform beam management even for uplink transmission by using a TCI state. If the higher layer signaling TCI-State having the higher layer signaling tci-stateId-r17 is configured for a terminal by a base station, the terminal may perform an operation based on the unified TCI scheme by using TCI-State. TCI-State may exist in two types including a joint TCI state and a separate TCI state.

The first type is a joint TCI state, and all TCI states to be applied to uplink transmission and downlink reception may be indicated to a terminal by a base station through one value of TCI-State. If joint TCI state-based TCI-state is indicated to the terminal, a parameter to be used in downlink channel estimation may be indicated to the terminal by using an RS corresponding to qcl-Type1 in the joint TCI state-based TCI-state, and a parameter to be used as a downlink reception beam or reception filter may be indicated thereto by using an RS corresponding to qcl-Type2. If joint TCI state-based TCI-state is indicated to the terminal, a parameter to be used as an uplink transmission beam or transmission filter may be indicated to the terminal by using an RS corresponding to qcl-Type2 in a corresponding joint DL/UL TCI state-based TCI-state. If a joint TCI state is indicated to the terminal, the terminal may apply the same beam to uplink transmission and downlink reception.

The second type is a separate TCI state, and a UL TCI state to be applied to uplink transmission and a DL TCI state to be applied to downlink reception may be individually indicated to a terminal by a base station. If a UL TCI state is indicated to the terminal, a parameter to be used as an uplink transmission beam or transmission filter may be indicated to the terminal by using a reference RS or a source RS configured in the UL TCI state. If a DL TCI state is indicated to the terminal, a parameter to be used in downlink channel estimation may be indicated to the terminal by using an RS corresponding to qcl-Type1 configured in the DL TCI state, and a parameter to be used as a downlink reception beam or reception filter may be indicated thereto by using an RS corresponding to qcl-Type2.

If a DL TCI state and a UL TCI state are indicated to the terminal together, a parameter to be used as an uplink transmission beam or transmission filter may be indicated to the terminal by using a reference RS or a source RS configured in the UL TCI state, a parameter to be used in downlink channel estimation may be indicated to the terminal by using an RS corresponding to qcl-Type1 configured in the DL TCI state, and a parameter to be used as a downlink reception beam or reception filter may be indicated thereto using an RS corresponding to qcl-Type2. If the reference RSs or source RSs configured in the DL TCI state and UL TCI state indicated to the terminal are different from each other, the terminal may apply individual beams to uplink transmission and downlink reception, based on the indicated UL TCI state and DL TCI state.

A maximum of 128 joint TCI states may be configured for a particular bandwidth part in a particular cell for the terminal by the base station through higher layer signaling, a maximum of 64 or 128 DL TCI states, which are separate TCI states, may be configured for a particular bandwidth part in a particular cell through higher layer signaling, based on a terminal capability report, and a DL TCI state among separate TCI states and a joint TCI state may use the same higher layer signaling structure. For example, if 128 joint TCI states are configured and 64 DL TCI states of separate TCI states are configured, the 64 DL TCI states may be included in the 128 joint TCI states.

A maximum of 32 or 64 UL TCI states, which are separate TCI states, may be configured for a particular bandwidth part in a particular cell through higher layer signaling, based on a terminal capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states. As described above, using different or identical higher layer signaling structures may be defined in a specification, or may be distinguished through another higher layer signaling configured by a base station, based on a terminal capability report including information on a usage scheme which a terminal is able to support among two types of usage schemes.

A transmission/reception beam-related indication may be received by a terminal in a unified TCI scheme by using one scheme among a joint TCI state and a separate TCI state configured by a base station. Whether to use one of a joint TCI state and a separate TCI state may be configured for a terminal by a base station through higher layer signaling.

A terminal may receive a transmission/reception beam-related indication through higher layer signaling by using one scheme selected from among a joint TCI state and a separate TCI state, and a method of transmission/reception beam-related indication by a base station may be classified as two methods including a MAC-CE-based indication method and a MAC-CE-based activation and DCI-based indication method.

In a case where a terminal receives a transmission/reception beam-related indication through higher layer signaling by using a joint TCI state scheme, the terminal may receive a MAC-CE indicating a joint TCI state from a base station to perform a transmission/reception beam application operation, and the base station may schedule reception of a PDSCH including the MAC-CE to the terminal through a PDCCH. If there is one joint TCI state included in a MAC-CE, the terminal may determine an uplink transmission beam or transmission filter and a downlink reception beam or reception filter by using the indicated joint TCI state after 3 ms after PUCCH transmission including HARQ-ACK information meaning whether a PDSCH including the MAC-CE has been successfully received. If there are two or more joint TCI states included in a MAC-CE, the terminal may identify that multiple joint TCI states indicated by the MAC-CE correspond to respective codepoints of a TCI state field of DCI format 1_1 or 1_2 after 3 ms after PUCCH transmission including HARQ-ACK information meaning whether a PDSCH including the MAC-CE has been successfully received, and activate the indicated joint TCI states. Thereafter, the terminal may receive DCI format 1_1 or 1_2 to apply one joint TCI state indicated by a TCI state field in the DCI to uplink transmission and downlink reception beams. DCI format 1_1 or 1_2 may include downlink data channel scheduling information (with DL assignment) or not include same (without DL assignment).

In a case where a terminal receives a transmission/reception beam-related indication through higher layer signaling by using a separate TCI state scheme, the terminal may receive a MAC-CE indicating a separate TCI state from a base station to perform a transmission/reception beam application operation, and the base station may schedule reception of a PDSCH including the MAC-CE to the terminal through a PDCCH. If a MAC-CE includes one separate TCI state set, the terminal may determine an uplink transmission beam or transmission filter and a downlink reception beam or reception filter by using separate TCI states included in the indicated separate TCI state set after 3 ms after PUCCH transmission including HARQ-ACK information meaning whether a corresponding PDSCH has been successfully received. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If a MAC-CE includes two or more separate TCI state sets, the terminal may identify that multiple separate TCI state sets indicated by the MAC-CE correspond to respective codepoints of a TCI state field of DCI format 1_1 or 1_2 after 3 ms after PUCCH transmission including HARQ-ACK information meaning whether a corresponding PDSCH has been successfully received, and may activate the indicated separate TCI state sets. Each codepoint of the TCI state field of DCI format 1_1 or 1_2 may indicate one DL TCI state, indicate one UL TCI state, or indicate one DL TCI state and one UL TCI state. The terminal may receive DCI format 1_1 or 1_2 to apply a separate TCI state set indicated by a TCI state field in the DCI to uplink transmission and downlink reception beams. DCI format 1_1 or 1_2 may include downlink data channel scheduling information (with DL assignment) or not include same (without DL assignment).

A MAC-CE used to activate or indicate a single joint TCI state and a separate TCI state described above may exist for each of joint and separate TCI state schemes, or one MAC-CE may be used to activate or indicate a TCI state, based on one of joint and separate TCI state schemes. Through the following drawings to be described, various MAC-CE structures for activation and indication of a joint or separate TCI state may be considered.

FIG. 23 is a diagram illustrating a MAC-CE structure for joint TCI state activation and indication in a wireless communication system according to an embodiment of the disclosure. In FIG. 23, if the value of an S field 2300 is 1, a corresponding MAC-CE may indicate one joint TCI state and may have a length only up to the second octet. If the value of the S field 2300 is 0, the MAC-CE may include information on two or more joint TCI states and activate respective joint TCI states on respective codepoints of a TCI state field of DCI format 1_1 or 1_2, and a maximum of 8 joint TCI states may be activated. TCI states indicated through a TCI state $ID_0$ field 2315 to a TCI state $ID_{N-1}$ field 2325 may correspond to 0th to (N-1)th codepoints of a TCI state field of DCI format 1_1 or 1_2, respectively. A serving cell ID field 2305 and a BWP ID field 2310 may indicate a serving cell ID and a bandwidth part ID, respectively.

FIG. 24 is a diagram illustrating another MAC-CE structure for joint TCI state activation and indication in a wireless communication system according to an embodiment of the disclosure. In FIG. 24, a serving cell ID field 2405 and a BWP ID field 2410 may indicate a serving cell ID and a bandwidth part ID, respectively. An R field 2400 may be a 1-bit reserve field not including indication information. Respective fields existing in the second to Nth octets are a bitmap indicating joint TCI states configured through higher layer signaling. For example, $T_7$ 2415 may be a field indicating whether an 8th joint TCI state configured through higher layer signaling is indicated. If the number of joint TCI states transferred through a MAC-CE structure of FIG. 24 is 1, the terminal may apply the joint TCI state indicated by the MAC-CE to uplink transmission and downlink reception beams. If the number of joint TCI states transferred through a MAC-CE structure is 2 or greater, the terminal may identify that respective joint TCI states indicated by the MAC-CE correspond to respective codepoints of a TCI state field of DCI format 1_1 or 1_2 and activate each joint TCI state, and the indicated joint TCI states may be activated starting from the joint TCI state having the lowest index by sequentially corresponding to codepoints of the TCI state field starting from a codepoint having the lowest index.

FIG. 25 is a diagram illustrating another MAC-CE structure for joint TCI state activation and indication in a wireless communication system according to an embodiment of the disclosure. In FIG. 25, a serving cell ID field 2505 and a BWP ID field 2510 may indicate a serving cell ID and a bandwidth part ID, respectively. For example, if the value of an S field 2500 is 1, a corresponding MAC-CE may indicate one joint TCI state and may have a length only up to the second octet, and the joint TCI state may be indicated to the terminal through a TCI state $ID_0$ field 2520.

If, for example, the value of the S field 2500 is 0, the MAC-CE may include information on two or more joint TCI states, respective codepoints of a TCI state field of DCI format 1_1 or 1_2 may activate respective joint TCI states, a maximum of 8 joint TCI states may be activated, there are no second octet, and there may be the first octet and the third octet to the (N-1)th octet on the MAC-CE structure of FIG. 25. Respective fields existing in the third to (N+1)th octets are a bitmap indicating joint TCI states configured through higher layer signaling. For example, $T_{15}$ 2525 may be a field indicating whether a 16th joint TCI state configured through higher layer signaling is indicated.

If the number of joint TCI states transferred through a MAC-CE structure of FIG. 25 is 1, the terminal may apply the joint TCI state indicated by the MAC-CE to uplink transmission and downlink reception beams. If the number of joint TCI states transferred through a MAC-CE structure is 2 or greater, the terminal may identify that respective joint TCI states indicated by the MAC-CE correspond to respective codepoints of a TCI state field of DCI format 1_1 or 1_2 and activate each joint TCI state, and the indicated joint TCI states may be activated starting from the joint TCI state having the lowest index by sequentially corresponding to codepoints of the TCI state field starting from a codepoint having the lowest index.

FIG. 26 is a diagram illustrating a MAC-CE structure for separate TCI state activation and indication in a wireless communication system according to an embodiment of the disclosure. In FIG. 26, a serving cell ID field 2605 and a BWP ID field 2610 may indicate a serving cell ID and a bandwidth part ID, respectively. If, for example, the value of an S field 2600 is 1, a corresponding MAC-CE may indicate one separate TCI state set and may include only octets up to the third octet.

If, for example, the value of the S field 2600 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_0$ field 2615 may be a field indicating which separate TCI states which the indicated separate TCI state set includes, and for example, if the value of the $C_0$ field is "00", this means reserve, if same is "01", this means one DL TCI state, if same is "10", this means one UL TCI state, and if same is " 11", this means that one DL TCI state and one UL TCI state are indicated, but the values are not limited to these specific values. A TCI state $ID_{D,0}$ field 2620 and a TCI state $ID_{U,0}$ field 2625 may mean a DL TCI state and a UL TCI state which may be included and indicated in the 0th separate TCI state set, if the value of the $C_0$ field is "01", the TCI state $ID_{D,0}$ field 2620 may indicate a DL TCI state and the TCI state $ID_{U,0}$ field 2625 may be disregarded, if the value of the $C_0$ field is "10", the TCI state $ID_{D,0}$ field 2620 may be disregarded and the TCI state $ID_{U,0}$ field 2625 may indicate a UL TCI state, and if the value of the $C_0$ field is " 11", the TCI state $ID_{D,0}$ field 2620 indicates a DL TCI state and the TCI state $ID_{U,0}$ field 2625 may indicate a UL TCI state.

FIG. 26 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{D,0}$ field 2620 and the TCI state $ID_{U,0}$ field 2625 may be 7 bits for representing a maximum of 128 TCI states. Therefore, in order to use 7 bits as the TCI state $ID_{D,0}$ field 2620, 6 bits 2620 may be allocated to the second octet and 1 bit 2621 may be allocated to the third octet. In addition, FIG. 26 may illustrate a case where a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the first bit of the TCI state $ID_{U,0}$ field 2625 may be fixed to be 0 or 1, and bits for representing actual UL TCI states may correspond to only a total of 6 bits from the second bit to the seventh bit.

FIG. 27 is a diagram illustrating another MAC-CE structure for separate TCI state activation and indication in a wireless communication system according to an embodiment of the disclosure. In FIG. 27, a serving cell ID field 2705 and a BWP ID field 2710 may indicate a serving cell ID and a bandwidth part ID, respectively. If, for example, the value of an S field 2700 is 1, a corresponding MAC-CE may indicate one separate TCI state set and may include only octets up to the third octet. If, for example, the value of the S 2700 is 0, the MAC-CE may include information on two or more separate TCI state sets, respective codepoints of a TCI state field of DCI format 1_1 or 1_2 may correspond to respective separate TCI state sets to activate same, and a maximum of 8 separate TCI state sets may be activated. A $C_{D,0}$ field 2715 may be a field indicating whether an indicated separate TCI state set includes a DL TCI state, if the value of the $C_{D,0}$ field 2715 is 1, the separate TCI state set includes a DL TCI state and the DL TCI state may be indicated through a TCI state $ID_{D,0}$ field 2725, and if the value of the $C_{D,0}$ field 2715 is 0, the separate TCI state set does not include a DL TCI state and the TCI state $ID_{D,0}$ field 2725 may be disregarded. Similarly, a $C_{U,0}$ field 2720 may be a field indicating whether an indicated separate TCI state set includes a UL TCI state, if the value of the field is 1, the separate TCI state set includes a UL TCI state and the UL TCI state may be indicated through a TCI state $ID_{U,0}$ field 2730, and if the value of the field is 0, the separate TCI state set does not include a UL TCI state and the TCI state $ID_{D,0}$ field 2730 may be disregarded.

FIG. 27 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{D,0}$ field 2725 and the TCI state $ID_{U,0}$ field 2730 may be 7 bits for representing a maximum of 128 TCI states. In addition, FIG. 27 may illustrate an example of a MAC CE when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the first bit of the TCI state $ID_{U,0}$ field 2625 may be fixed to be 0 or 1, and bits for representing actual UL TCI states may correspond to only a total of 6 bits from the second bit to the seventh bit.

FIG. 28 is a diagram illustrating another MAC-CE structure for separate TCI state activation and indication in a wireless communication system according to an embodiment of the disclosure. In FIG. 28, a serving cell ID field 2805 and a BWP ID field 2810 may indicate a serving cell ID and a bandwidth part ID, respectively. If, for example, the value of an S field 2800 is 1, a corresponding MAC-CE may indicate one separate TCI state set and may include only octets up to the third octet. The MAC-CE structure of FIG. 28 may use two octets to indicate one separate TCI state set, and if the separate TCI state set includes a DL TCI state, the first octet among the two octets always indicates a DL TCI state and the second octet may always indicate a UL TCI state. Alternatively, this sequence may also be changeable.

If, for example, the value of the S field 2800 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_{0,0}$ field 2815 may have the meaning to distinguish whether a TCI state indicated by a TCI state $ID_{0,0}$ field 2825 is a DL TCI state or a UL TCI state, and if the value of the field is 1, the TCI state means a DL TCI state, the DL TCI state may be indicated through the TCI state $ID_{0,0}$ field 2825, and there may be a third octet. In this case, if the value of a $C_{1,0}$ field 2820 is 1, a UL TCI state may be indicated through a TCI state $ID_{1,0}$ field 2830, and if the value of the $C_{1,0}$ field 2820 is 0, the TCI state $ID_{1,0}$ field 2830 may be disregarded. If the value of the $C_{0,0}$ field 2815 is 0, a UL TCI state may be indicated through the TCI state $ID_{0,0}$ field 2825, and the third octet may not exist. This embodiment merely corresponds to an example.

FIG. 28 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{0,0}$ field 2825 and the TCI state $ID_{1,0}$ field 2830 may be 7 bits for representing a maximum of 128 TCI states. In addition, FIG. 28 may illustrate an example of a MAC CE when a UL TCI state among separate TCI states uses, as described above, a higher layer signaling structure different from that of a DL TCI state among separate TCI states and a joint TCI state. Accordingly, the TCI state $ID_{0,0}$ field 2825 may have 7 bits capable of representing both 6 bits for representing a maximum of 64 UL TCI states and 7 bits for representing a maximum of 128 DL TCI states. If the value of the $C_{1,0}$ field 2815 is 1 and thus the TCI state $ID_{0,0}$ field 2825 indicates a UL TCI state, the first bit of the TCI state $ID_{0,0}$ field 2825 may be fixed to be 0 or 1, and bits for representing actual UL TCI states may correspond to only a total of 6 bits from the second bit to the seventh bit.

FIG. 29 is a diagram illustrating another MAC-CE structure for separate TCI state activation and indication in a wireless communication system according to an embodiment of the disclosure. In FIG. 29, a serving cell ID field 2905 and a BWP ID field 2910 may indicate a serving cell ID and a bandwidth part ID, respectively. If, for example, the value of an S field 2900 is 1, a corresponding MAC-CE may indicate one separate TCI state set and may include only octets up to the third octet.

If, for example, the value of the S field 2900 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_0$ field 2915 may be a field indicating which separate TCI states which an indicated separate TCI state set includes, if the value of the $C_0$ field is "00", this means reserve, if same is "01", this means one DL TCI state, if same is "10", this means one UL TCI state, and if same is "11", this means that one DL TCI state and one UL TCI state are indicated, but the disclosure is not limited by these specific values. A TCI state $ID_{U,0}$ field 2920 and a TCI state $ID_{D,0}$ field 2925 may mean a UL TCI state and a DL TCI state which may be included and indicated in the 0th separate TCI state set, if the value of the $C_0$ field 2915 is "01", the TCI state $ID_{D,0}$ field 2925 may indicate a DL TCI state and the TCI state $ID_{U,0}$ field 2920 may be disregarded, if the value of the $C_0$ field 2915 is "10", the third octet may be disregarded and the TCI state $ID_{U,0}$ field 2920 may indicate a UL TCI state, and if the value of the $C_0$ field 2915 is "11", the TCI state $ID_{D,0}$ field 2925 indicates a DL TCI state and the TCI state $ID_{U,0}$ field 2920 may indicate a UL TCI state.

FIG. 29 may illustrate an example of a MAC-CE used when a UL TCI state among separate TCI states uses, as described above, a higher layer signaling structure different from that of a DL TCI state among separate TCI states and a joint TCI state. Accordingly, the length of the TCI state $ID_{D,0}$ field 2920 may be 7 bits for representing a maximum of 128 TCI states, and the length of the TCI state $ID_{U,0}$ field 2925 may be 6 bits for representing a maximum of 64 TCI states.

FIG. 30 is a diagram illustrating a MAC-CE structure for joint and separate TCI state activation and indication in a wireless communication system according to an embodiment of the disclosure. In FIG. 30, a serving cell ID field 3005 and a BWP ID field 3010 may indicate a serving cell ID and a bandwidth part ID, respectively. If, for example, the value of a J field 3000 is 1, a corresponding MAC-CE may indicate a joint TCI state and if the same is 0, the MAC-CE may indicate a separate TCI state set.

- If the MAC-CE indicates a joint TCI state, all the odd-numbered octets (the third octet, the fifth octet, ...) except for the first octet may be disregarded. A $C_{0,0}$ field 3015 includes whether the MAC-CE indicates one joint TCI state, or information on two or more TCI states and respective codepoints of a TCI state field of DCI format 1_1 or 1_2 activate respective TCI states. If the value of the $C_{0,0}$ field 3015 is 1, the MAC-CE may indicate one joint TCI state and there may be no octets starting from the third octet, and if the value is 0, two or more joint TCI states indicated by the MAC-CE may correspond to respective codepoints of a TCI state field of DCI format 1_1 or 1_2 and be activated. TCI state $ID_{0,0}$ may mean the indicated first joint TCI state.
- In a case where the MAC-CE indicates a separate TCI state set, for example, the $C_{0,0}$ field 3015 may have the meaning to distinguish whether a TCI state indicated by a TCI state $ID_{0,0}$ field 3025 is a DL TCI state or a UL TCI state, and if the value of the field is 1, the TCI state means a DL TCI state, the DL TCI state may be indicated through the TCI state $ID_{D,0}$ field 3025, and there may be a third octet. In this case, if the value of a $C_{1,0}$ field 3015 is 1, a UL TCI state may be indicated through a TCI state $ID_{1,0}$ field 3030, and if the value of the $C_{1,0}$ field 3015 is 0, the TCI state $ID_{1,0}$ field 3030 may be disregarded. If the value of the $C_{0,0}$ field 3015 is 0, a UL TCI state may be indicated through the TCI state $ID_{0,0}$ field 3025, and the third octet may not exist. FIG. 30 may illustrate an example of a MAC-CE used when a UL TCI state among separate TCI states uses, as described above, a higher layer signaling structure identical to that of a DL TCI state among separate TCI states and a joint TCI state. Accordingly, the length of the TCI state $ID_{0,0}$ field 3025 and the TCI state $ID_{1,0}$ field 3030 may be 7 bits for representing a maximum of 128 TCI states. In addition, FIG. 30 may illustrate an example of a MAC CE used when a UL TCI state among separate TCI states uses, as described above, a higher layer signaling structure different from that of a DL TCI state among separate TCI states and a joint TCI state. Accordingly, the TCI state $ID_{0,0}$ field 3025 may use 7 bits capable of representing both 6 bits for representing a maximum of 64 UL TCI states and 7 bits for representing a maximum of 128 DL TCI states. If the value of the $C_{1,0}$ field 3015 is 1 and thus the TCI state $ID_{0,0}$ field 3025 indicates a UL TCI state, the first bit of the TCI state $ID_{0,0}$ field 3025 may be fixed to be 0 or 1, and bits for representing actual UL TCI states may correspond to only a total of 6 bits from the second bit to the seventh bit.

FIG. 31 is a diagram illustrating another MAC-CE structure for joint and separate TCI state activation and indication in a wireless communication system according to an embodiment of the disclosure. In FIG. 31, a serving cell ID field 3105 and a BWP ID field 3110 may indicate a serving cell ID and a bandwidth part ID, respectively. If, for example, the value of a J field 3100 is 1, a corresponding MAC-CE may indicate a joint TCI state and if the same is 0, the MAC-CE may indicate a separate TCI state set.

- If the MAC-CE indicates a joint TCI state, all the even-numbered octets (the second octet, the fourth octet, ...) except for the first octet may be disregarded. An S field 3121 indicates whether the MAC-CE indicates one joint TCI state, or two or more TCI states correspond to respective codepoints of a TCI state field of DCI format 1_1 or 1_2 and are activated. If the value of the S field 3121 is 1, the MAC-CE may indicate one joint TCI state and there may be no octets starting from the third octet, and if the value is 0, the MAC-CE may include information on two or more joint TCI states and respective codepoints of a TCI state field of DCI format 1_1 or 1_2 may activate respective joint TCI states. TCI state $ID_{D,0}$ may mean the indicated first joint TCI state.

- If the MAC-CE indicates a separate TCI state set, a $C_0$ field 3115 may be a field indicating which separate TCI states which the indicated separate TCI state set includes, if the value of the $C_0$ field 3115 is "00", this means reserve, if same is "01", this means one DL TCI state, if same is "10", this means one UL TCI state, and if same is "11", this means that one DL TCI state and one UL TCI state are indicated. The values are not limited to the above example and merely correspond to an example, and the disclosure is not limited by the example. A TCI state $ID_{U,0}$ field 3120 and a TCI state $ID_{D,0}$ field 3125 may mean a UL TCI state and a DL TCI state which may be included and indicated in the 0th separate TCI state set, if the value of the $C_0$ field 3115 is "01", the TCI state $ID_{D,0}$ field 3125 may indicate a DL TCI state and the TCI state $ID_{U,0}$ field 3120 may be disregarded, if the value of the $C_0$ field 3115 is "10", the TCI state $ID_{U,0}$ field 3120 may indicate a UL TCI state, and if the value of the $C_0$ field 3115 is "11", the TCI state $ID_{D,0}$ field 3125 indicates a DL TCI state and the TCI state $ID_{U,0}$ field 3120 may indicate a UL TCI state. If the value of the $S_0$ field 3121 is 1, the MAC-CE may indicate one separate TCI state and there may be no octets starting from the fourth octet, and if the value of the $S_0$ field 3121 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. In a case where, for example, the value of the $S_0$ field 3121 is 0, if the values of $C_1$, ..., and $C_{N-1}$ fields are "10", this means that only UL TCI states are indicated and thus the fifth, seventh, ..., and M-th octets may be disregarded. Alternatively, the $S_0$ field 3121 may be information indicating whether there is an octet for a next separate TCI state set. For example, if the value of an $S_n$ field is 1, there may be no next octet, and if the value of the $S_n$ field is 0, there may be a next octet including $C_{n+1}$ and TCI state $ID_{U,N+1}$.
- FIG. 31 may illustrate an example of a MAC-CE when a UL TCI state among separate TCI states uses, as described above, a higher layer signaling structure different from that of a DL TCI state among separate TCI states and a joint TCI state. Accordingly, the length of the TCI state $ID_{D,0}$ field 3120 may be 7 bits for representing a maximum of 128 TCI states, and the length of the TCI state $ID_{U,0}$ field 3125 may be 6 bits for representing a maximum of 64 TCI states.

In a case where a terminal receives a transmission/reception beam-related indication through higher layer signaling by using a joint TCI state scheme or a separate TCI state scheme, the terminal may receive a PDSCH including a MAC-CE indicating a joint TCI state or separate TCI state from a base station to perform application to a transmission/reception beam. If the number of joint TCI states or separate TCI state sets included in a MAC-CE is 2 or greater, the terminal may identify, as described above, that the multiple joint TCI states or separate TCI state sets separate TCI state sets indicated by the MAC-CE correspond to respective codepoints of a TCI state field of DCI format 1_1 or 1_2 after 3 ms after PUCCH transmission including HARQ-ACK information meaning whether a corresponding PDSCH has been successfully received, and may activate the indicated joint TCI states or separate TCI state sets. Then, the terminal may receive DCI format 1_1 or 1_2 and apply one joint TCI state or one separate TCI state set indicated by a TCI state field in the DCI to uplink transmission and downlink reception beams. DCI format 1_1 or 1_2 may include downlink data channel scheduling information (with DL assignment) or not include same (without DL assignment).

FIG. 32 is a diagram illustrating a beam application time (BAT) which may be considered when a unified TCI scheme is used in a wireless communication system according to an embodiment of the disclosure. As described above, a terminal may receive, from a base station, DCI format 1_1 or 1_2 including or not including downlink data channel scheduling information (with DL assignment or without DL assignment), and apply one joint TCI state or one separate TCI state set indicated by a TCI state field in the DCI to uplink transmission and downlink reception beams.

- DCI format 1_1 or 1_2 with DL assignment (3200): If a terminal receives, from a base station, DCI format 1_1 or 1_2 including downlink data channel scheduling information (3201) so that one joint TCI state or one separate TCI state set based on a unified TCI scheme is indicated, the terminal may receive a PDSCH scheduled based on the received DCI (3205), and transmit a PUCCH including a HARQ-ACK indicating whether reception of the DCI and the PDSCH is successful (3210). The HARQ-ACK may include whether reception is successful, for both the DCI and the PDSCH, if the terminal fails to receive at least one of the DCI and the PDSCH, the terminal may transmit a NACK, and if the terminal succeeds in receiving both of them, the terminal may transmit an ACK.
- DCI format 1_1 or 1_2 without DL assignment (3250): If a terminal receives, from a base station, DCI format 1_1 or 1_2 not including downlink data channel scheduling information (3255) so that one joint TCI state or one separate TCI state set based on a unified TCI scheme is indicated, the terminal may assume the following items for the DCI.

-- The DCI includes a CRC scrambled using a CS-RNTI.
-- The values of all bits assigned to all fields used as redundancy version fields are 1.
-- The values of all bits assigned to all fields used as modulation and coding scheme (MCS) fields are 1.
-- The values of all bits assigned to all fields used as new data indication (NDI) fields are 0.
-- In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The terminal may transmit a PUCCH including a HARQ-ACK indicating whether DCI format 1_1 or 1_2 on which the items described above are assumed is successfully received (3260).

- With respect to both DCI format 1_1 or 1_2 with DL assignment (3200) and without DL assignment (3250), if the new TCI state indicated through DCI 3201 or 3255 is the same as a TCI state that has previously been indicated and thus been being applied to uplink transmission and downlink reception beams, the terminal may maintain the previously applied TCI state. If the new TCI state is different from the previously indicated TCI state, the terminal may determine, as a time point for application of the joint TCI state or separate TCI state set, which is indicatable by a TCI state field included in the DCI, a time point 3230 or 3280 after the first slot 3220 or 3270 after passage of a time interval as long as a beam application time (BAT) 3215 or 3265 after PUCCH transmission, and may use the previously indicated TCI state at a time point 3225 or 3285 before the slot 3220 or 3270.
- With respect to both DCI format 1_1 or 1_2 with DL assignment (3200) and without DL assignment (3250), the BAT is a particular number of OFDM symbols and may be configured through higher layer signaling, based on terminal capability report information, and numerologies of the BAT and the first slot after the BAT may be determined based on the smallest numerology among all cells to which a joint TCI state or separate TCI state set indicated through DCI is applied.

A terminal may apply one joint TCI state indicated through a MAC-CE or DCI to reception for control resource sets connected to all terminal-specific particular search spaces, reception of a PDSCH scheduled by a PDCCH transmitted from the control resource sets and transmission of a PUSCH, and transmission of all PUCCH resources.

If one separate TCI state set indicated through a MAC-CE or DCI includes one DL TCI state, a terminal may apply the one separate TCI state set to reception for control resource sets connected to all terminal-specific particular search spaces and to reception of a PDSCH scheduled by a PDCCH transmitted from the control resource sets, and apply a previously indicated UL TCI state to all PUSCH and PUCCH resources.

If one separate TCI state set indicated through a MAC-CE or DCI includes one UL TCI state, a terminal may apply the one separate TCI state set to all PUSCH and PUCCH resources, and apply a previously indicated DL TCI state to reception for control resource sets connected to all terminal-specific particular search spaces and reception of a PDSCH scheduled by a PDCCH transmitted from the control resource sets.

If one separate TCI state set indicated through a MAC-CE or DCI includes one DL TCI state and one UL TCI state, a terminal may apply the DL TCI state to reception for control resource sets connected to all terminal-specific particular search spaces and reception of a PDSCH scheduled by a PDCCH transmitted from the control resource sets, and apply the UL TCI state to all PUSCH and PUCCH resources.

In the examples of a MAC CE described above with reference to FIG. 23 to FIG. 31, it is possible for at least one of elements thereof to be combined.

<Second embodiment: Multi-TCI state indication and activation method based on unified TCI scheme>

As an embodiment of the disclosure, a multi-TCI state indication and activation method based on a unified TCI scheme is described. A multi-TCI state indication and activation method may indicate a case where the number of indicated joint TCI states is expanded to 2 or greater and a case where the number of each of DL TCI states and UL TCI states included in one separate TCI state set is expanded to 2 or greater. If the number of each of DL TCI states and UL TCI states includible in one separate TCI state set is up to 2, an available combination of DL TCI states and UL TCI states which one separate TCI state set is able to have may be a total of 8 ({DL,UL} = {0,1}, {0,2}, {1,0}, {1,1}, {1,2}, {2,0}, {2,1}, {2,2}, here, each number indicates the number of TCI states).

If multiple TCI states are indicated to a terminal by a base station, based on a MAC-CE, the terminal may receive two or more joint TCI states or one separate TCI state set from the base station through the MAC-CE. The base station may schedule reception of a PDSCH including the MAC-CE for the terminal through a PDCCH, and the terminal may determine an uplink transmission beam or transmission filter and a downlink reception beam or reception filter, based on the indicated two or more joint TCI states or one separate TCI state set after 3 ms after transmission of a PUCCH including HARQ-ACK information indicating whether reception of the PDSCH including the MAC-CE is successful.

If multiple TCI states are indicated to the terminal by the base station, based on DCI format 1_1 or 1_2, each codepoint of one TCI state field in the DCI format 1_1 or 1_2 may indicate two or more joint TCI states or two or more separate TCI state sets. In this case, the terminal may receive a MAC-CE from the base station and activate two or more joint TCI states or two or more separate TCI state sets corresponding to each codepoint of one TCI state field in the DCI format 1_1 or 1_2. The base station may schedule reception of a PDSCH including the MAC-CE for the terminal through a PDCCH, and the terminal may activate pieces of TCI state information included in the MAC-CE after 3 ms after transmission of a PUCCH including HARQ-ACK information indicating whether reception of the PDSCH including the MAC-CE is successful.

If multiple TCI states are indicated to the terminal by the base station, based on DCI format 1_1 or 1_2, there may be two or more TCI state fields in the DCI format 1_1 or 1_2 and one of two or more joint TCI states or two or more separate TCI state sets may be indicated based on each TCI state field. In this case, the terminal may receive a MAC-CE from the base station and activate a joint TCI state or a separate TCI state set corresponding to each codepoint of the two or more TCI state fields in the DCI format 1_1 or 1_2. The base station may schedule reception of a PDSCH including the MAC-CE for the terminal through a PDCCH, and the terminal may activate pieces of TCI state information included in the MAC-CE after 3 ms after transmission of a PUCCH including HARQ-ACK information indicating whether reception of the PDSCH including the MAC-CE is successful. Whether there are one or more additional TCI state fields may be configured for the terminal through higher layer signaling, and the bit length of an additional TCI state field may be the same as an existing TCI state field, or may be adjusted based on higher layer signaling.

A transmission/reception beam-related indication may be received by the terminal in a unified TCI scheme by using one scheme among a joint TCI state and a separate TCI state configured by the base station. Using one of a joint TCI state and a separate TCI state may be configured for the terminal by the base station through higher layer signaling. A separate TCI state indication may be configured for the terminal through higher layer signaling such that the bit length of a TCI state field in DCI format 1_1 or 1_2 is a maximum of 4.

A MAC-CE used to activate or indicate multiple joint TCI states and separate TCI states described above may exist for each of joint and separate TCI state schemes, one MAC-CE may be used to activate or indicate a TCI state, based on one of joint and separate TCI state schemes, or MAC-CEs used in an MAC-CE-based indication scheme and an MAC-CE-based activation scheme may share one MAC-CE structure or use individual MAC-CE structures. Through the following drawings to be described, various MAC-CE structures for activation and indication of multiple joint or separate TCI states may be considered. In the following drawings, for convenience of explanation, 2 TCI states being activated or indicated are considered, but the drawings may be similarly applied to three or more TCI states.

FIG. 33 is a diagram illustrating a MAC-CE structure for activation and indication of multiple joint TCI states in a wireless communication system according to an embodiment of the disclosure. In FIG. 33, a serving cell ID field 3305 and a BWP ID field 3310 may indicate a serving cell ID and a bandwidth part ID, respectively. If, for example, the value of an S field 3300 is 1, a corresponding MAC-CE may indicate one or two joint TCI states and may have a length only up to the third octet. In this case, if the value of a $C_0$ field 3315 is 0, there are no third octet and one joint TCI state may be indicated through a TCI state $ID_{0,0}$ field 3320, and if the value of the $C_0$ field 3315 is 1, there is the third octet and two joint TCI states may be indicated through the TCI state $ID_{0,0}$ field 3320 and a TCI state $ID_{1,0}$ field 3325, respectively.

If, for example, the value of the S field 3300 is 0, the MAC-CE may activate one or two joint TCI states corresponding to each codepoint of a TCI state field of DCI format 1_1 or 1_2 or activate one joint TCI state corresponding to each codepoint of two TCI state fields of DCI format 1_1 or 1_2, and joint TCI states for a maximum of 8 codepoints may be activated. In a case where one or two joint TCI states are activated for one codepoint of one TCI state field, a TCI state $ID_{0,Y}$ field and a TCI state $ID_{1,Y}$ field may indicate first and second joint TCI states among two joint TCI states activated on the Y-th codepoint of the TCI state field, respectively. In a case where one joint TCI state is activated for one codepoint of two TCI state fields, a TCI state $ID_{0,Y}$ field and a TCI state $ID_{1,Y}$ field may indicate respective joint TCI states activated on the Y-th codepoints of first and second TCI state fields.

FIG. 34 is a diagram illustrating a MAC-CE structure for activation and indication of multiple separate TCI states in a wireless communication system according to an embodiment of the disclosure. In FIG. 34, a serving cell ID field 3405 and a BWP ID field 3410 may indicate a serving cell ID and a bandwidth part ID, respectively. If the value of an S field 3400 is 1, a corresponding MAC-CE may indicate one separate TCI state set and may include only octets up to the fifth octet. If the value of the S field 3400 is 0, the MAC-CE may include information on multiple separate TCI state sets, the MAC-CE may activate one separate TCI state set corresponding to each codepoint of a TCI state field of DCI format 1_1 or 1_2 or activate one separate TCI state set corresponding to each codepoint of two TCI state fields of DCI format 1_1 or 1_2, and as described above, separate TCI states for a maximum of 8 or 16 codepoints may be activated by higher layer signaling.

In the MAC-CE structure of FIG. 34, every four octets may correspond to one separate TCI state set starting from the second octet. For example, a $C_0$ field 3415 may have a total of 8 values from "000" to "111", and these values may correspond to 8 cases which one separate TCI state set is able to have, respectively, as described above.

- If the $C_0$ field has the value of "000", this means that one separate TCI state set includes one UL TCI state, a TCI state $ID_{D,0,0}$ field 3420 and 3421 may be disregarded, and a TCI state $ID_{U,0,0}$ field 3425 may include information on one UL TCI state. Furthermore, the fourth and fifth octets may be disregarded.
- If the $C_0$ field has the value of "001", this means that one separate TCI state set includes two UL TCI states, the TCI state $ID_{D,0,0}$ field 3420 and 3421 may be disregarded, and the TCI state $ID_{U,0,0}$ field 3425 may include information on a first UL TCI state among the two UL TCI states. In addition, the fourth octet may be disregarded, and a TCI state $ID_{U,1,0}$ field 3435 may include information on a second UL TCI state among the two UL TCI states.
- If the $C_0$ field has the value of "010", this means that one separate TCI state set includes one DL TCI state, the TCI state $ID_{D,0,0}$ field 3420 and 3421 may include information on one DL TCI state, and the TCI state $ID_{U,0,0}$ field 3425 and the fourth and fifth octets may be disregarded.
- If the $C_0$ field has the value of "011", this means that one separate TCI state set includes one DL TCI state and one UL TCI state, the TCI state $ID_{D,0,0}$ field 3420 and 3421 may include information on one DL TCI state, and the TCI state $ID_{U,0,0}$ field 3425 may include information on one UL TCI state. The fourth and fifth octets may be disregarded.
- If the $C_0$ field has the value of "100", this means that one separate TCI state set includes one DL TCI state and two UL TCI states, the TCI state $ID_{D,0,0}$ field 3420 and 3421 may include information on one DL TCI state, and the TCI state $ID_{U,0,0}$ field 3425 may include information on a first UL TCI state among the two UL TCI states. In addition, the fourth octet may be disregarded, and the TCI state $ID_{U,1,0}$ field 3435 may include information on a second UL TCI state among the two UL TCI states.
- If the $C_0$ field has the value of "101", this means that one separate TCI state set includes two DL TCI states, the TCI state $ID_{D,0,0}$ field 3420 and 3421 may include information on a first DL TCI state among the two DL TCI states, and the TCI state $ID_{U,0,0}$ field 3425 and the fifth octet may be disregarded. In addition, a TCI state $ID_{D,1,0}$ field 3430 may include information on a second DL TCI state among the two DL TCI states.
- If the $C_0$ field has the value of" 110", this means that one separate TCI state set includes two DL TCI states and one UL TCI state, the TCI state $ID_{D,0,0}$ field 3420 and 3421 may include information on a first DL TCI state among the two DL TCI states, the TCI state $ID_{U,0,0}$ field 3425 may include information on one UL TCI state, the TCI state $ID_{D,1,0}$ field 3430 may include information on a second DL TCI state among the two DL TCI states, and the fifth octet may be disregarded.
- If the $C_0$ field has the value of" 111", this means that one separate TCI state set includes two DL TCI states and two UL TCI states, the TCI state $ID_{D,0,0}$ field 3420 and 3421 may include information on a first DL TCI state among the two DL TCI states, the TCI state $ID_{U,0,0}$ field 3425 may include information on a first UL TCI state among the two UL TCI states, the TCI state $ID_{D,1,0}$ field 3430 may include information on a second DL TCI state among the two DL TCI states, and a TCI state $ID_{U,1,0}$ field 3435 may include information on a second UL TCI state among the two UL TCI states.

FIG. 34 may illustrate an example of a MAC CE used when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the TCI state $ID_{U,0,0}$ to TCI state $ID_{U,1,N}$ fields representing UL TCI states may be expressed by 6 bits while the TCI state $ID_{D,0,0}$ to TCI state $ID_{D,1,N}$ fields representing DL TCI states may be expressed by 7 bits.

FIG. 35 is a diagram illustrating another MAC-CE structure for activation and indication of multiple separate TCI states in a wireless communication system according to an embodiment of the disclosure. In FIG. 35, a serving cell ID field 3505 and a BWP ID field 3510 may indicate a serving cell ID and a bandwidth part ID, respectively. If, for example, the value of an S field 3500 is 1, a corresponding MAC-CE may indicate one separate TCI state set and may have a length only up to the fifth octet.

If, for example, the value of the S field 3500 is 0, the MAC-CE may include information on multiple separate TCI state sets, the MAC-CE may activate one separate TCI state set corresponding to each codepoint of a TCI state field of DCI format 1_1 or 1_2 or activate one separate TCI state set corresponding to each codepoint of two TCI state fields of DCI format 1_1 or 1_2, and as described above, separate TCI state sets corresponding to a maximum of 8 or 16 codepoints may be activated by higher layer signaling.

In the MAC-CE structure of FIG. 35, every four octets may correspond to one separate TCI state set starting from the second octet. A $C_{U,0}$ field 3515 and a $C_{D,0}$ field 3521 mean the number of UL TCI states and the number of DL TCI states included in one separate TCI state set, respectively, and the meaning of each codepoint may be as follows.

- If the $C_{U,0}$ field has a value of "00", this means that UL TCI states are not included, and thus TCI state $ID_{U,0,0}$ 3520 and TCI state $ID_{U,1,0}$ 3525 may be disregarded.
- If the $C_{U,0}$ field has a value of "01", this means that one UL TCI state is included, and thus TCI state $ID_{U,0,0}$ 3520 may include information on one UL TCI state and TCI state $ID_{U,1,0}$ 3525 may be disregarded.
- If the $C_{U,0}$ field has a value of " 10", this means that two UL TCI states are included, and thus TCI state $ID_{U,0,0}$ 3520 may include information on a first UL TCI state among the two UL TCI states and TCI state $ID_{U,1,0}$ 3525 may include information on a second UL TCI state among the two UL TCI states.

- If the $C_{D,0}$ field has a value of "00", this means that DL TCI states are not included, and thus the fourth and fifth octets may be disregarded.
- If the $C_{D,0}$ field has a value of "01", this means that one DL TCI state is included, and thus TCI state $ID_{D,0,0}$ 3530 may include information on one DL TCI state and the fifth octet may be disregarded.
- If the $C_{D,0}$ field has a value of " 10", this means that two DL TCI states are included, and thus TCI state $ID_{U,0,0}$ 3530 may include information on a first DL TCI state among the two DL TCI states and TCI state $ID_{D,1,0}$ 3535 may include information on a second DL TCI state among the two DL TCI states.

FIG. 35 may illustrate an example of a MAC CE used when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the TCI state $ID_{U,0,0}$ to TCI state $ID_{U,1,N}$ fields representing UL TCI states may be expressed by 6 bits while the TCI state $ID_{D,0,0}$ to TCI state $ID_{D,1,N}$ fields representing DL TCI states may be expressed by 7 bits.

In the examples of a MAC CE described above with reference to FIG. 33 to FIG. 35, it is possible for at least one of elements thereof to be combined.

<Third embodiment: Method of dynamic switching between single and multi-TRP PDSCH reception operations in unified TCI scheme>

According to an embodiment of the disclosure, a method of dynamic switching between single and multi-TRP PDSCH reception operations in a unified TCI scheme is described. As described above, in a unified TCI scheme, even when a PDSCH is scheduled and a TCI state is newly indicated through a PDCCH, there is a restriction on time resources called a beam application time (BAT), a previously indicated TCI state is applied for transmission or reception before the beam application time and it is possible to apply the newly indicated TCI state for transmission or reception after the beam application time. Therefore, a TCI state indicated by a PDCCH scheduling a PDSCH is not directly applied to the scheduled PDSCH. However, in a case of a PDSCH, a factor for distinguishing between single and multi-TRP-based PDSCH scheduling is the number of TCI states existing in a codepoint indicated by a TCI state in a PDCCH. Due to this problem, dynamic switching between single and multi-TRP-based PDSCH scheduling through a PDCCH may be impossible. Therefore, at least one of the following methods may be considered.

[Method 3-1] Not supporting dynamic switching

According to an embodiment of the disclosure, a terminal may not support dynamic switching for single or multi-TRP-based PDSCH scheduling based on scheduling DCI in a unified TCI scheme. The terminal may receive one joint TCI state or a separate TCI state set including one DL TCI state indicated through a PDCCH or MAC-CE in the unified TCI scheme, and only single-TRP-based PDSCH scheduling is possible after a beam application time corresponding to the indicated TCI states before a new beam application time corresponding to TCI states indicated by receiving new one or two joint TCI states or a separate TCI state set including one or two DL TCI states indicated through a new PDCCH or MAC-CE. Only multi-TRP-based PDSCH scheduling is possible after a beam application time corresponding to TCI states indicated by receiving two joint TCI states or a separate TCI state set including two DL TCI states indicated in a unified TCI scheme before a new beam application time corresponding to TCI states indicated by receiving new one or two joint TCI states or a separate TCI state set including one or two DL TCI states indicated through a new PDCCH or MAC-CE. When an indication for a TCI state is received by the terminal by using a separate TCI state, the terminal may expect that the bit length of a TCI state field in DCI format 1_1 or 1_2 is expanded to 4 bits, based on higher layer signaling, as described above. With respect to separate TCI states, if one separate TCI state set indicating a maximum of two DL TCI states and a maximum of two UL TCI states is considered, a maximum of 8 cases exist and thus existing 3 bits may be insufficient for codepoints. Therefore, the bit length of a TCI state field may be expanded to 4 bits, based on higher layer signaling so as to secure various codepoints. In addition, the method may be applied when higher layer signaling is not configured, the higher layer signaling corresponding to a terminal capability report which may include information relating to whether dynamic switching between single DCI-based single and multi-TRP-based PDSCH scheduling is possible in the unified TCI scheme.

[Method 3-2] Defining new DCI field related to dynamic switching

According to an embodiment of the disclosure, a terminal may define a dynamic switching-related new DCI field to support a dynamic switching function for single or multi-TRP-based PDSCH scheduling based on scheduling DCI in a unified TCI scheme. The conventional distinguishment between single DCI-based single and multi-TRP PDSCH scheduling is made using the number of TCI states indicated by a TCI state field, and in the unified TCI scheme, scheduling DCI is unable to directly indicate a TCI state of a scheduled PDSCH. Therefore, a new DCI field in DCI format 1_1 or 1_2 is defined by 1 or 2 bits and may be used for dynamic switching between single and multi-TRP-based PDSCH scheduling. In this case, two joint TCI states or a separate TCI state set including two DL TCI states may be indicated to the terminal through a PDCCH or MAC-CE, based on the unified TCI scheme, and the terminal may consider a situation after passage of a beam application time corresponding to the indicated TCI states. That is, the two TCI states have already been indicated to the terminal and the beam application time has passed, and thus the terminal may assume a situation where application of the indicated TCI states is also possible. In addition, a new field in DCI may exist according to whether higher layer signaling is configured, the higher layer signaling corresponding to a terminal capability report which may include information relating to whether dynamic switching between single DCI-based single and multi-TRP-based PDSCH scheduling is possible in the unified TCI scheme.

- In a case where the new DCI field is defined by 1 bit, if the value of the new DCI field is indicated to be 0, the terminal may expect single-TRP-based PDSCH scheduling, and a TCI state to be applied to single-TRP-based PDSCH reception may be a first TCI state or a joint TCI state or DL TCI state having a low index among the indicated two TCI states. If the value of the new DCI field is indicated to be 1, the terminal may expect multi-TRP-based PDSCH scheduling, and a TCI state to be applied may be both of the indicated two joint TCI states or both of the two DL TCI states in the indicated separate TCI state set.
- In a case where the new DCI field is defined by 2 bits, the terminal may expect, from the base station, 4 different types of dynamic switching between single and multi-TRP-based PDSCH scheduling schemes by using the field.

-- If the value of the new DCI field is "00", the terminal may consider that the DCI is scheduling of a single-TRP-based PDSCH which is receivable using the first TCI state among the indicated TCI states.

-- If the value of the new DCI field is "01", the terminal may consider that the DCI is scheduling of a single-TRP-based PDSCH which is receivable using the second TCI state among the indicated TCI states.

-- If the value of the new DCI field is "10", the terminal may consider that DCI is scheduling of a multi-TRP-based PDSCH which is receivable using the indicated two TCI states. In this case, if TDM-based multi-TRP PDSCH repetition is scheduled for the terminal, the terminal may first consider the first TCI state in a TCI state mapping order. That is, if a TDRA entry including repetitionNumber having a value equal to or greater than 2 is indicated to the terminal through a Time Domain Resource Allocation field in DCI, slotBased is configured as the higher layer signaling RepetitionSchemeConfig-r16, and cyclicMapping is configured as the higher layer signaling tciMapping in slotBased, the terminal may apply the first and second TCI states to PDSCHs for odd-numbered and even-numbered PDSCH reception occasions to receive the PDSCHs, respectively. For example, in a case of four PDSCH repetitions, the terminal may apply the first TCI state to first and third PDSCHs and apply the second TCI state to the second and fourth PDSCHs to receive same. In addition, if a TDRA entry including repetitionNumber having a value greater than 2 is indicated to the terminal through a Time Domain Resource Allocation field in DCI, slotBased is configured as the higher layer signaling RepetitionSchemeConfig-r16, and sequentialMapping is configured as the higher layer signaling tciMapping in slotBased, the terminal may apply the first TCI state for first two PDSCH reception occasions, and apply the second TCI state to PDSCHs for next two PDSCH reception occasions, and may repeat this operation. For example, in a case of six PDSCH repetitions, the terminal may apply the first TCI state to first, second, fifth, and sixth PDSCHs and apply the second TCI state to third and fourth PDSCHs to receive same.

-- If the value of the new DCI field is "11", the terminal may consider that DCI is multi-TRP-based PDSCH scheduling using the indicated two TCI states, and if TDM-based PDSCH repetition is scheduled for the terminal, the terminal may first consider the second TCI state in a TCI state mapping order. That is, if a TDRA entry including repetitionNumber having a value equal to or greater than 2 is indicated to the terminal through a Time Domain Resource Allocation field in DCI, slotBased is configured as the higher layer signaling Repetition-SchemeConfig-r16, and cyclicMapping is configured as the higher layer signaling tciMapping in slotBased, the terminal may apply the second and first TCI states to PDSCHs for odd-numbered and even-numbered PDSCH reception occasions to receive the PDSCHs, respectively. For example, in a case of four PDSCH repetitions, the terminal may apply the second TCI state to first and third PDSCHs and apply the first TCI state to the second and fourth PDSCHs to receive same. In addition, if a TDRA entry including repetitionNumber having a value greater than 2 is indicated to the terminal through a Time Domain Resource Allocation field in DCI, slotBased is configured as the higher layer signaling RepetitionSchemeConfig-r16, and sequentialMapping is configured as the higher layer signaling tciMapping in slotBased, the terminal may apply the second TCI state for first two PDSCH reception occasions, and apply the first TCI state to PDSCHs for next two PDSCH reception occasions, and may repeat this operation. For example, in a case of six PDSCH repetitions, the terminal may apply the second TCI state to first, second, fifth, and sixth PDSCHs and apply the first TCI state to third and fourth PDSCHs to receive same. Alternatively, "11", the value of the new DCI field, is a reserved field and may be a meaningless field.

[Method 3-3] On/Off of TCI state indication function of unified TCI scheme

- According to an embodiment of the disclosure, a terminal may use a method of turning off or on a TCI state indication function of a unified TCI scheme to support dynamic switching for single or multi-TRP-based PDSCH scheduling based on single scheduling DCI in the unified TCI scheme. The method may turn on/off the TCI state indication function of the unified TCI scheme through a MAC-CE or turn on/off same by introducing a new 1-bit field in DCI and identifying whether the value of the field is 1 or 0. In this case, two joint TCI states or a separate TCI state set including two DL TCI states may be indicated to the terminal through a PDCCH or MAC-CE, based on the unified TCI scheme, and the terminal may consider a situation after passage of a beam application time corresponding to the indicated TCI states. That is, the two TCI states have already been indicated to the terminal and the beam application time has passed, and thus the terminal may assume a situation where application of the indicated TCI states is also possible. In addition, an operation of turning on/off based on a new field in DCI or turning on/off based on a MAC-CE may be possible according to whether higher layer signaling is configured, the higher layer signaling corresponding to a terminal capability report which may include information relating to whether dynamic switching between single DCI-based single and multi-TRP-based PDSCH scheduling is possible in the unified TCI scheme. If the TCI state indication function is turned on, the terminal may be unable to perform dynamic switching between single and multi-TRP-based PDSCH scheduling through single scheduling DCI, and as described in [Method 3-1], when one TCI state is indicated, only single-TRP-based PDSCH scheduling is possible, and when two TCI states are indicated, only multi-TRP-based PDSCH scheduling may be possible.
- If the TCI state indication function is turned off, the terminal may use a previously indicated unified TCI from the time point of the function being turned off to the time point of the function being turned on again, and may perform dynamic switching between single and multi-TRP-based PDSCH scheduling according to which number of TCI states that a codepoint indicated by a TCI state field has. However, information indicated through a TCI state field after the TCI state indication function is turned off is only the number of TCI states, and thus the purpose thereof is only to distinguish between single and multi-TRP-based PDSCH scheduling, and the type of a TCI state actually indicated by the TCI state field may be meaningless for the terminal.

[Method 3-4] Switching method according to method of transmitting or receiving different channel

- According to an embodiment of the disclosure, a terminal may determine a single or multi-TRP-based PDSCH scheduling scheme, based on a reception scheme of single scheduling DCI or a transmission scheme of a PUCCH including HARQ-ACK information for a PDSCH in order to support single or multi-TRP-based PDSCH scheduling based on single scheduling DCI in a unified TCI scheme. In this case, two joint TCI states or a separate TCI state set including two DL TCI states may be indicated to the terminal through a PDCCH or MAC-CE, based on the unified TCI scheme, and the terminal may consider a situation after passage of a beam application time corresponding to the indicated TCI states. That is, the two TCI states have already been indicated to the terminal and the beam application time has passed, and thus the terminal may assume a situation where application of the indicated TCI states is also possible. In addition, applying the same scheme as a transmission scheme of a PDCCH or PUCCH even to a PDSCH may operate according to configuration of higher layer signaling corresponding to a terminal capability report which may include information relating to whether dynamic switching between single DCI-based single and multi-TRP-based PDSCH scheduling is possible in the unified TCI scheme. If the terminal decodes DCI, based on PDCCH reception using a single TCI state, the terminal may consider or determine that a PDSCH scheduled by the DCI is also scheduled based on a single TRP.
- If the terminal receives DCI, based on PDCCH repetition, that is, if the value of searchSpaceLinking configured in higher layer signaling of search space set A is search space set B, the value of searchSpaceLinking configured in higher layer signaling of search space set B is search space set A, and DCI is repeatedly received based on respective control resource sets connected to the two search space sets, the terminal may consider or determine that a PDSCH scheduled by the DCI is also scheduled based on multiple TRPs. If at least one of the control resource sets connected to the two search space sets overlaps with an SSB or is dropped due to a condition like overbooking, the terminal may consider or determine that the scheduled PDSCH is scheduled based on multiple TRPs without change.

- If the terminal receives DCI through SFN-based PDCCH transmission, that is, if higher layer signaling which may be configured to be one of sfnSchemeA and sfnSchemeB is configured in a bandwidth part individually for each of a PDCCH and a PDSCH in relation to PDCCH and PDSCH reception schemes, and it is reported through a terminal capability report that support for a scheme of dynamic switching between single-TRP-based PDSCH reception and SFN PDSCH reception is impossible, the terminal may consider or determine that a PDSCH based on a multi-TRP-based SFN scheme is scheduled even for PDSCH reception.
- If single-TRP-based transmission is scheduled for the terminal with respect to PUCCH transmission including HARQ-ACK information for a scheduled PDSCH, that is, if a PUCCH resource for which the higher layer signaling enableTwoTCI is not configured is selected, the terminal may consider or determine that the PDSCH is also scheduled based on a single TRP.
- If multi-TRP-based transmission is scheduled for the terminal with respect to PUCCH transmission including HARQ-ACK information for a scheduled PDSCH, that is, if a PUCCH resource for which the higher layer signaling enableTwoTCI is configured is selected, the terminal may consider or determine that the PDSCH is also scheduled based on multiple TRPs.
- If a reception scheme of DCI scheduling a PDSCH is based on a single TRP and a transmission scheme of a PUCCH including whether the PDSCH is successfully received is based on multiple TRPs or vice versa, that is, if the number of TRPs used in a reception scheme of a PDCCH is different from that of a transmission scheme of a PUCCH, the terminal may prioritize one of single or multi-TRP schemes for a scheduling scheme of a PDSCH. As another method, a reception scheme of scheduling DCI may be prioritized or a transmission scheme of a PUCCH may be prioritized.

[Method 3-5] Using some codepoints of TCI state field to indicate dynamic switching operation

According to an embodiment of the disclosure, a terminal may use some codepoints of a TCI state field in existing DCI to indicate a dynamic switching operation to support a function of dynamic switching for single or multi-TRP-based PDSCH scheduling based on scheduling DCI in a unified TCI scheme. In this case, two joint TCI states or a separate TCI state set including two DL TCI states may be indicated to the terminal through a PDCCH or MAC-CE, based on the unified TCI scheme, and the terminal may consider a situation after passage of a beam application time corresponding to the indicated TCI states. That is, the two TCI states have already been indicated to the terminal and the beam application time has passed, and thus the terminal may assume a situation where application of the indicated TCI states is also possible. In addition, a function of using some codepoints of an existing TCI state field for dynamic switching may exist in a TCI state field according to whether higher layer signaling is configured, the higher layer signaling corresponding to a terminal capability report which may include information relating to whether dynamic switching between single DCI-based single and multi-TRP-based PDSCH scheduling is possible in the unified TCI scheme. The terminal may consider a maximum of 4 bits as the length of a TCI state field according to higher layer signaling in a case of a joint or separate TCI state indication (a maximum of 16 codepoints may be considered).

- All the maximum of 8 codepoints in a TCI state field are currently used to indicate TCI states, but two codepoints corresponding to 1-bit information or four codepoints corresponding to 2-bit information may be used for a function of dynamic switching for single or multi-TRP-based PDSCH scheduling. Each definition of two codepoints corresponding to 1-bit information or four codepoints corresponding to 2-bit information may be the same as that of each codepoint described above in [Method 3-2].
- If four codepoints corresponds to two types of single-TRP-based PDSCH scheduling schemes and two types of multi-TRP-based PDSCH scheduling through a TCI state field according to the description of [Method 3-2] described above, each of the remaining four codepoints among the eight codepoints may indicate one or two joint TCI states or indicate a separate TCI state set including a maximum of two DL TCI states and a maximum of two UL TCI states.
- If one of four codepoints related to dynamic switching is indicated through a TCI state field in DCI, the terminal may use a TCI state, among the previously indicated two TCI states as described above, according to a transmission method indicated through the one of the four codepoints related to dynamic switching.
- If a codepoint indicating a TCI state is indicated through a TCI state field in DCI, the terminal may consider or determine reception of a PDSCH scheduled through the DCI to be multi-TRP PDSCH scheduling based on the previously indicated two TCI states, and the TCI state indicated through the TCI state field in the DCI may be newly applied after a beam application time corresponding thereto.

FIG. 36 illustrates a structure of a UE in a wireless communication system according to an embodiment of the disclosure.

Referring to FIG. 36, the UE may include a transceiver, which refers to a UE receiver 3600 and a UE transmitter 3610 as a whole, a memory (not illustrated), and a UE processor 3605 (or UE controller or processor). The UE transceiver 3600 and 3610, the memory, and the UE processor 3605 may operate according to the above-described communication methods of the UE. Components of the UE are not limited to the above-described example. For example, the UE may include a larger or smaller number of components than the above-described components. Furthermore, the receiver 3600, the UE processor 3605, the UE transmitter 3610, the UE receiver 3600, and the memory may be implemented in the form of a single chip. The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and downconvert the frequency thereof, and the like. This is only an embodiment of the transceiver, and the components of the transceiver are not limited to the RF transmitter and the RF receiver. In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the UE may include multiple memories, and the memories may store instructions for performing the above-described communication methods.

In addition, the UE processor 3605 may control a series of processes so that the UE can operate according to the above-described embodiments. For example, the processor may control components of the UE so as to receive DCI configured in two layers so that multiple PDSCHs are received simultaneously. The UE may include multiple processors, and the processors may perform the UE's component control operations by executing programs stored in the memory.

FIG. 37 illustrates a structure of a base station in a wireless communication system according to an embodiment of the disclosure.

Referring to FIG. 37, the base station may include a transceiver, which refers to a base station receiver 3700 and a base station transmitter 3710 as a whole, a memory (not illustrated), and a base station processor 3705 (or base station controller or processor). The base station transceiver 3700 and 3710, the memory, and the base station processor 3705 may operate according to the above-described communication methods of the base station. Components of the base station are not limited to the above-described example. For example, the base station may include a larger or smaller number of components than the above-described components. Furthermore, the base station transmitter 3710, the base station receiver 3700, the memory, and the base station processor 3705 may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and downconvert the frequency thereof, and the like. This is only an embodiment of the transceiver, and the components of the transceiver are not limited to the RF transmitter and the RF receiver. In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the base station may include multiple memories, and the memories may store instructions for performing the above-described communication methods.

The processor may control a series of processes such that the base station can operate according to the above-described embodiments of the disclosure. For example, the processor may control components of the base station so as to configure DCI configured in two layers including allocation information regarding multiple PDSCHs and to transmit the same. The base station may include multiple processors, and the processors may perform the base station's component control operations by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Moreover, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary. For example, one embodiment of the disclosure may be partially combined with other embodiments to operate a base station and a terminal. As an example, embodiment 1 and 2 of the disclosure may be combined with each other to operate a base station and a terminal. Furthermore, although the above embodiments have been described on the basis of the FDD LTE system, other variants based on the technical idea of the embodiments may also be implemented in other communication systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

= Furthermore, in methods of the disclosure, some or all of the contents of each embodiment may be combined without departing from the essential spirit and scope of the disclosure.

Various embodiments of the disclosure have been described above. The above description of the disclosure has been given by way of example, and embodiments of the disclosure are not limited to the embodiments disclosed herein. Those skilled in the art will appreciate that other specific modifications and changes may be easily made thereto without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

**1.** A method performed by a terminal of a wireless communication system, the method comprising:

receiving, from a base station, first downlink control information (DCI) for indicating a unified transmission configuration indicator (TCI) state, the first DCI including first information indicating at least one unified TCI state;
receiving, from the base station, second DCI for scheduling a physical downlink shared channel (PDSCH), the second DCI including second information on a unified TCI state applied for reception of the PDSCH among the at least one unified TCI state; and
receiving the PDSCH from the base station by applying the unified TCI state identified based on the second information.

**2.** The method of claim 1, further comprising receiving, from the base station, radio resource control (RRC) signaling including configuration information related to the second information included in the second DCI,
wherein whether the second DCI includes the second information is determined based on the configuration information.

**3.** The method of claim 1, wherein the second information represents at least one of an index, a quantity, or an order of the unified TCI state applied for reception of the PDSCH among the at least one unified TCI state.

4. The method of claim 1, wherein the at least one unified TCI state identified based on the first information is applied starting from a first slot after passage of a beam application time (BAT) from the first DCI.

5. A method performed by a base station of a wireless communication system, the method comprising:

transmitting, to a terminal, first downlink control information (DCI) for indicating a unified transmission configuration indicator (TCI) state, the first DCI including first information indicating at least one unified TCI state;
transmitting, to the terminal, second DCI for scheduling a physical downlink shared channel (PDSCH), the second DCI including second information on a unified TCI state applied for the PDSCH among the at least one unified TCI state; and
transmitting the PDSCH to the terminal, based on the unified TCI state identified based on the second information.

6. The method of claim 5, further comprising transmitting, to the terminal, radio resource control (RRC) signaling including configuration information related to the second information included in the second DCI,
wherein whether the second DCI includes the second information is determined based on the configuration information.

7. The method of claim 5, wherein the second information represents at least one of an index, a quantity, or an order of the unified TCI state applied for the PDSCH among the at least one unified TCI state, and
wherein the at least one unified TCI state identified based on the first information is applied starting from a first slot after passage of a beam application time (BAT) from the first DCI.

8. A terminal of a wireless communication system, the terminal comprising:

a transceiver; and
a controller connected to the transceiver,
wherein the controller is configured to:

receive, from a base station, first downlink control information (DCI) for indicating a unified transmission configuration indicator (TCI) state, the first DCI including first information indicating at least one unified TCI state;
receive, from the base station, second DCI for scheduling a physical downlink shared channel (PDSCH), the second DCI including second information on a unified TCI state applied for reception of the PDSCH among the at least one unified TCI state; and
receive the PDSCH from the base station by applying the unified TCI state identified based on the second information.

9. The terminal of claim 8, wherein the controller is further configured to receive, from the base station, radio resource control (RRC) signaling including configuration information related to the second information included in the second DCI, and
wherein whether the second DCI includes the second information is determined based on the configuration information.

10. The terminal of claim 8, wherein the second information represents at least one of an index, a quantity, or an order of the unified TCI state applied for reception of the PDSCH among the at least one unified TCI state.

11. The terminal of claim 8, wherein the at least one unified TCI state identified based on the first information is applied starting from a first slot after passage of a beam application time (BAT) from the first DCI.

12. A base station of a wireless communication system, the base station comprising:

a transceiver; and
a controller connected to the transceiver,
wherein the controller is configured to:

transmit, to a terminal, first downlink control information (DCI) for indicating a unified transmission configuration indicator (TCI) state, the first DCI including first information indicating at least one unified TCI state;
transmit, to the terminal, second DCI for scheduling a physical downlink shared channel (PDSCH), the second DCI including second information on a unified TCI state applied for the PDSCH among the at least one unified TCI state; and
transmit the PDSCH to the terminal, based on the unified TCI state identified based on the second information.

**13.** The base station of claim 12, wherein the controller is further configured to transmit, to the terminal, radio resource control (RRC) signaling including configuration information related to the second information included in the second DCI, and
wherein whether the second DCI includes the second information is determined based on the configuration information.

**14.** The base station of claim 12, wherein the second information represents at least one of an index, a quantity, or an order of the unified TCI state applied for the PDSCH among the at least one unified TCI state.

**15.** The base station of claim 12, wherein the at least one unified TCI state identified based on the first information is applied starting from a first slot after passage of a beam application time (BAT) from the first DCI.

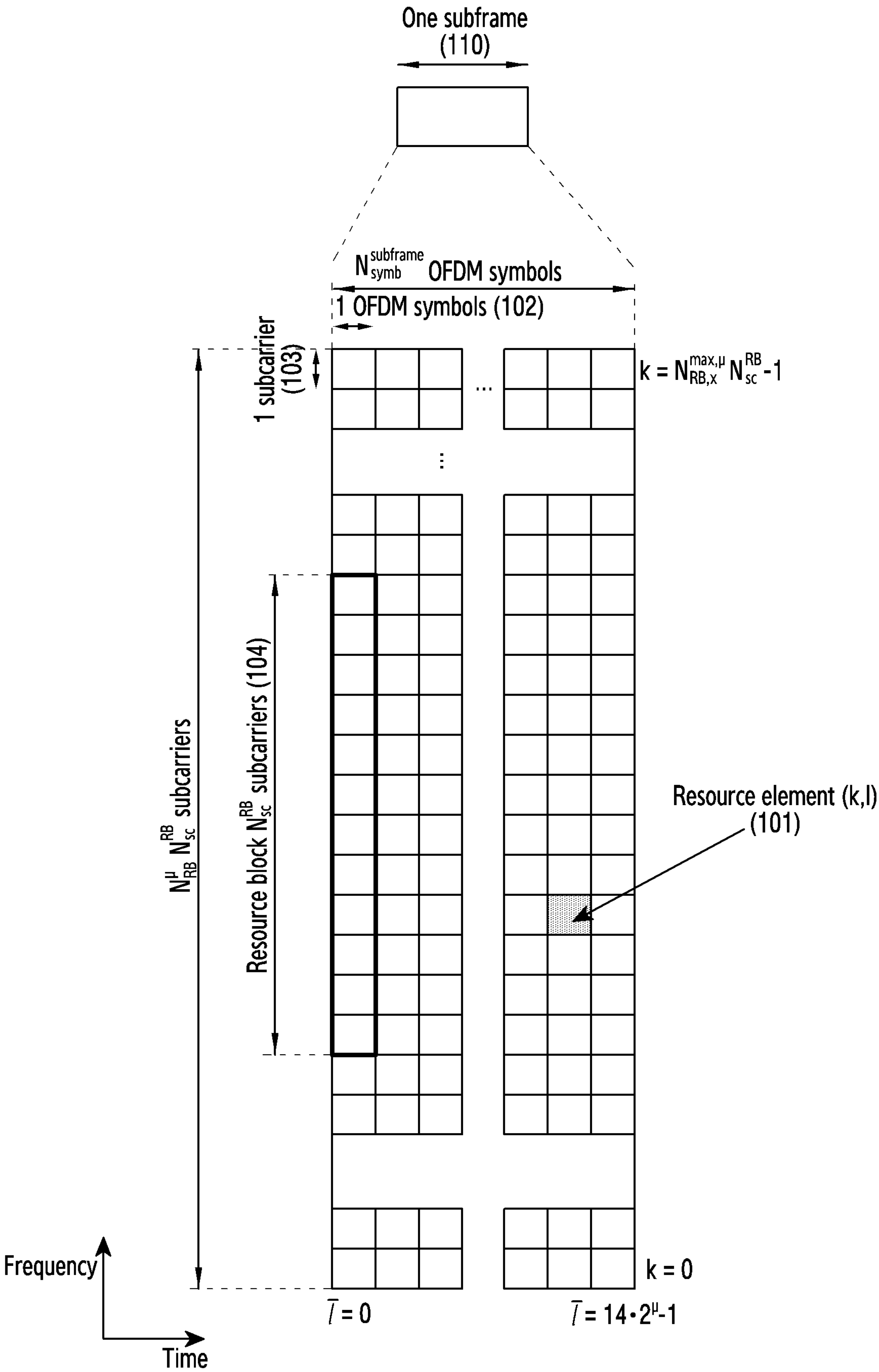
One subframe
(110)
$N_{symb}^{subframe}$ OFDM symbols
1 OFDM symbols (102)
1 subcarrier
(103)
$k = N_{RB,x}^{max,\mu} N_{sc}^{RB} - 1$
$N_{RB}^{\mu} N_{sc}^{RB}$ subcarriers
Resource block $N_{sc}^{RB}$ subcarriers (104)
Resource element (k,l)
(101)
Frequency
Time
k = 0
$\bar{l} = 0$
$\bar{l} = 14 \cdot 2^{\mu} - 1$

FIG.1

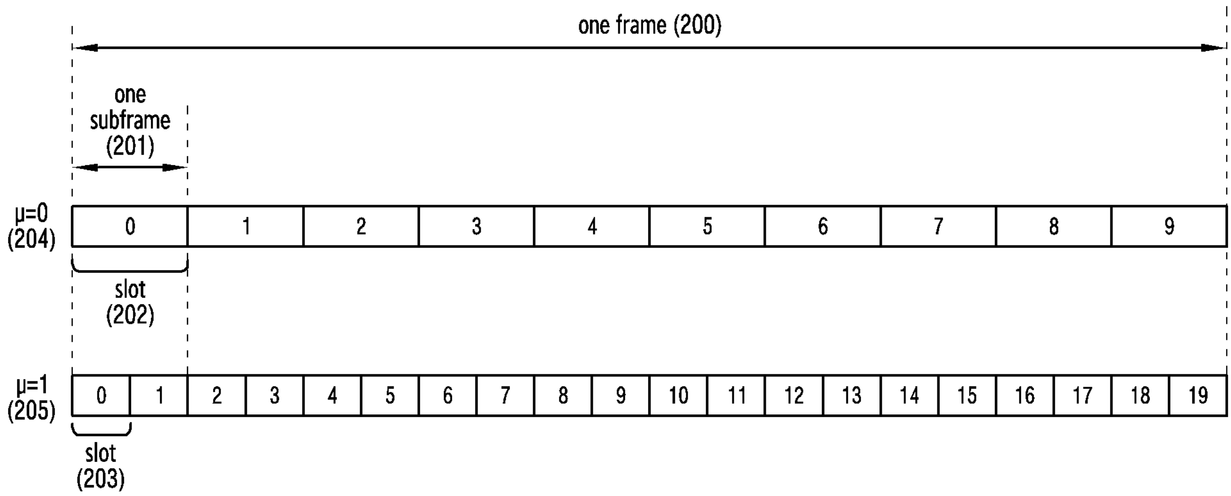
one frame (200)
one subframe (201)
μ=0 (204)
0
1
2
3
4
5
6
7
8
9
slot (202)
μ=1 (205)
0
1
2
3
4
5
6
7
8
9
10
11
12
13
14
15
16
17
18
19
slot (203)

FIG.2

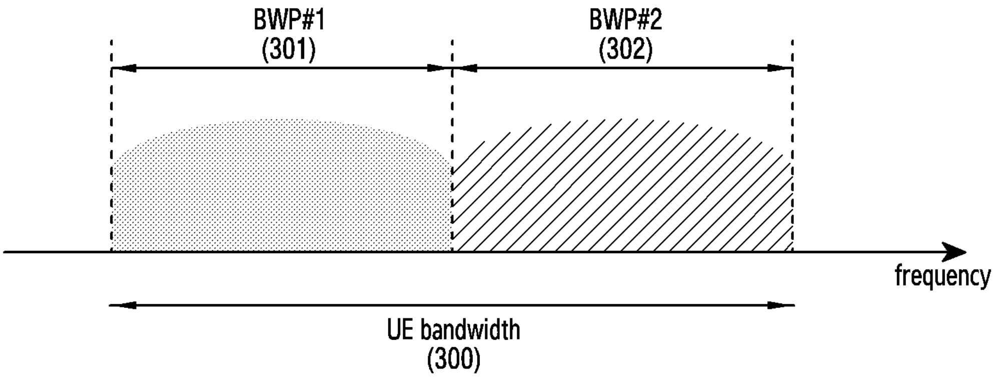


FIG.3

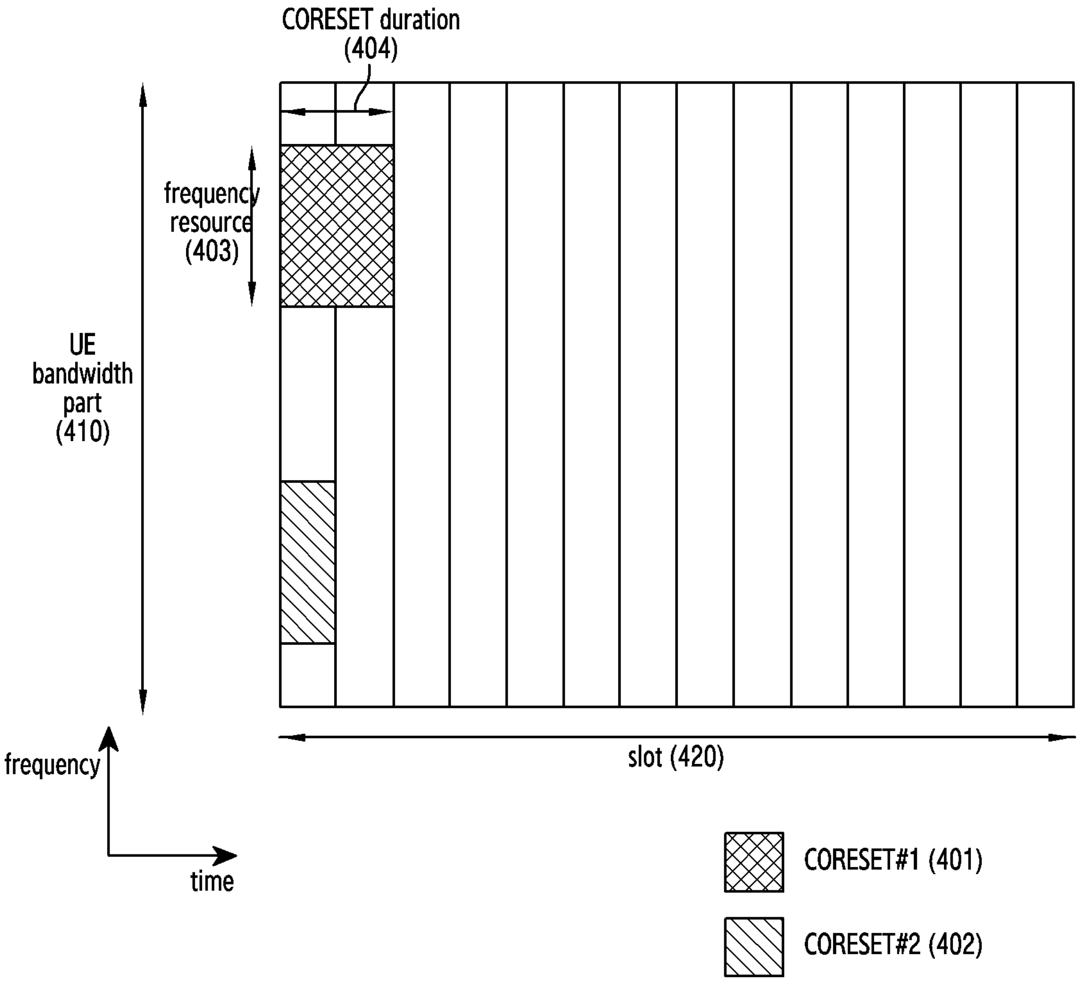
CORESET duration
(404)
frequency
resource
(403)
UE
bandwidth
part
(410)
slot (420)
frequency
time
CORESET#1 (401)
CORESET#2 (402)

FIG.4

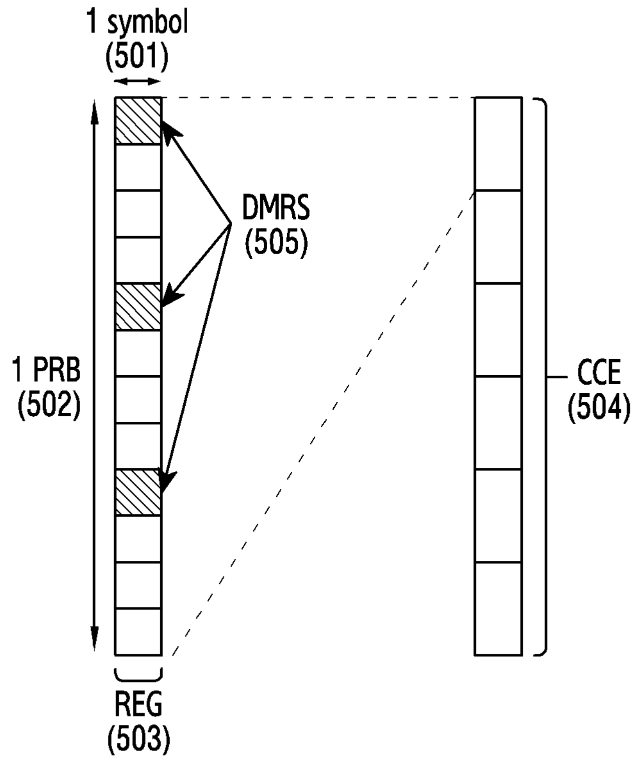


FIG.5A

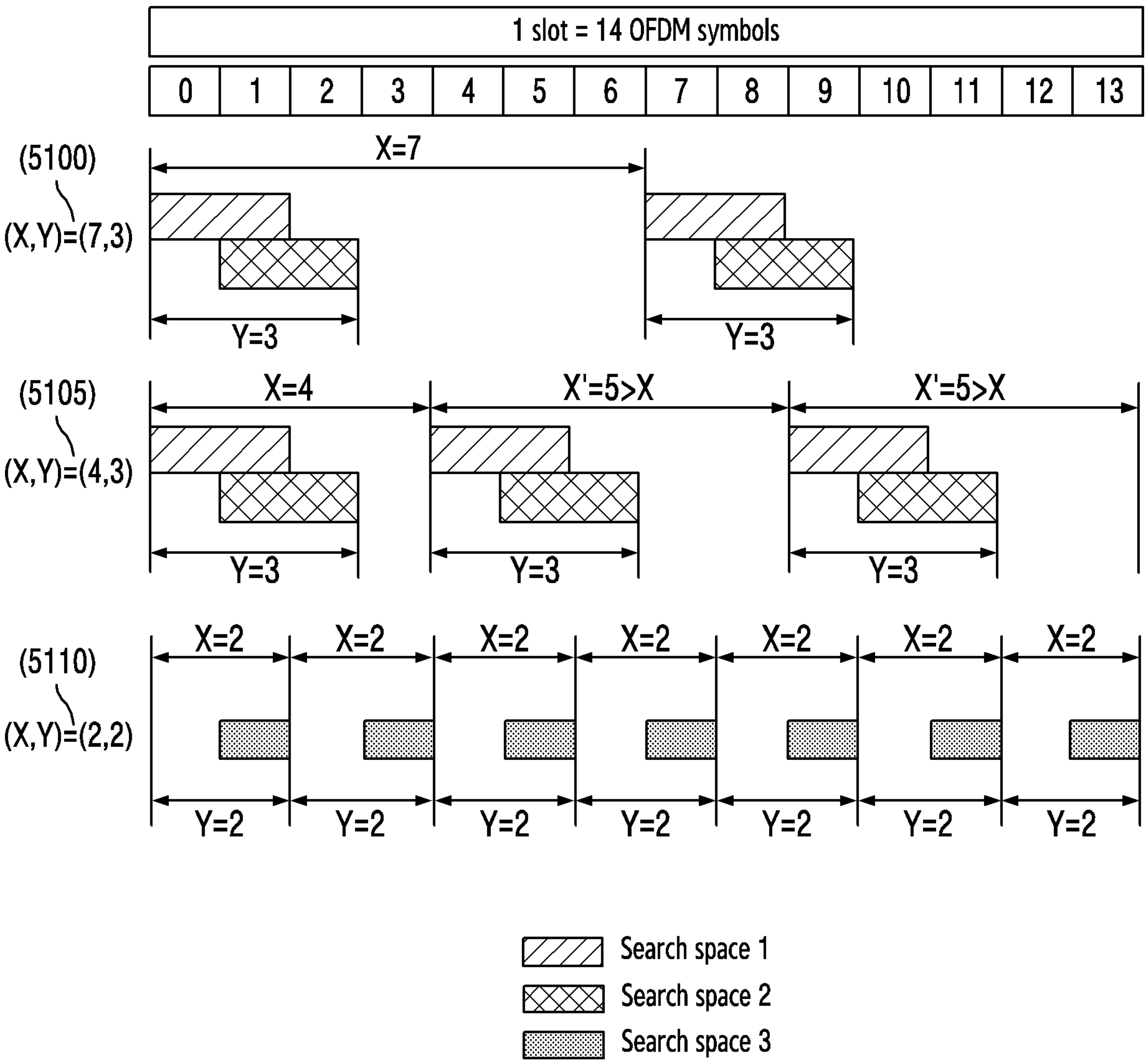
1 slot = 14 OFDM symbols
0
1
2
3
4
5
6
7
8
9
10
11
12
13
(5100)
(X,Y)=(7,3)
X=7
Y=3
Y=3
(5105)
(X,Y)=(4,3)
X=4
X'=5>X
X'=5>X
Y=3
Y=3
Y=3
(5110)
(X,Y)=(2,2)
X=2
Y=2
Search space 1
Search space 2
Search space 3

FIG.5B

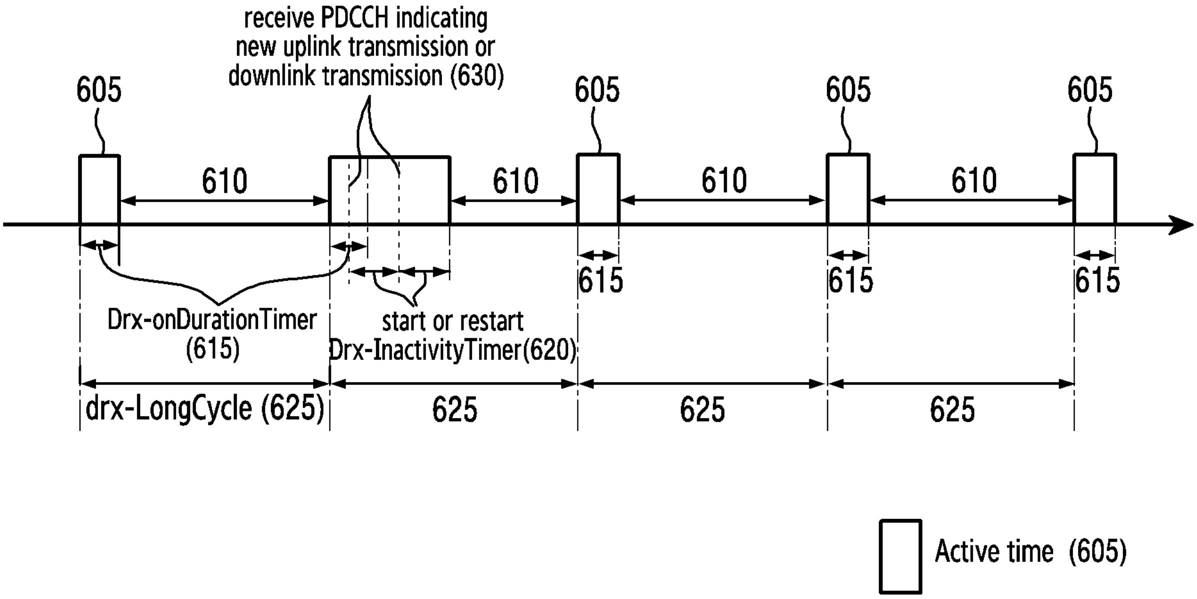
receive PDCCH indicating new uplink transmission or downlink transmission (630)
605
605
605
605
610
610
610
610
615
615
615
Drx-onDurationTimer (615)
start or restart Drx-InactivityTimer(620)
drx-LongCycle (625)
625
625
625
Active time (605)

FIG.6

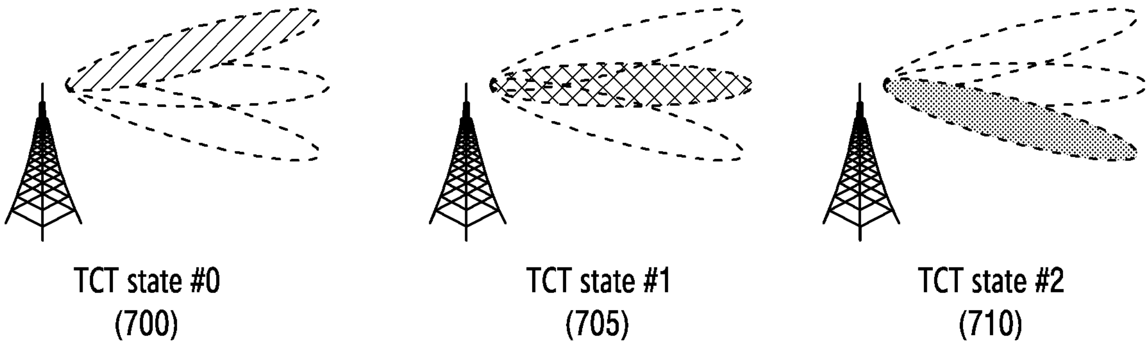


FIG.7

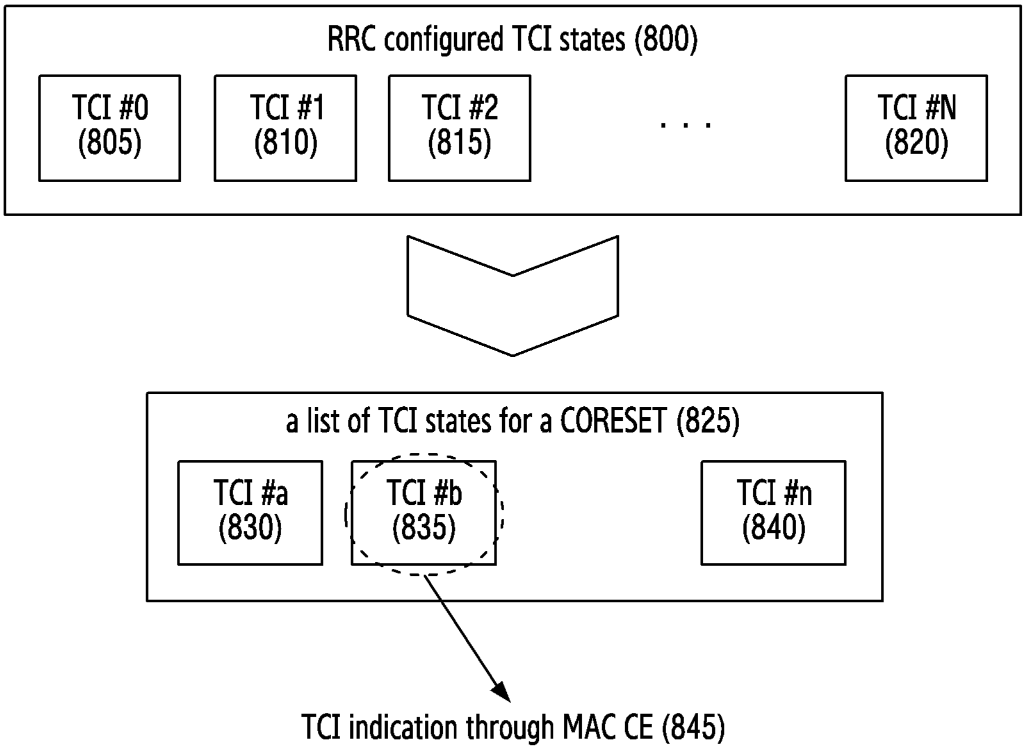
RRC configured TCI states (800)
TCI #0 (805)
TCI #1 (810)
TCI #2 (815)
. . .
TCI #N (820)
a list of TCI states for a CORESET (825)
TCI #a (830)
TCI #b (835)
TCI #n (840)
TCI indication through MAC CE (845)

FIG.8

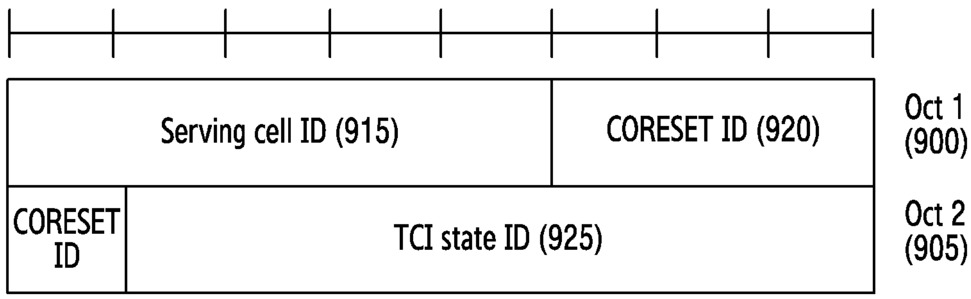
Serving cell ID (915)
CORESET ID (920)
Oct 1 (900)
CORESET ID
TCI state ID (925)
Oct 2 (905)

FIG.9

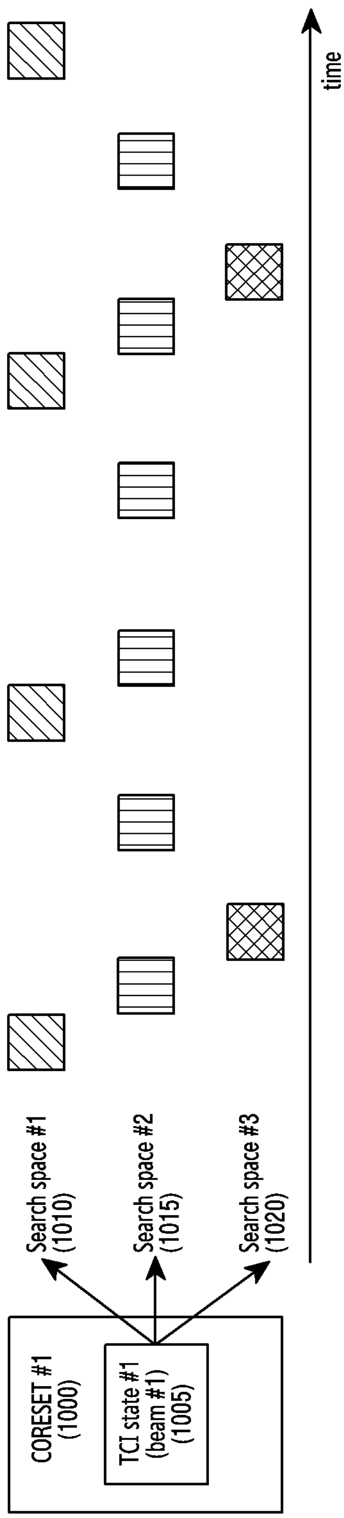
CORESET #1
(1000)
TCI state #1
(beam #1)
(1005)
Search space #1
(1010)
Search space #2
(1015)
Search space #3
(1020)
time

FIG.10

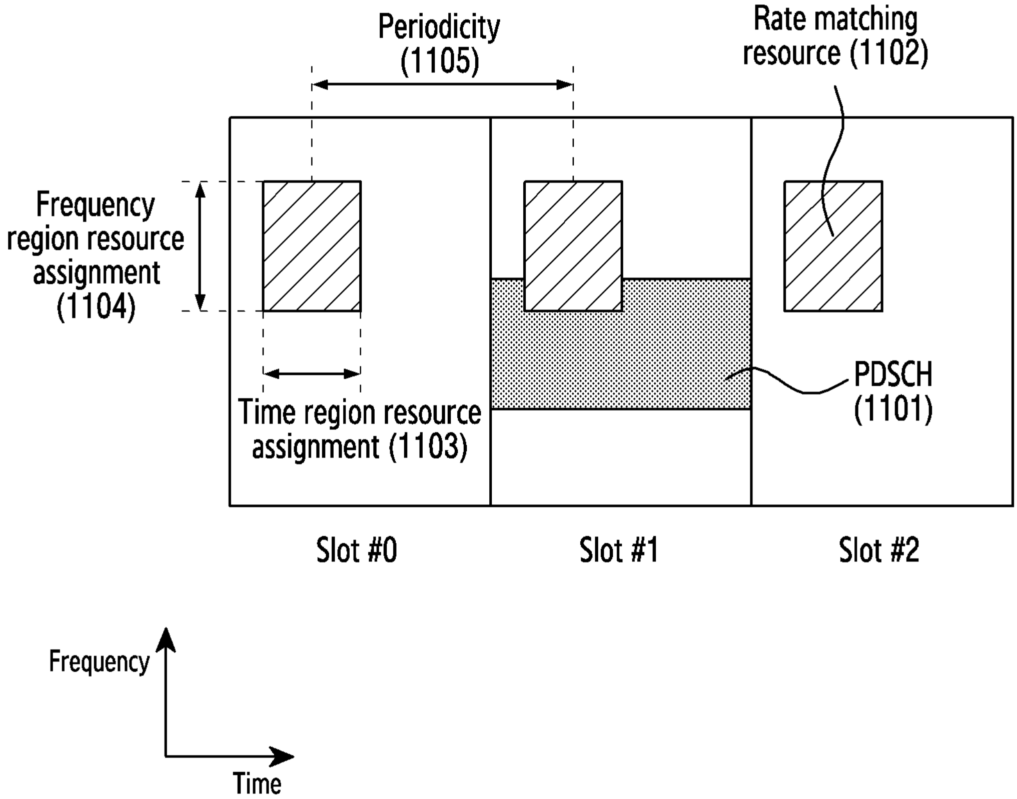
Periodicity
(1105)
Rate matching
resource (1102)
Frequency
region resource
assignment
(1104)
PDSCH
(1101)
Time region resource
assignment (1103)
Slot #0
Slot #1
Slot #2
Frequency
Time

FIG.11

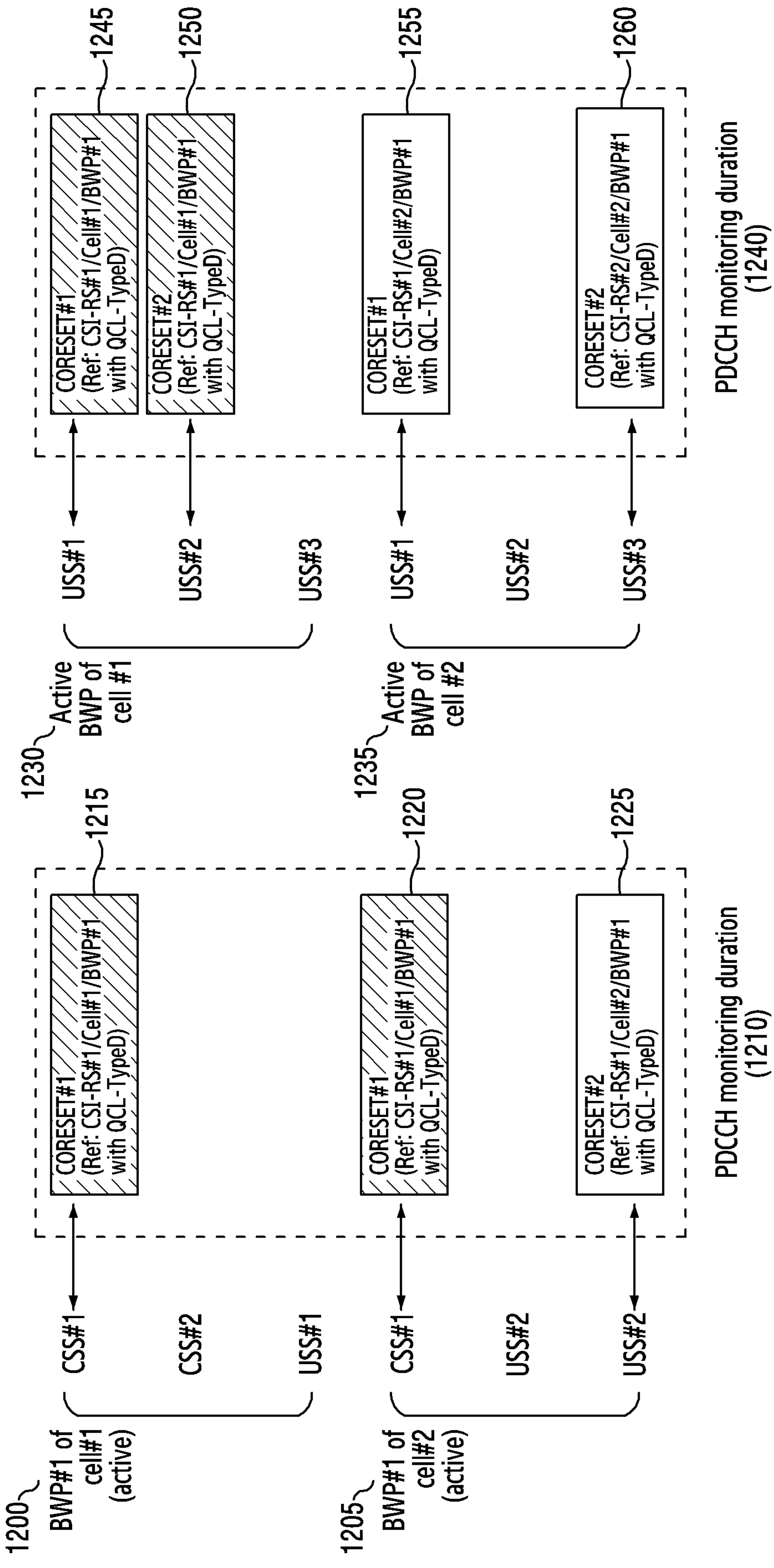
1200
BWP#1 of cell#1 (active)
CSS#1
CSS#2
USS#1
1205
BWP#1 of cell#2 (active)
CSS#1
USS#2
USS#2
1215
CORESET#1 (Ref: CSI-RS#1/Cell#1/BWP#1 with QCL-TypeD)
1220
CORESET#1 (Ref: CSI-RS#1/Cell#1/BWP#1 with QCL-TypeD)
1225
CORESET#2 (Ref: CSI-RS#1/Cell#2/BWP#1 with QCL-TypeD)
PDCCH monitoring duration (1210)
1230
Active BWP of cell #1
USS#1
USS#2
USS#3
1235
Active BWP of cell #2
USS#1
USS#2
USS#3
1245
CORESET#1 (Ref: CSI-RS#1/Cell#1/BWP#1 with QCL-TypeD)
1250
CORESET#2 (Ref: CSI-RS#1/Cell#1/BWP#1 with QCL-TypeD)
1255
CORESET#1 (Ref: CSI-RS#1/Cell#2/BWP#1 with QCL-TypeD)
1260
CORESET#2 (Ref: CSI-RS#2/Cell#2/BWP#1 with QCL-TypeD)
PDCCH monitoring duration (1240)

FIG.12

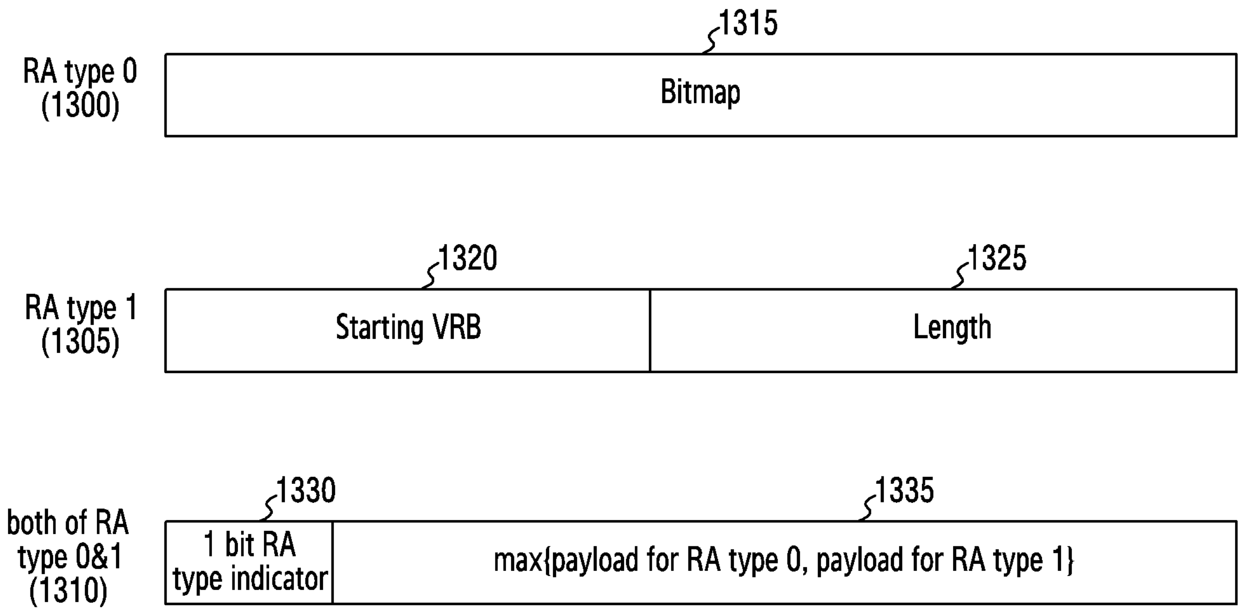
1315
RA type 0
(1300)
Bitmap
1320
1325
RA type 1
(1305)
Starting VRB
Length
1330
1335
both of RA
type 0&1
(1310)
1 bit RA
type indicator
max{payload for RA type 0, payload for RA type 1}

FIG.13

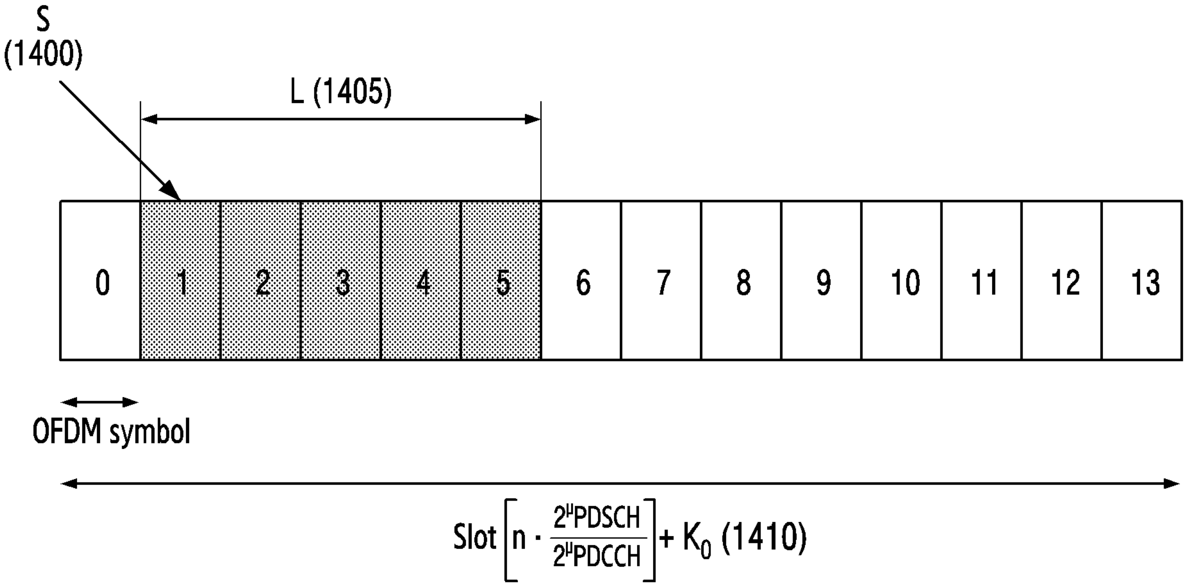
S
(1400)
L (1405)
0
1
2
3
4
5
6
7
8
9
10
11
12
13
OFDM symbol
Slot $\left\lfloor n \cdot \frac{2^{\mu PDSCH}}{2^{\mu PDCCH}} \right\rfloor + K_0$ (1410)

FIG.14

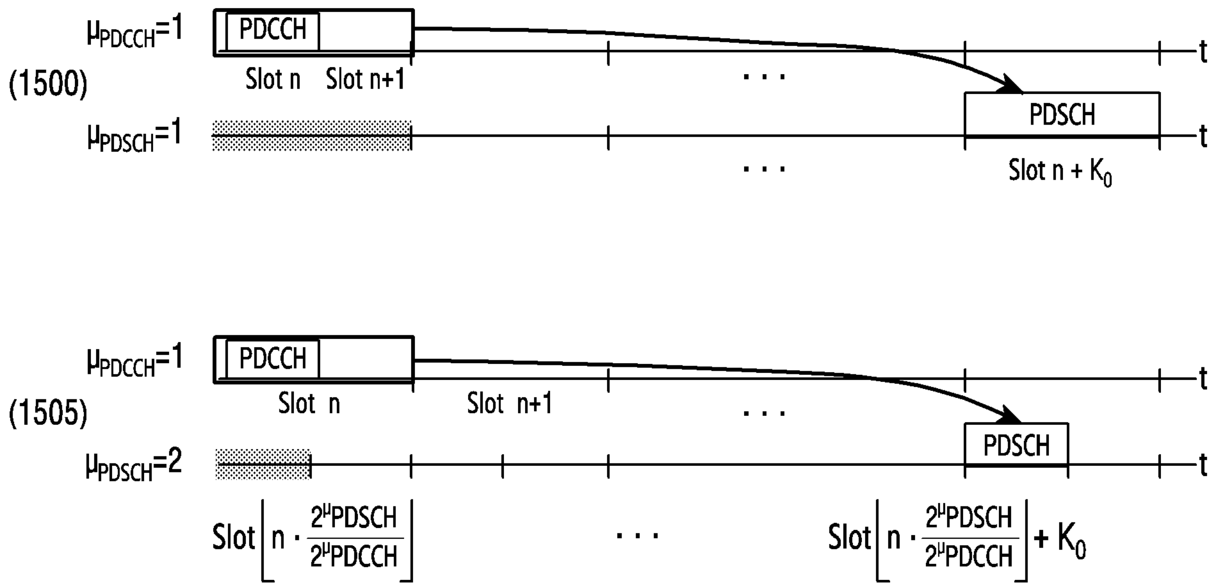

μPDCCH=1
(1500)
μPDSCH=1
PDCCH
Slot n
Slot n+1
PDSCH
Slot n + K0
μPDCCH=1
(1505)
μPDSCH=2
PDCCH
Slot n
Slot n+1
PDSCH
t


FIG.15

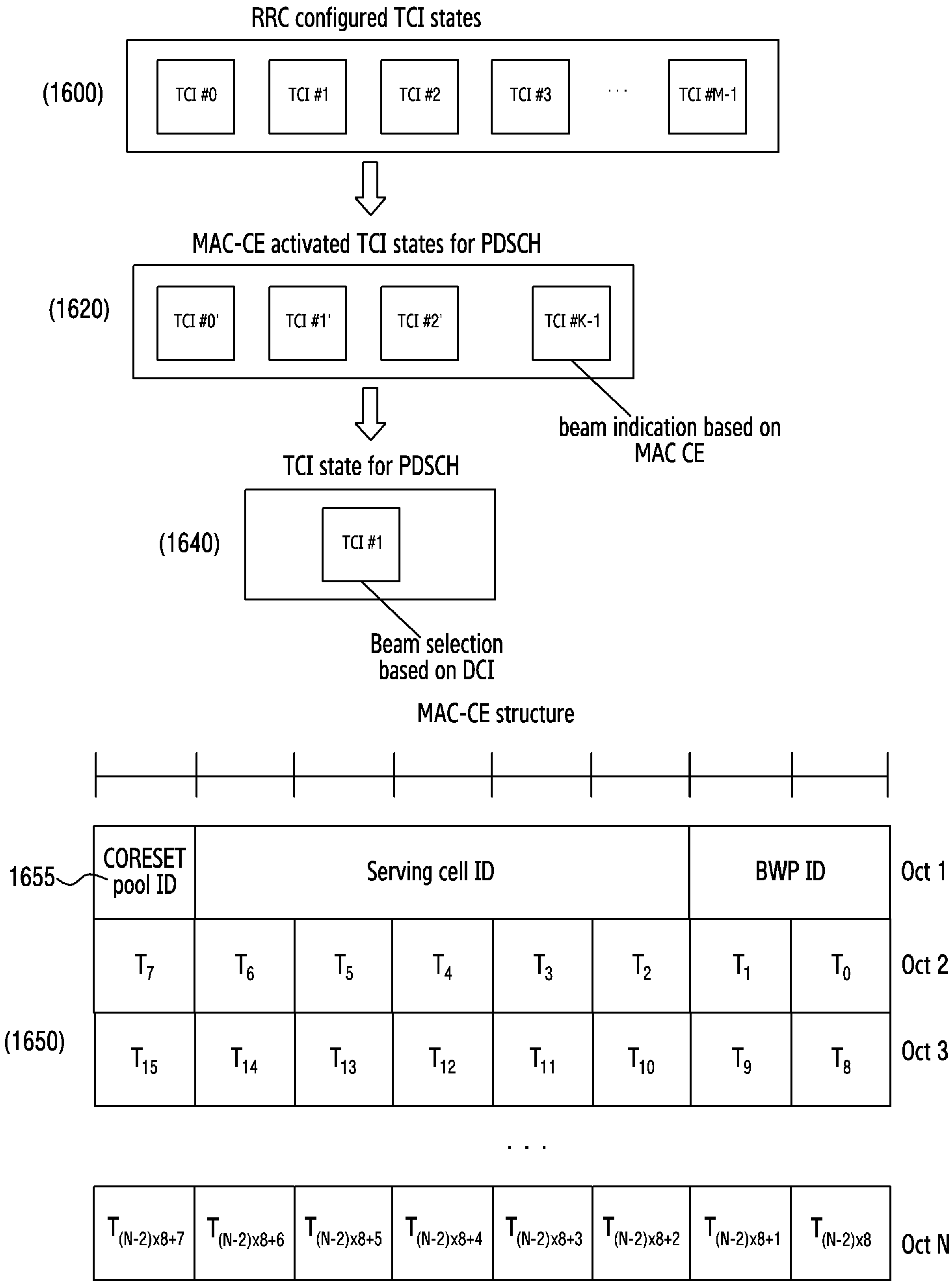
RRC configured TCI states
(1600)
TCI #0
TCI #1
TCI #2
TCI #3
. . .
TCI #M-1
MAC-CE activated TCI states for PDSCH
(1620)
TCI #0'
TCI #1'
TCI #2'
TCI #K-1
beam indication based on MAC CE
TCI state for PDSCH
(1640)
TCI #1
Beam selection based on DCI
MAC-CE structure
1655
CORESET pool ID
Serving cell ID
BWP ID
Oct 1
$T_7$ $T_6$ $T_5$ $T_4$ $T_3$ $T_2$ $T_1$ $T_0$
Oct 2
(1650)
$T_{15}$ $T_{14}$ $T_{13}$ $T_{12}$ $T_{11}$ $T_{10}$ $T_9$ $T_8$
Oct 3
. . .
$T_{(N-2)x8+7}$ $T_{(N-2)x8+6}$ $T_{(N-2)x8+5}$ $T_{(N-2)x8+4}$ $T_{(N-2)x8+3}$ $T_{(N-2)x8+2}$ $T_{(N-2)x8+1}$ $T_{(N-2)x8}$
Oct N

FIG.16

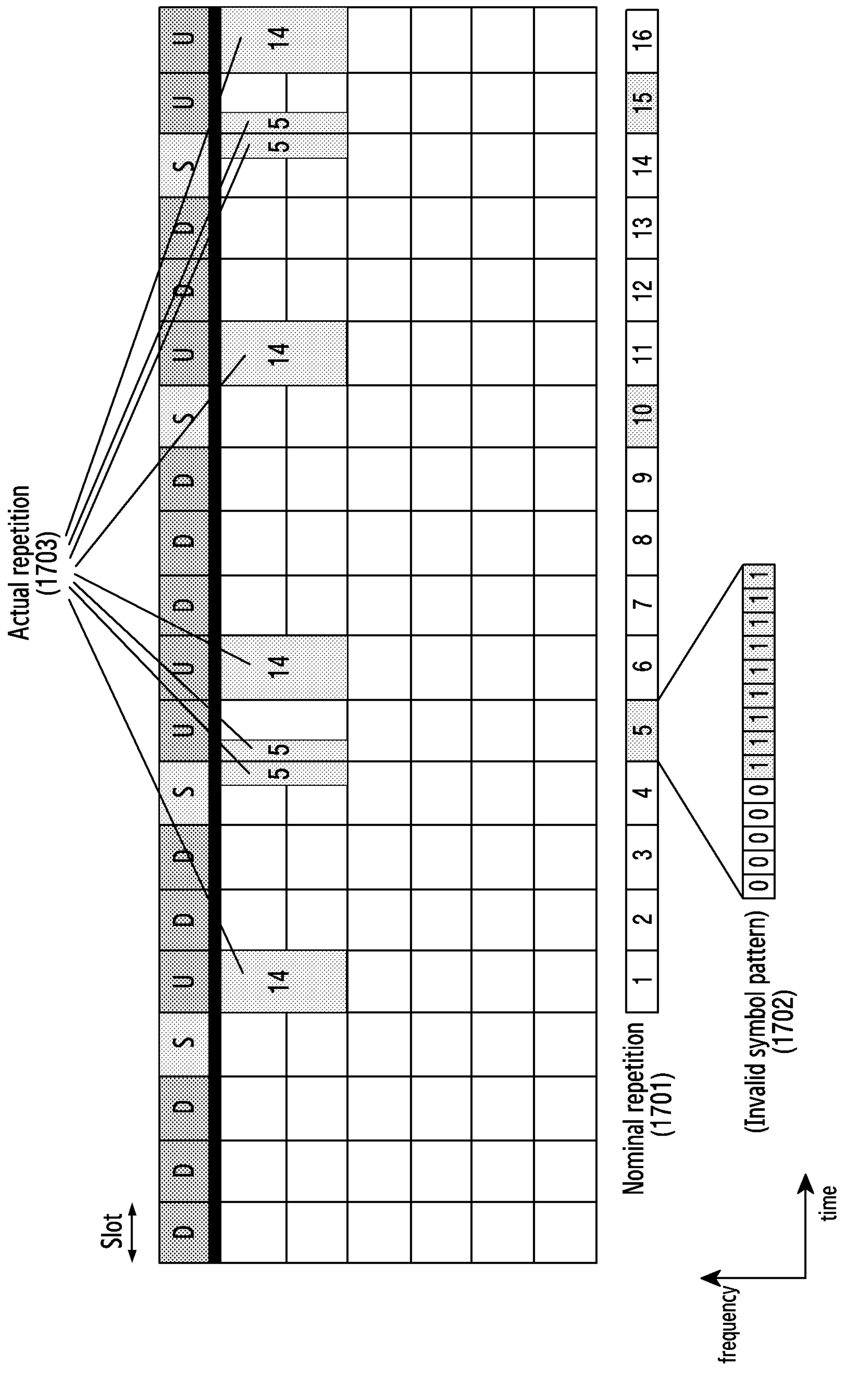

Actual repetition
(1703)
Slot
D D D S U D D S U U D D D S U D D S U U
14
5 5
14
14
5 5
14
Nominal repetition
(1701)
1 2 3 4 5 6 7 8 9 10 11 12 13 14 15 16
(Invalid symbol pattern)
(1702)
0 0 0 0 0 1 1 1 1 1 1 1 1 1
frequency
time


FIG.17

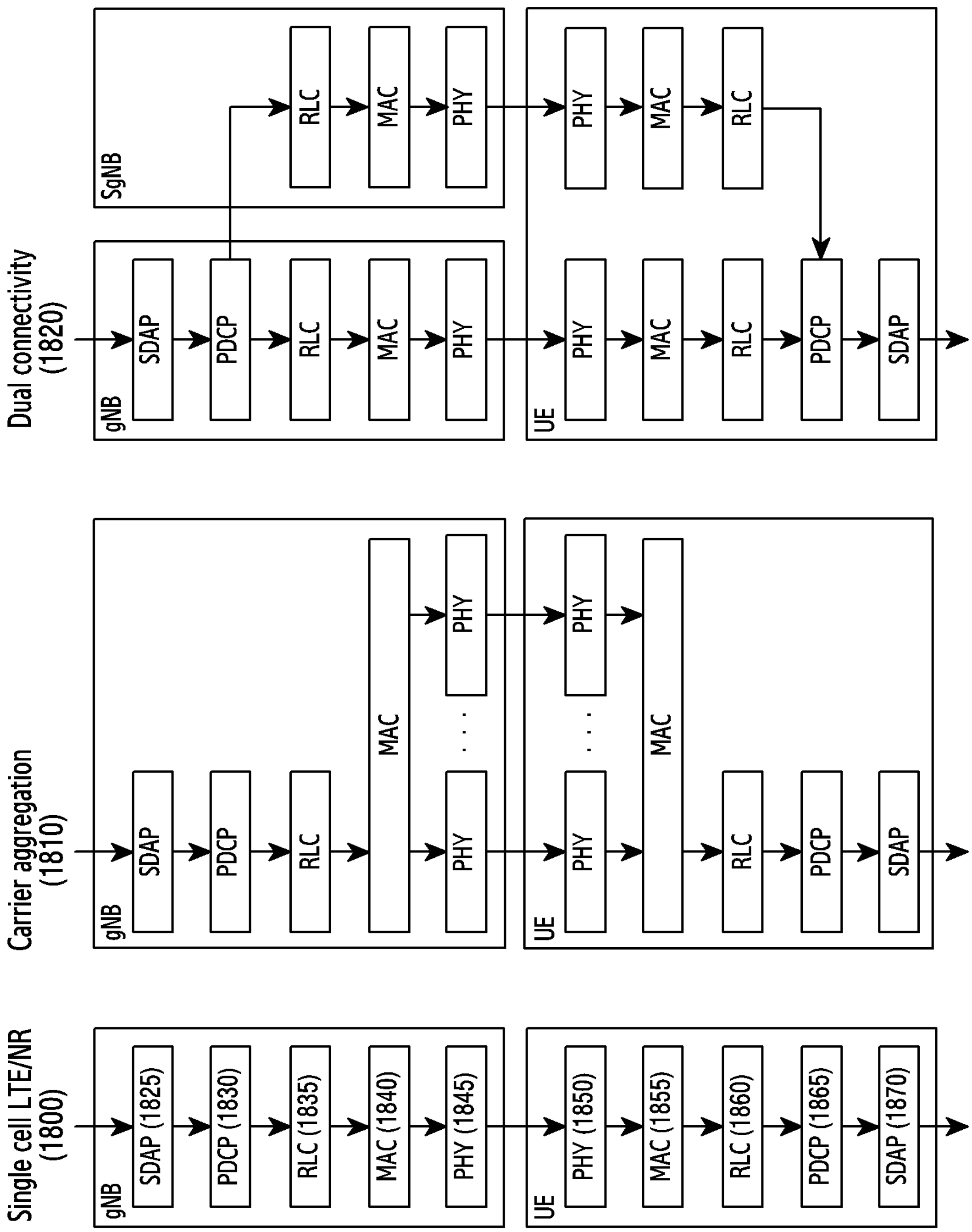
Single cell LTE/NR
(1800)
gNB
SDAP (1825)
PDCP (1830)
RLC (1835)
MAC (1840)
PHY (1845)
UE
PHY (1850)
MAC (1855)
RLC (1860)
PDCP (1865)
SDAP (1870)
Carrier aggregation
(1810)
gNB
SDAP
PDCP
RLC
MAC
PHY
PHY
UE
PHY
PHY
MAC
RLC
PDCP
SDAP
Dual connectivity
(1820)
gNB
SDAP
PDCP
RLC
MAC
PHY
SgNB
RLC
MAC
PHY
UE
PHY
MAC
RLC
PDCP
SDAP
PHY
MAC
RLC

FIG.18

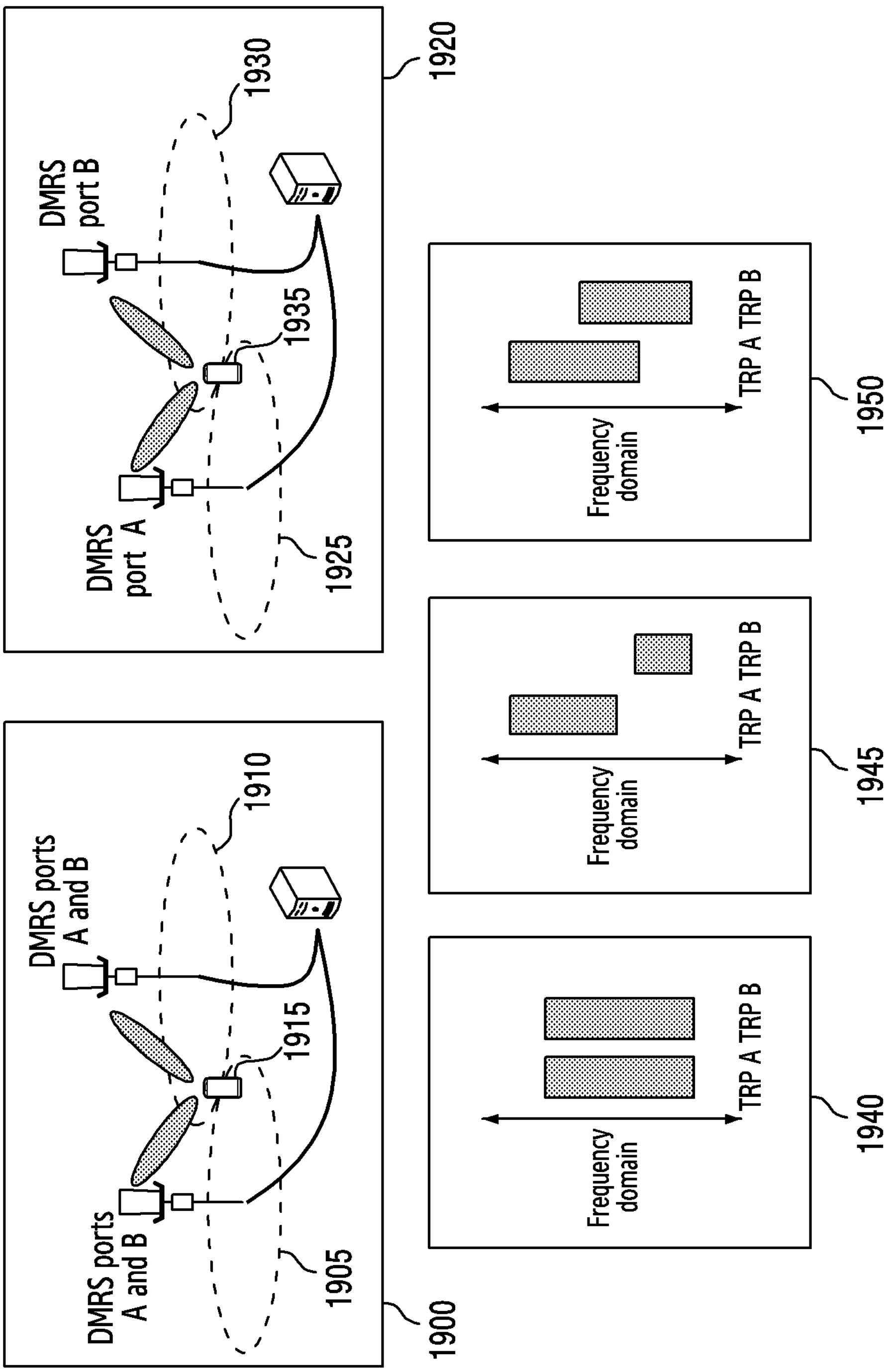
1900
DMRS ports A and B
DMRS ports A and B
1905
1910
1915
1920
DMRS port A
DMRS port B
1925
1930
1935
Frequency domain
TRP A TRP B
1940
Frequency domain
TRP A TRP B
1945
Frequency domain
TRP A TRP B
1950

FIG.19

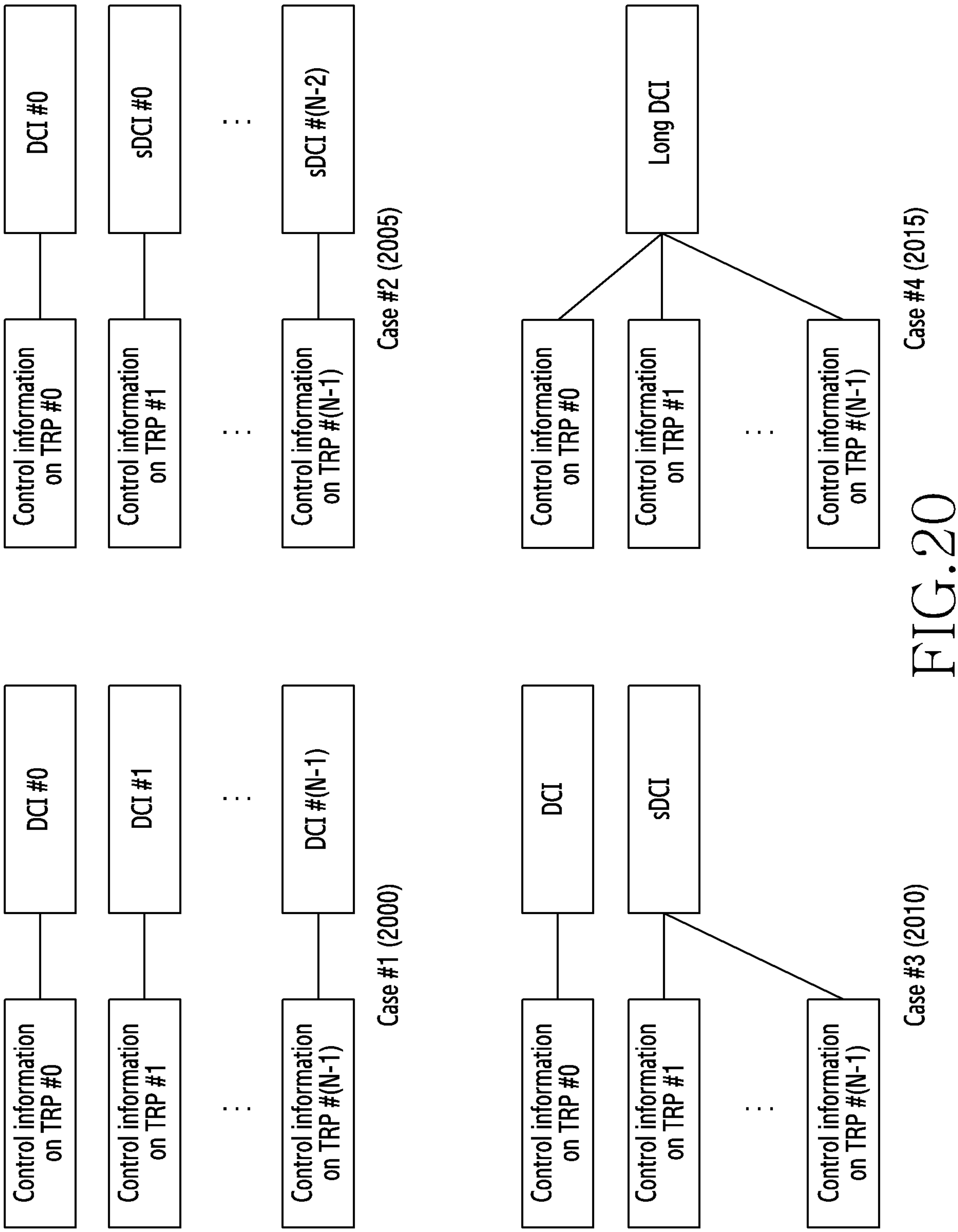
Control information on TRP #0
DCI #0
Control information on TRP #1
DCI #1
Control information on TRP #(N-1)
DCI #(N-1)
Case #1 (2000)
Control information on TRP #0
DCI #0
Control information on TRP #1
sDCI #0
Control information on TRP #(N-1)
sDCI #(N-2)
Case #2 (2005)
Control information on TRP #0
DCI
Control information on TRP #1
sDCI
Control information on TRP #(N-1)
Case #3 (2010)
Control information on TRP #0
Control information on TRP #1
Control information on TRP #(N-1)
Long DCI
Case #4 (2015)

FIG. 20

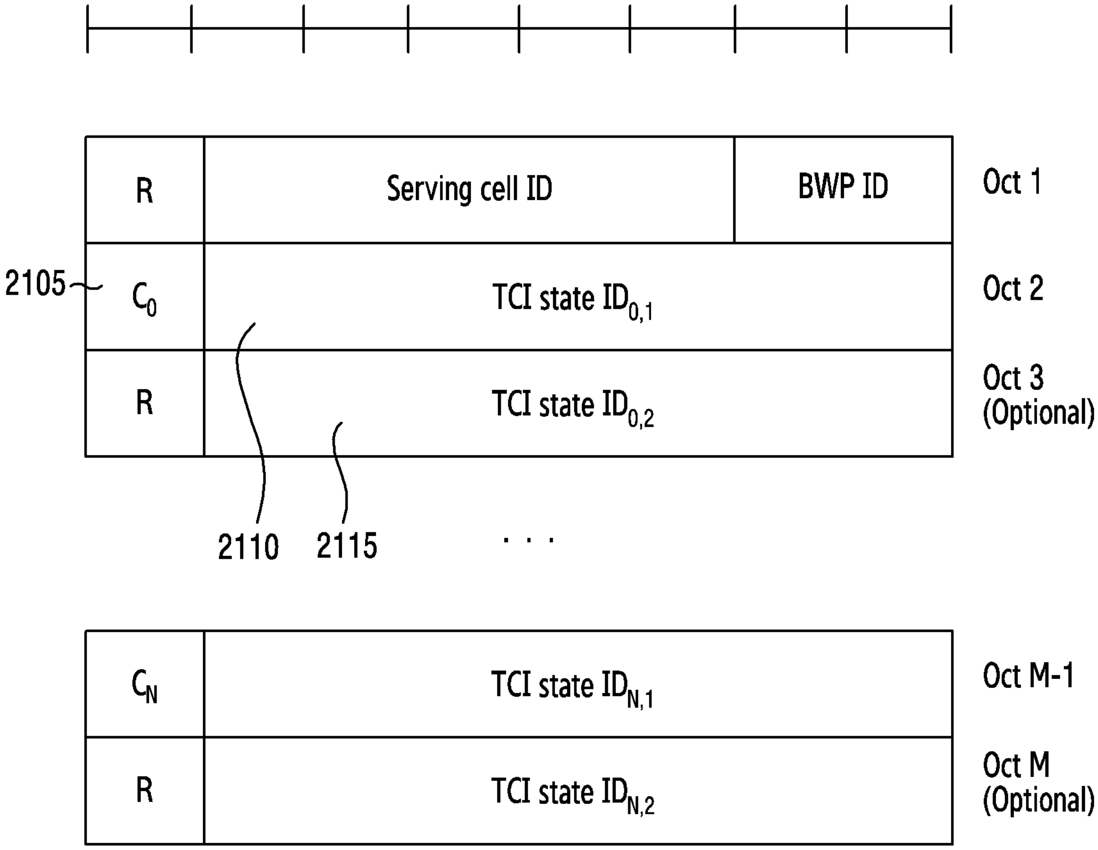

R
Serving cell ID
BWP ID
Oct 1
2105
C0
TCI state ID0,1
Oct 2
R
TCI state ID0,2
Oct 3 (Optional)
2110
2115
...
CN
TCI state IDN,1
Oct M-1
R
TCI state IDN,2
Oct M (Optional)


FIG.21

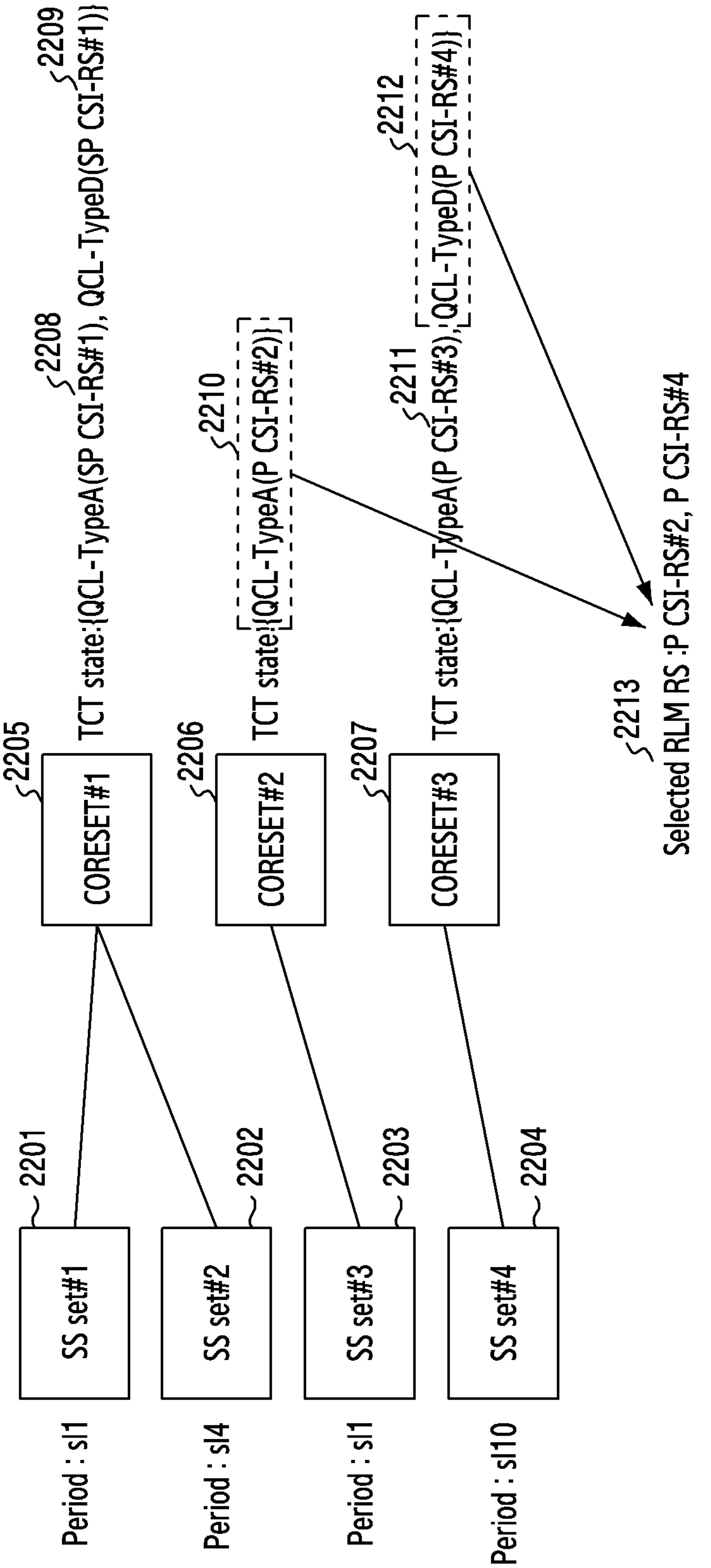
Period : sl1
SS set#1
2201
Period : sl4
SS set#2
2202
Period : sl1
SS set#3
2203
Period : sl10
SS set#4
2204
CORESET#1
2205
CORESET#2
2206
CORESET#3
2207
TCT state:{QCL-TypeA(SP CSI-RS#1), QCL-TypeD(SP CSI-RS#1)}
2208
2209
TCT state:{QCL-TypeA(P CSI-RS#2)}
2210
TCT state:{QCL-TypeA(P CSI-RS#3), QCL-TypeD(P CSI-RS#4)}
2211
2212
Selected RLM RS :P CSI-RS#2, P CSI-RS#4
2213

FIG.22

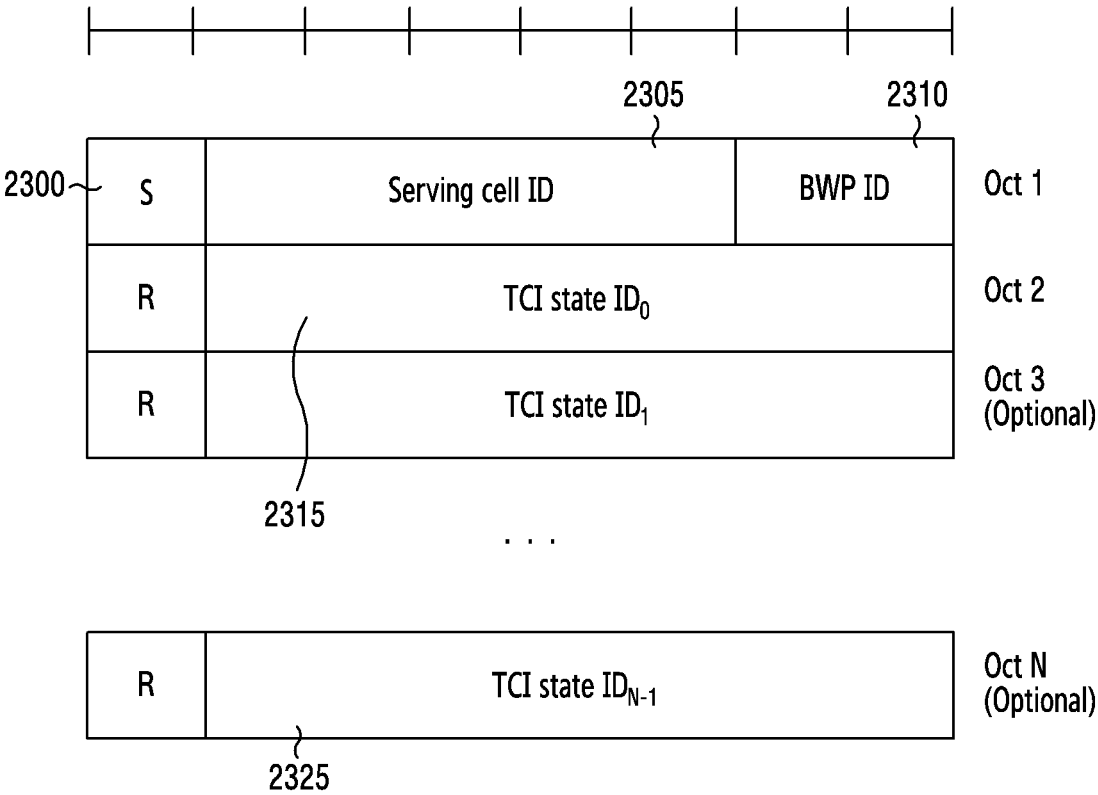
2305
2310
2300
S
Serving cell ID
BWP ID
Oct 1
R
TCI state ID0
Oct 2
R
TCI state ID1
Oct 3 (Optional)
2315
. . .
R
TCI state IDN-1
Oct N (Optional)
2325

FIG.23

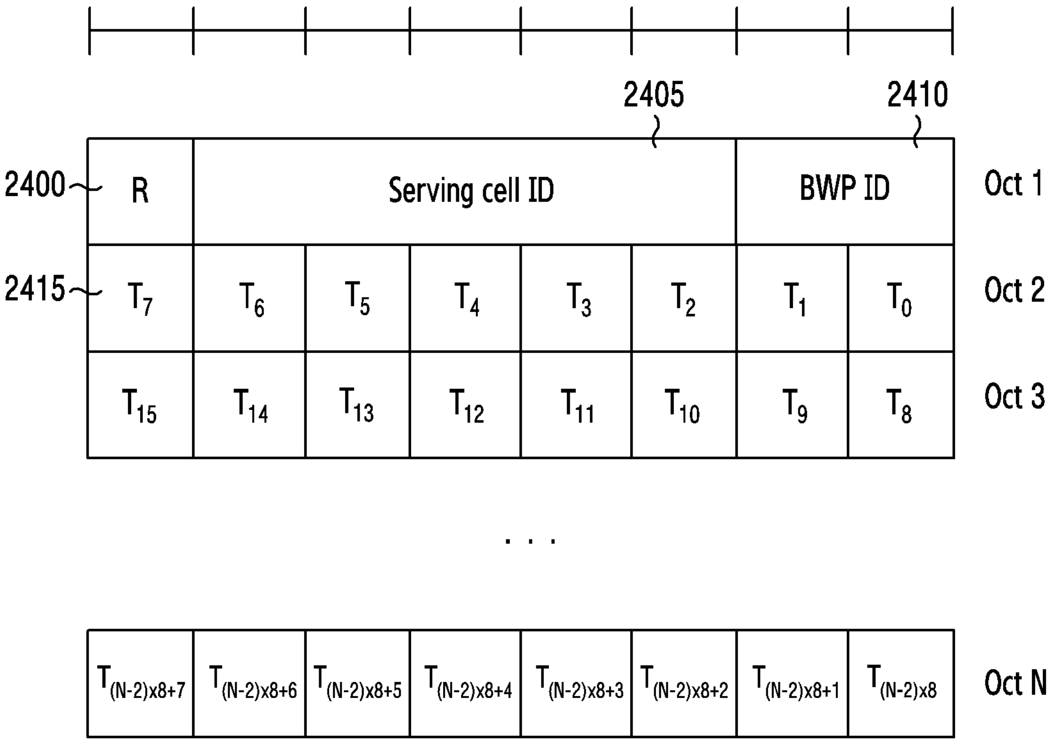
2405
2410
2400
R
Serving cell ID
BWP ID
Oct 1
2415
T7
T6
T5
T4
T3
T2
T1
T0
Oct 2
T15
T14
T13
T12
T11
T10
T9
T8
Oct 3
. . .
T(N-2)x8+7
T(N-2)x8+6
T(N-2)x8+5
T(N-2)x8+4
T(N-2)x8+3
T(N-2)x8+2
T(N-2)x8+1
T(N-2)x8
Oct N

FIG.24

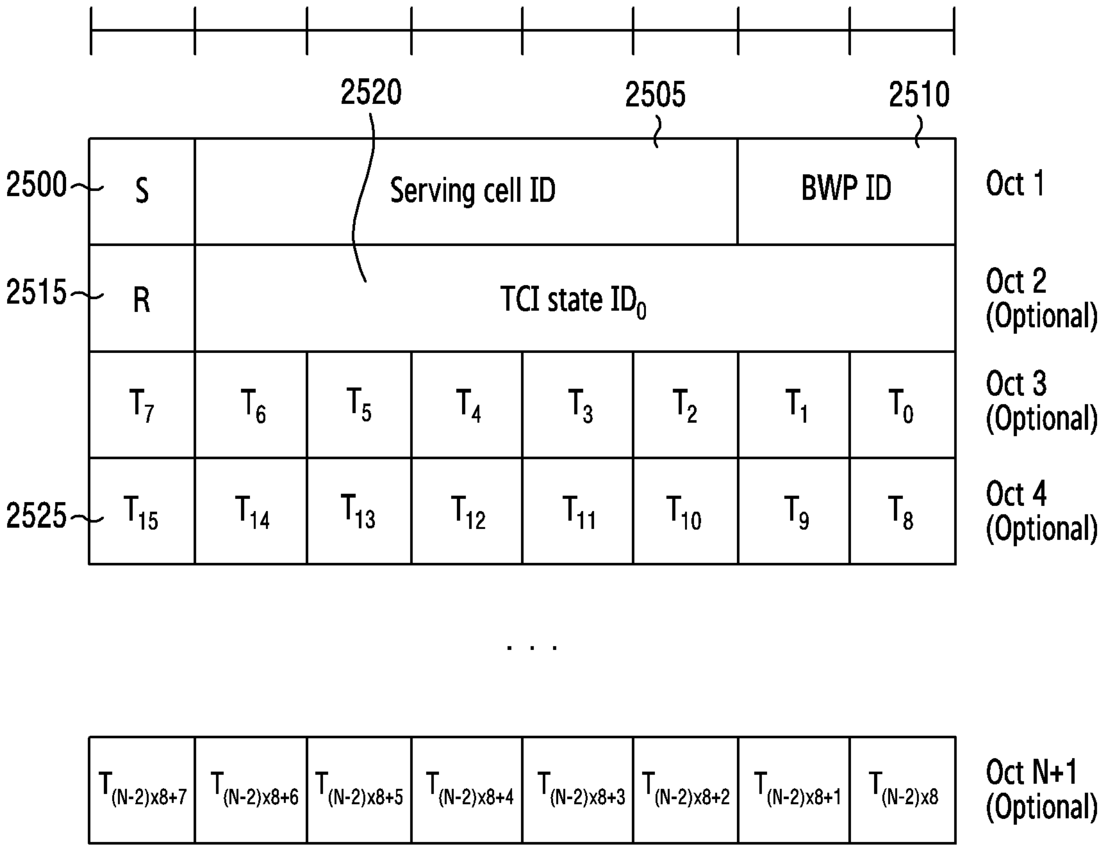
2520
2505
2510
2500
S
Serving cell ID
BWP ID
Oct 1
2515
R
TCI state ID0
Oct 2 (Optional)
T7 T6 T5 T4 T3 T2 T1 T0
Oct 3 (Optional)
2525
T15 T14 T13 T12 T11 T10 T9 T8
Oct 4 (Optional)
. . .
T(N-2)x8+7 T(N-2)x8+6 T(N-2)x8+5 T(N-2)x8+4 T(N-2)x8+3 T(N-2)x8+2 T(N-2)x8+1 T(N-2)x8
Oct N+1 (Optional)

FIG.25

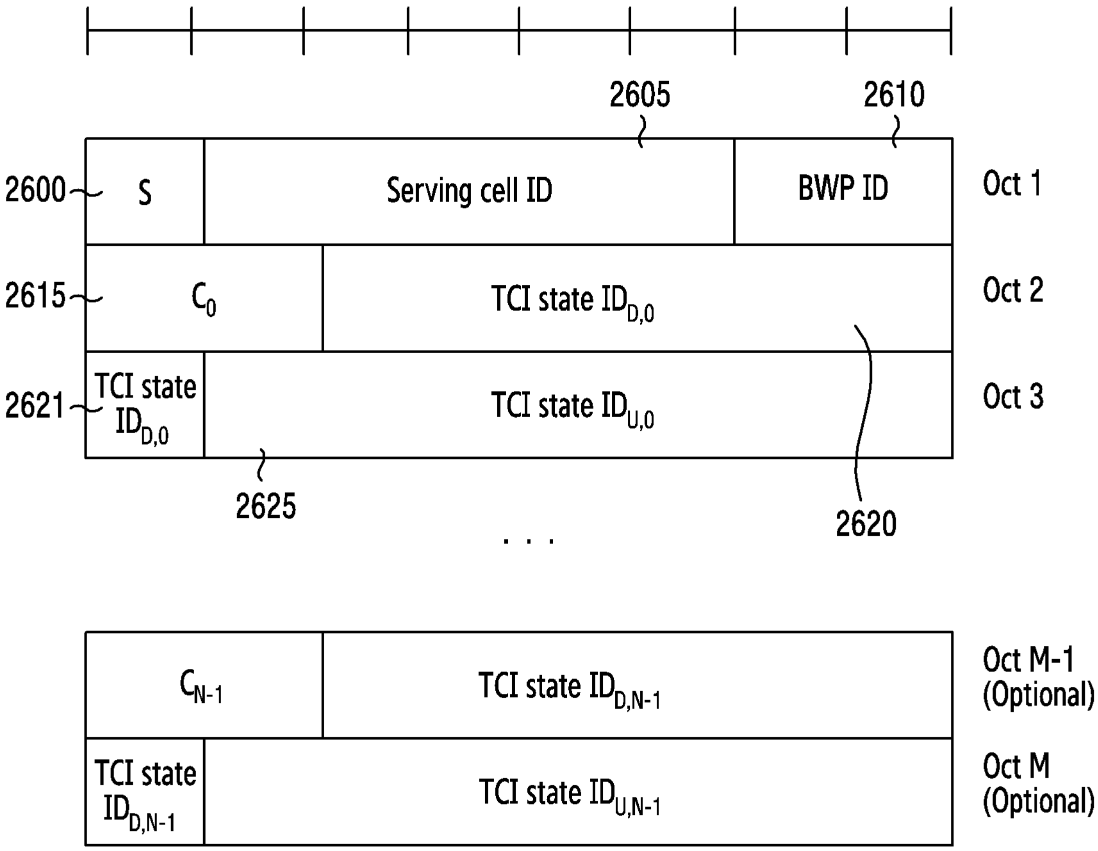
2605
2610
2600
S
Serving cell ID
BWP ID
Oct 1
2615
$C_0$
TCI state $ID_{D,0}$
Oct 2
2621
TCI state $ID_{D,0}$
TCI state $ID_{U,0}$
Oct 3
2625
2620
. . .
$C_{N-1}$
TCI state $ID_{D,N-1}$
Oct M-1 (Optional)
TCI state $ID_{D,N-1}$
TCI state $ID_{U,N-1}$
Oct M (Optional)

FIG.26

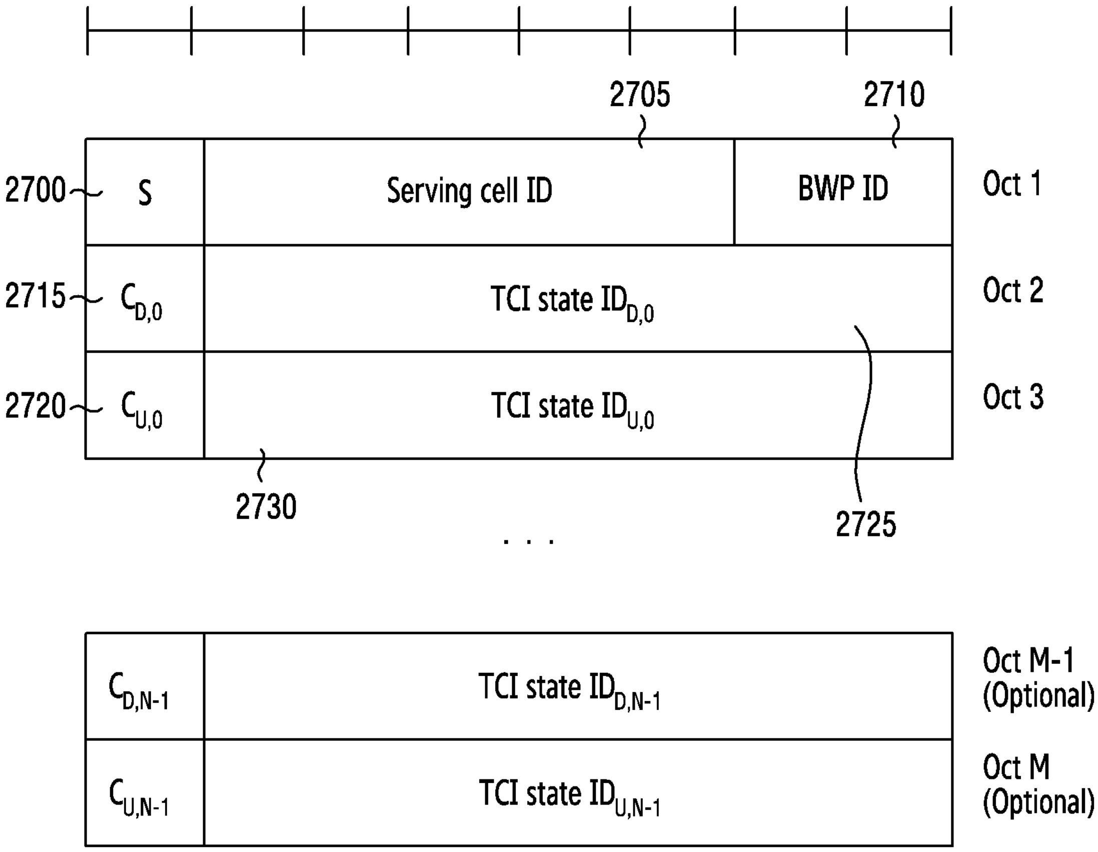
2705
2710
2700
S
Serving cell ID
BWP ID
Oct 1
2715
$C_{D,0}$
TCI state $ID_{D,0}$
Oct 2
2720
$C_{U,0}$
TCI state $ID_{U,0}$
Oct 3
2730
2725
. . .
$C_{D,N-1}$
TCI state $ID_{D,N-1}$
Oct M-1 (Optional)
$C_{U,N-1}$
TCI state $ID_{U,N-1}$
Oct M (Optional)

FIG.27

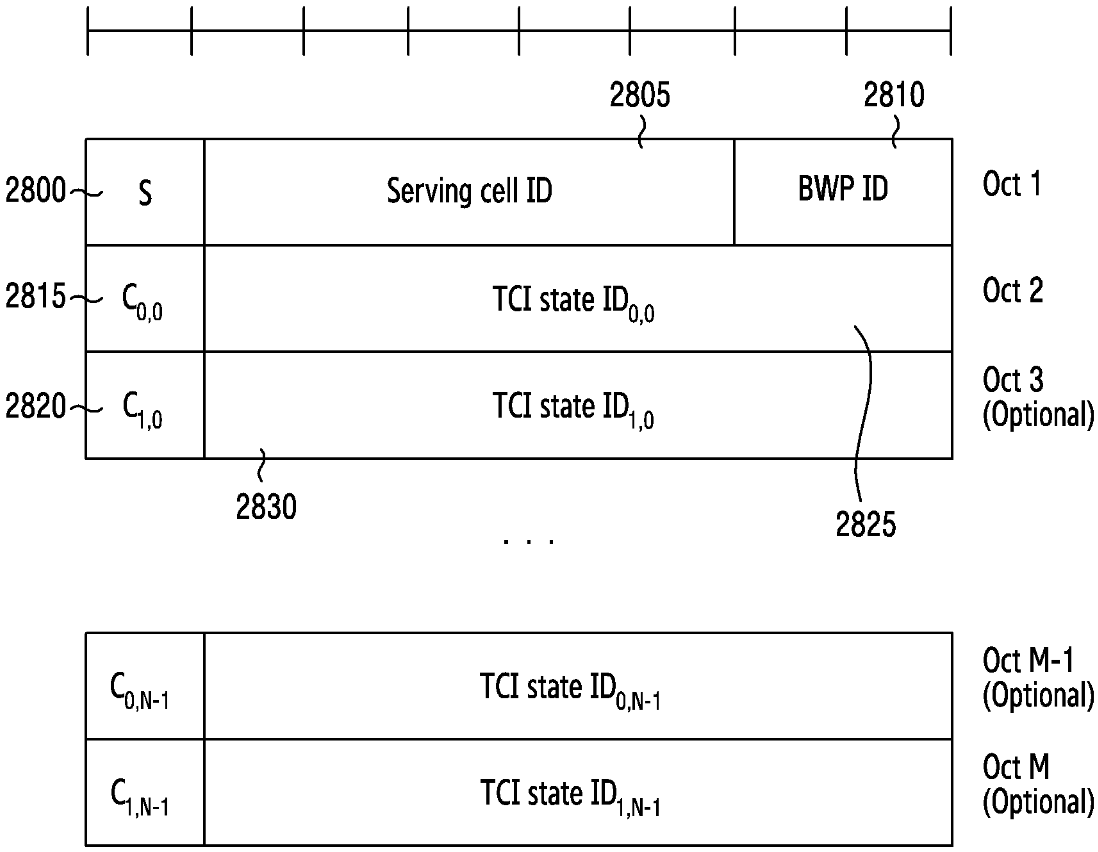
2805
2810
2800
S
Serving cell ID
BWP ID
Oct 1
2815
$C_{0,0}$
TCI state $ID_{0,0}$
Oct 2
2820
$C_{1,0}$
TCI state $ID_{1,0}$
Oct 3 (Optional)
2830
2825
...
$C_{0,N-1}$
TCI state $ID_{0,N-1}$
Oct M-1 (Optional)
$C_{1,N-1}$
TCI state $ID_{1,N-1}$
Oct M (Optional)

FIG.28

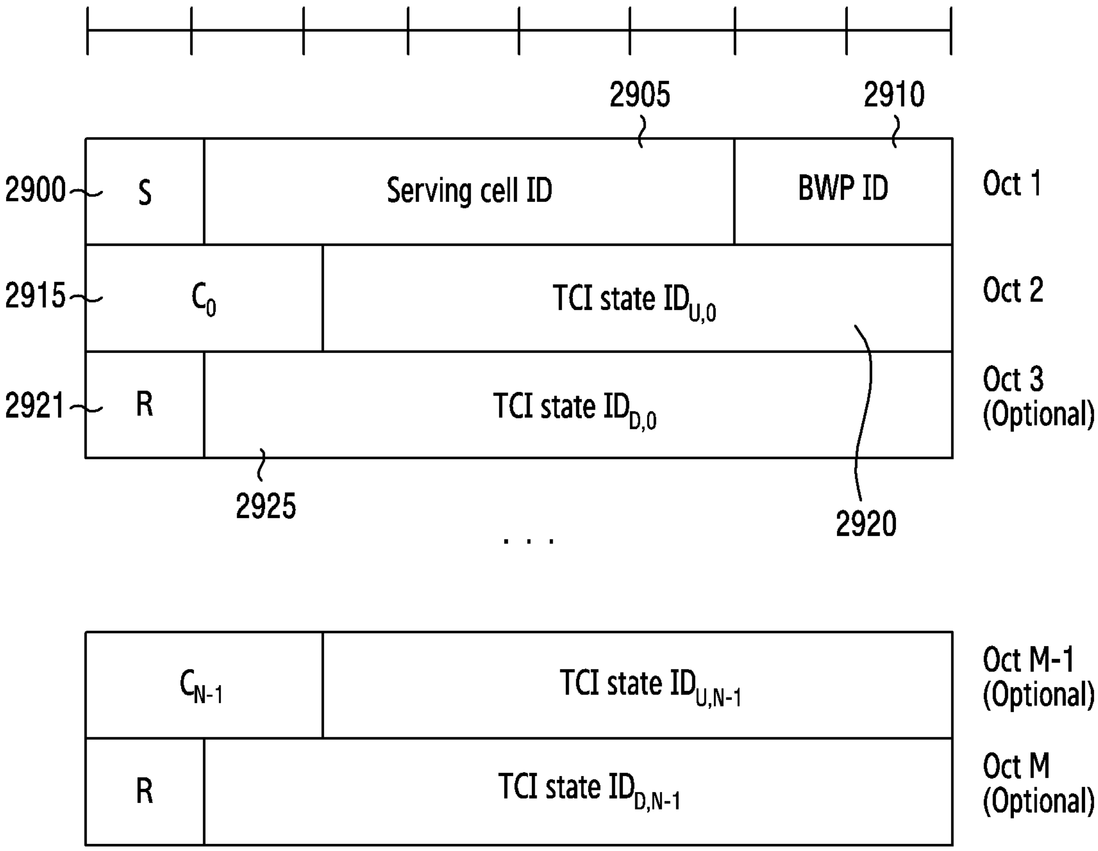
2905
2910
2900
S
Serving cell ID
BWP ID
Oct 1
2915
C0
TCI state IDU,0
Oct 2
2921
R
TCI state IDD,0
Oct 3
(Optional)
2925
2920
. . .
CN-1
TCI state IDU,N-1
Oct M-1
(Optional)
R
TCI state IDD,N-1
Oct M
(Optional)

FIG.29

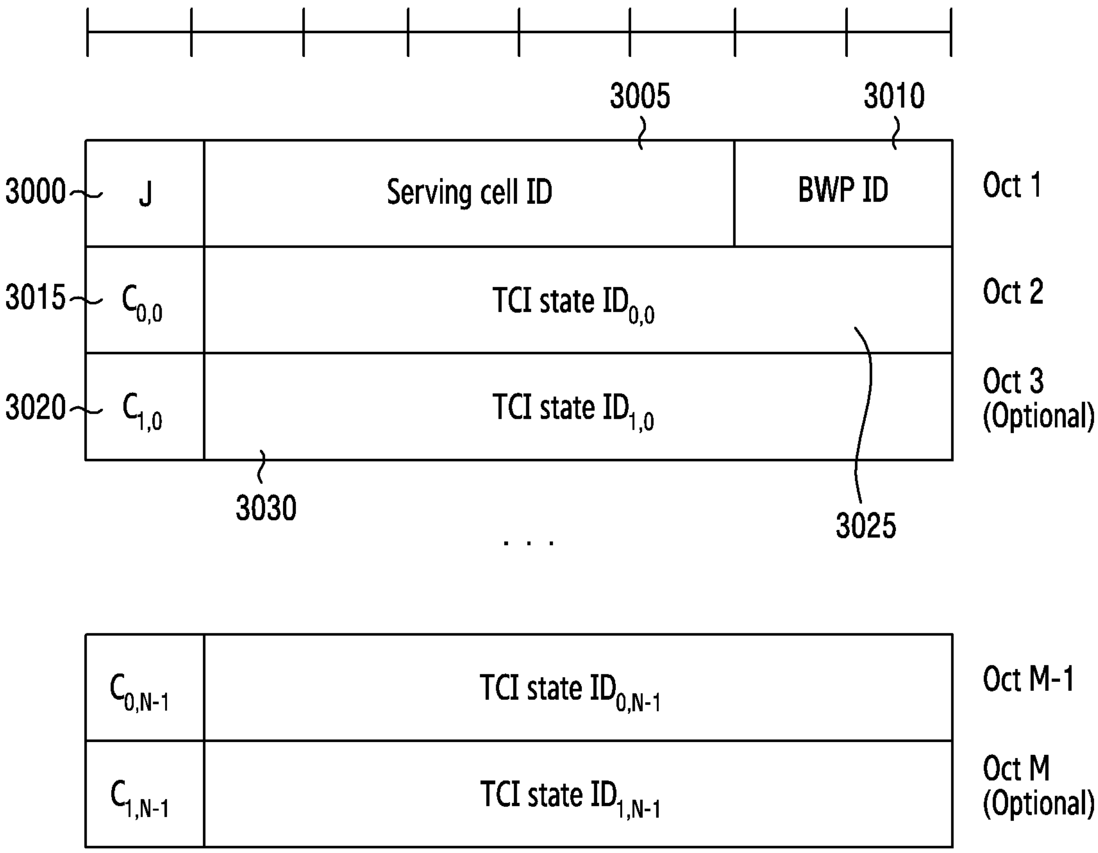
3005
3010
3000
J
Serving cell ID
BWP ID
Oct 1
3015
$C_{0,0}$
TCI state $ID_{0,0}$
Oct 2
3020
$C_{1,0}$
TCI state $ID_{1,0}$
Oct 3 (Optional)
3030
3025
. . .
$C_{0,N-1}$
TCI state $ID_{0,N-1}$
Oct M-1
$C_{1,N-1}$
TCI state $ID_{1,N-1}$
Oct M (Optional)

FIG.30

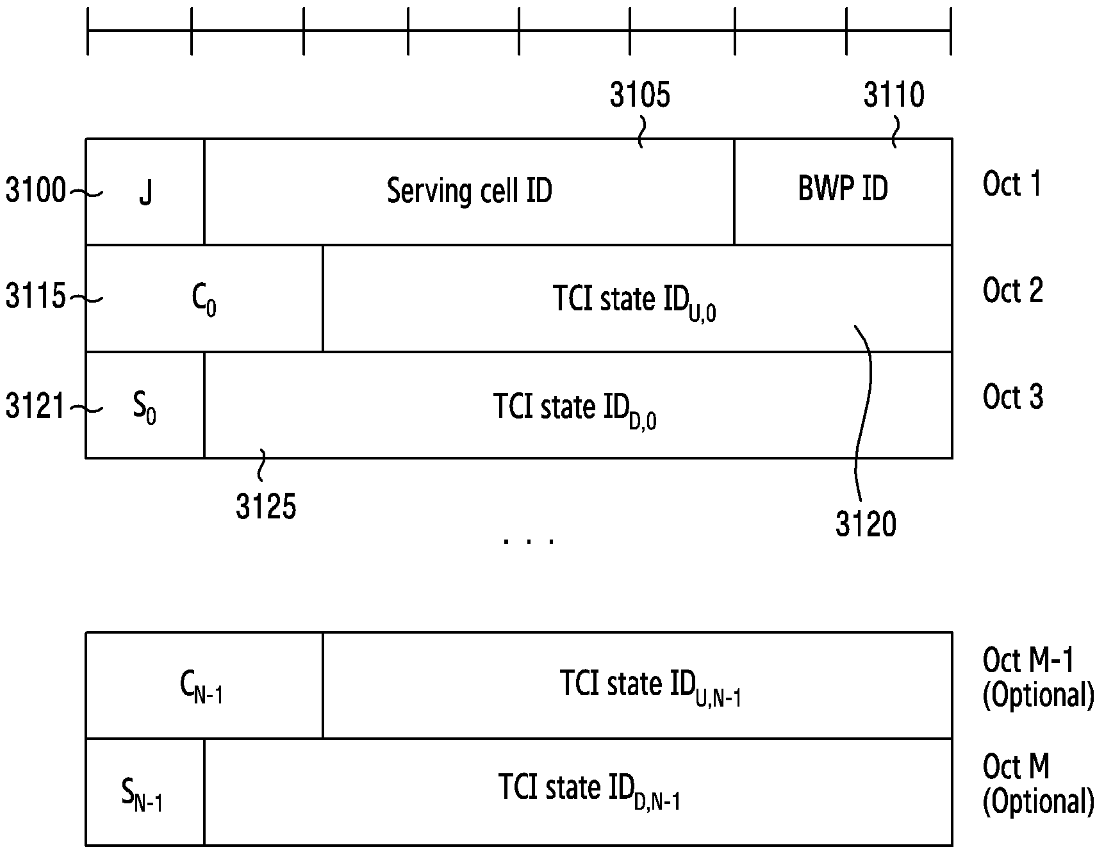

3105
3110
3100
J
Serving cell ID
BWP ID
Oct 1
3115
$C_0$
TCI state $ID_{U,0}$
Oct 2
3121
$S_0$
TCI state $ID_{D,0}$
Oct 3
3125
3120
. . .
$C_{N-1}$
TCI state $ID_{U,N-1}$
Oct M-1 (Optional)
$S_{N-1}$
TCI state $ID_{D,N-1}$
Oct M (Optional)


FIG.31

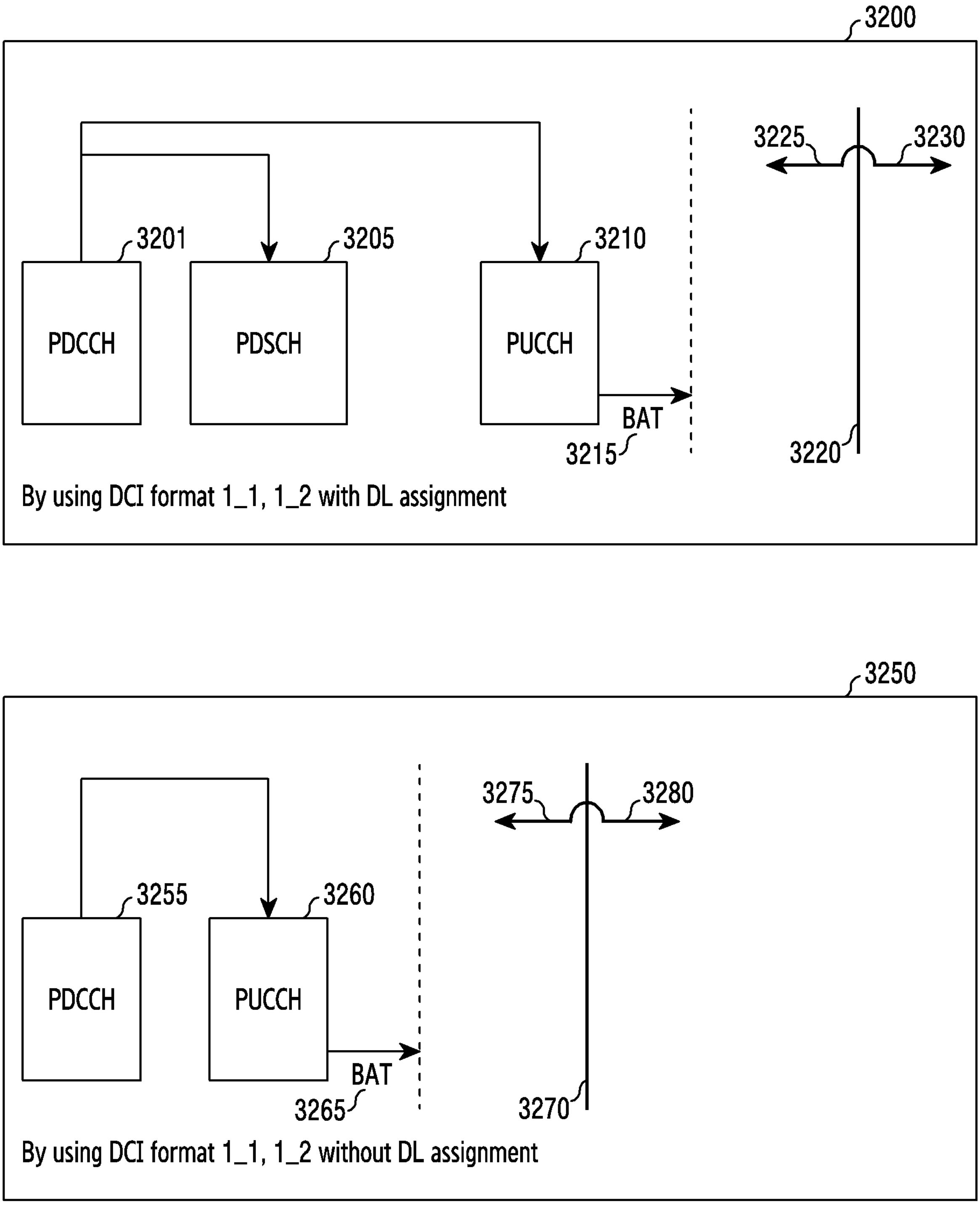
3200
3225
3230
3201
3205
3210
PDCCH
PDSCH
PUCCH
BAT
3215
3220
By using DCI format 1_1, 1_2 with DL assignment
3250
3275
3280
3255
3260
PDCCH
PUCCH
BAT
3265
3270
By using DCI format 1_1, 1_2 without DL assignment

FIG.32

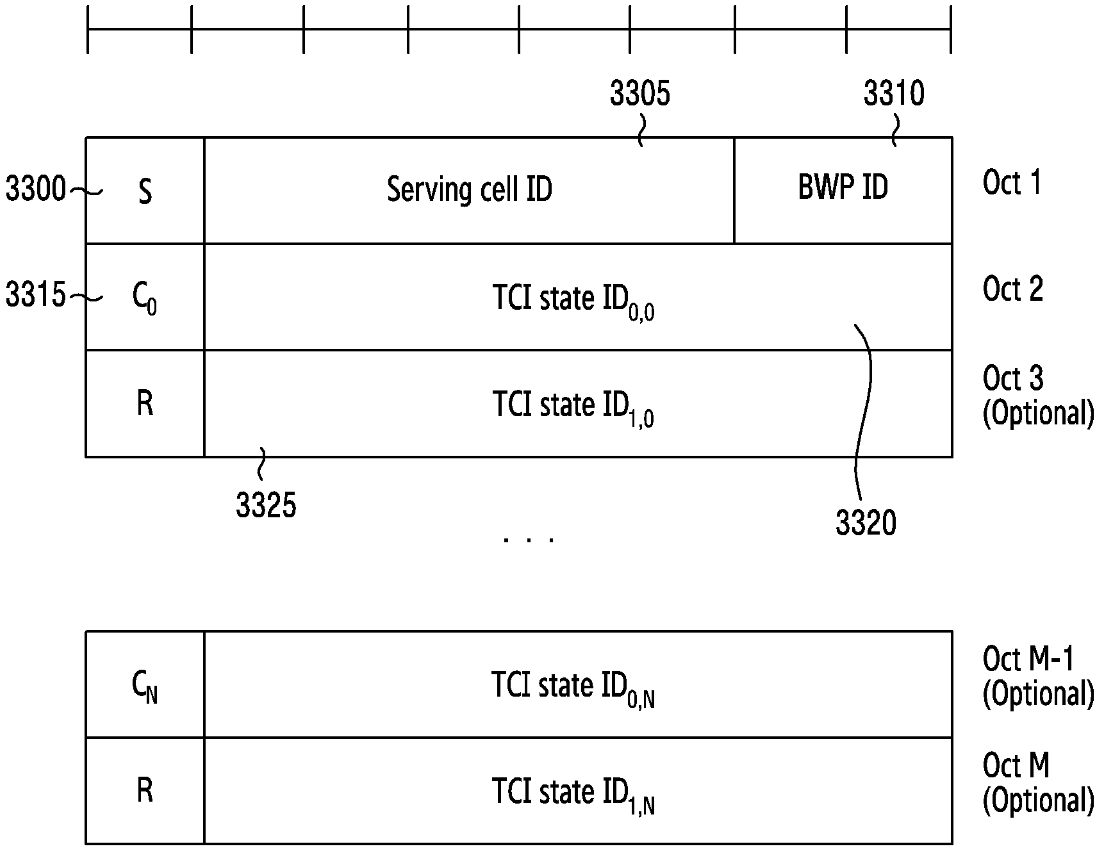
3305
3310
3300
S
Serving cell ID
BWP ID
Oct 1
3315
C0
TCI state ID0,0
Oct 2
R
TCI state ID1,0
Oct 3
(Optional)
3325
3320
. . .
CN
TCI state ID0,N
Oct M-1
(Optional)
R
TCI state ID1,N
Oct M
(Optional)

FIG.33

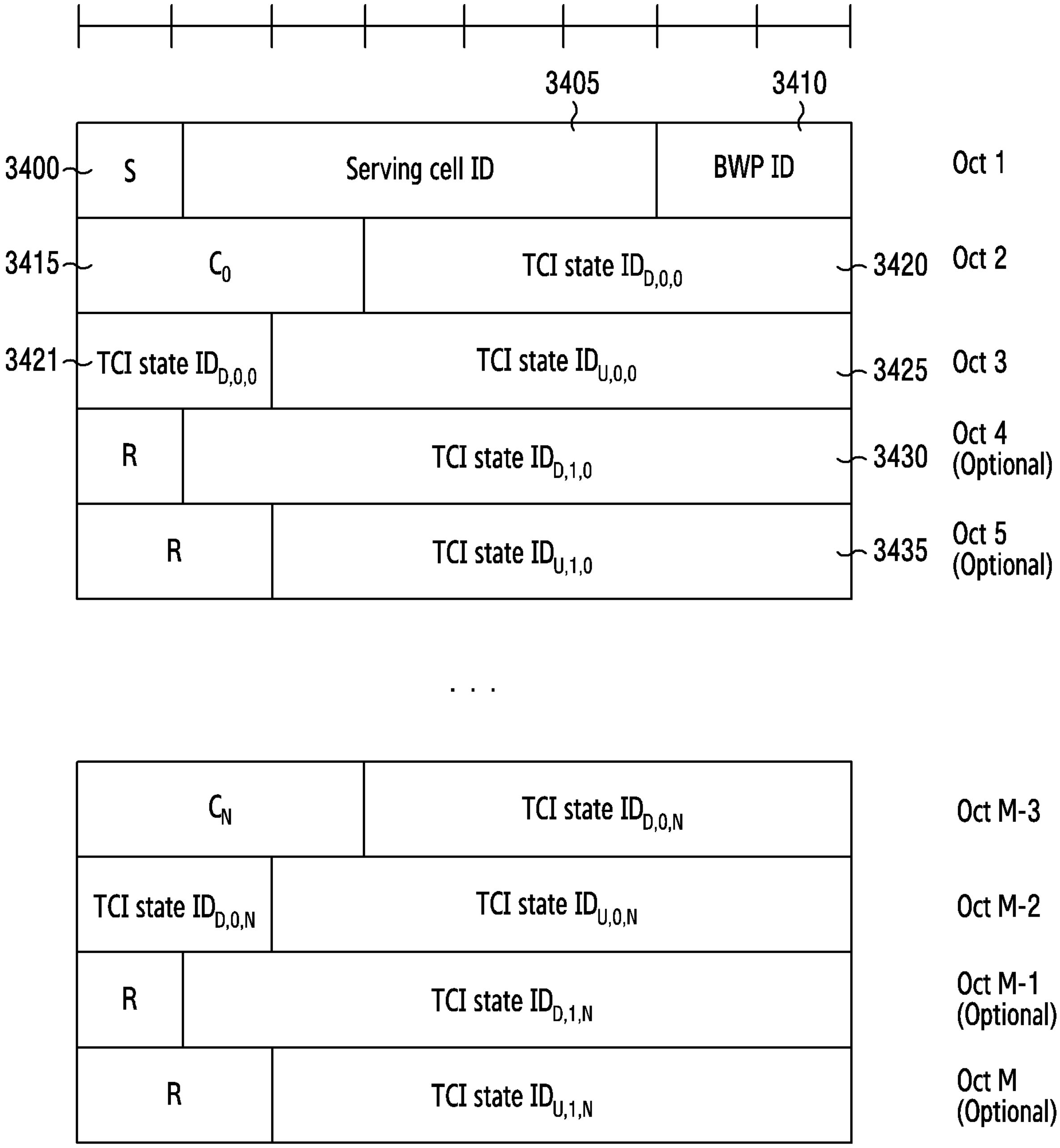
3405
3410
3400
S
Serving cell ID
BWP ID
Oct 1
3415
C0
TCI state ID D,0,0
3420
Oct 2
3421
TCI state ID D,0,0
TCI state ID U,0,0
3425
Oct 3
R
TCI state ID D,1,0
3430
Oct 4 (Optional)
R
TCI state ID U,1,0
3435
Oct 5 (Optional)
. . .
CN
TCI state ID D,0,N
Oct M-3
TCI state ID D,0,N
TCI state ID U,0,N
Oct M-2
R
TCI state ID D,1,N
Oct M-1 (Optional)
R
TCI state ID U,1,N
Oct M (Optional)

FIG.34

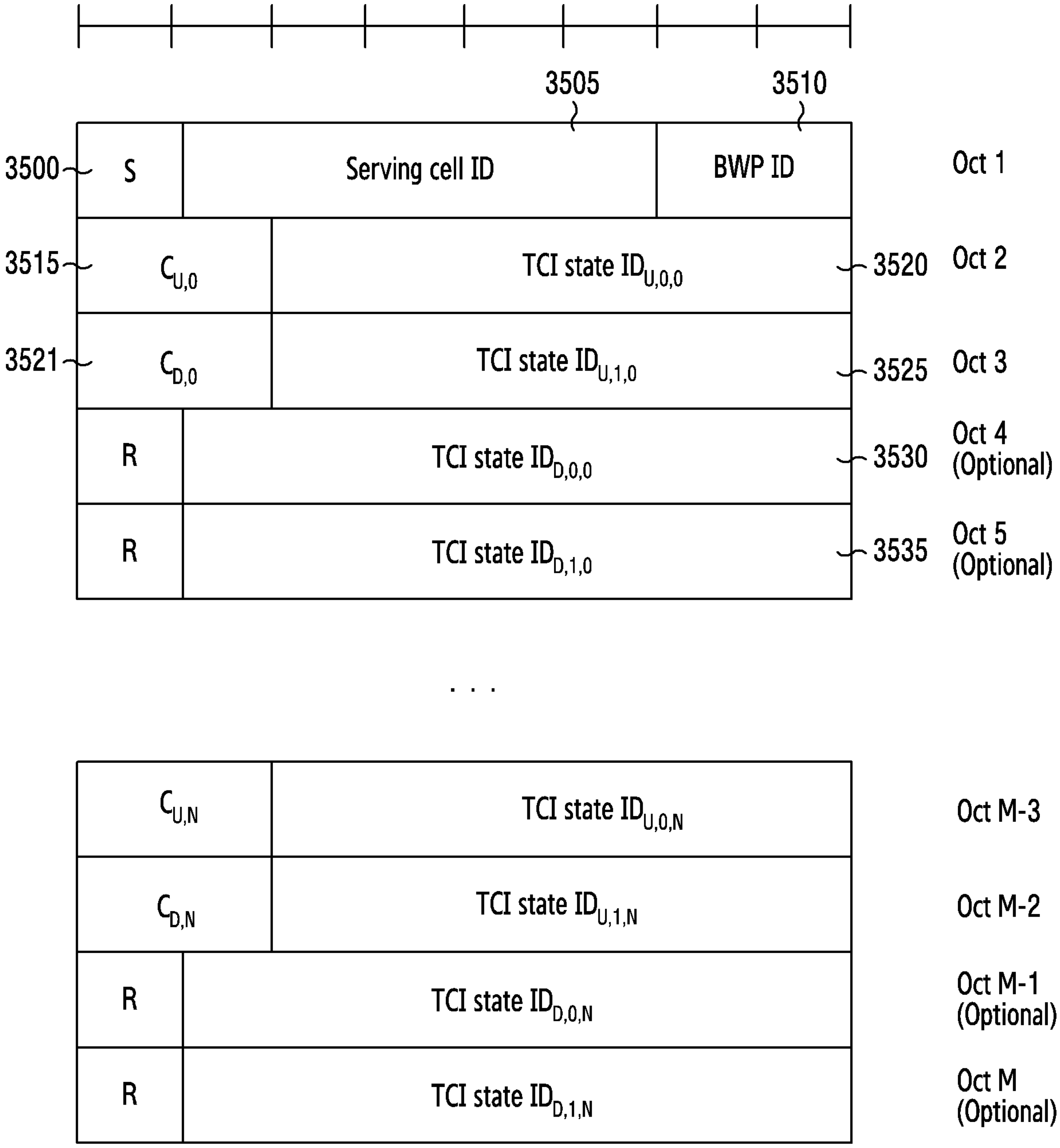
3505
3510
3500
S
Serving cell ID
BWP ID
Oct 1
3515
C U,0
TCI state ID U,0,0
3520
Oct 2
3521
C D,0
TCI state ID U,1,0
3525
Oct 3
R
TCI state ID D,0,0
3530
Oct 4 (Optional)
R
TCI state ID D,1,0
3535
Oct 5 (Optional)
. . .
C U,N
TCI state ID U,0,N
Oct M-3
C D,N
TCI state ID U,1,N
Oct M-2
R
TCI state ID D,0,N
Oct M-1 (Optional)
R
TCI state ID D,1,N
Oct M (Optional)

FIG.35

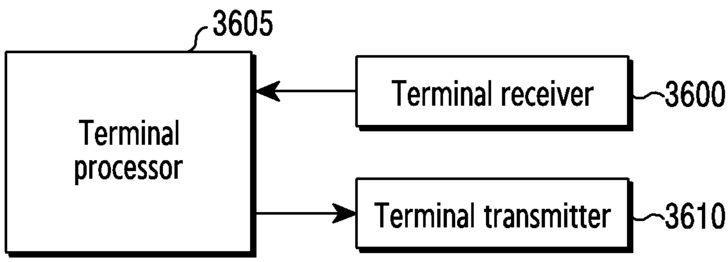
3605
Terminal processor
Terminal receiver
3600
Terminal transmitter
3610

FIG.36

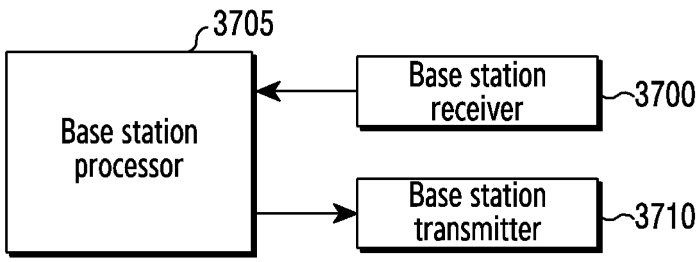
3705
Base station processor
Base station receiver
3700
Base station transmitter
3710

FIG.37

## INTERNATIONAL SEARCH REPORT

International application No.
**PCT/KR2022/021744**

**A. CLASSIFICATION OF SUBJECT MATTER**

**H04W 72/23**(2023.01)i; **H04W 72/04**(2009.01)i

According to International Patent Classification (IPC) or to both national classification and IPC

**B. FIELDS SEARCHED**

Minimum documentation searched (classification system followed by classification symbols)

H04W 72/23(2023.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 통합(unified), TCI, DCI, PDSCH

**C. DOCUMENTS CONSIDERED TO BE RELEVANT**

| Category* | Citation of document, with indication, where appropriate, of the relevant passages | Relevant to claim No. |
|---|---|---|
| Y<br>A | MODERATOR (SAMSUNG). Moderator summary for multi-beam enhancement. R1-2008147, 3GPP TSG RAN WG1 Meeting #103-e. 03 November 2020.<br>See section 3.3. | 1-3,5-6,8-10,12-14<br>4,7,11,15 |
| Y | 3GPP; TSG RAN; NR; Physical layer procedures for data (Release 16). 3GPP TS 38.214 V16.7.0 (September 2021). 28 September 2021.<br>See section 5.1.5. | 1-3,5-6,8-10,12-14 |
| Y | HUAWEI et al. Inter-cell beam management and inter-cell mTRP. R2-2111205, 3GPP TSG RAN WG2 Meeting #116-e. 22 October 2021.<br>See section 2.2.1. | 2,6,9,13 |
| A | QUALCOMM INCORPORATED. Inter-cell Beam Management and mTRP. R2-2110167, 3GPP TSG RAN WG2 Meeting #116-e. 22 October 2021.<br>See section 2. | 1-15 |
| A | WO 2021-210881 A1 (LG ELECTRONICS INC.) 21 October 2021 (2021-10-21)<br>See paragraphs [0386]-[0405]; and claims 1-18. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 March 2023** | **30 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/021744**

| Patent document cited in search report | Publication date (day/month/year) | Patent family member(s) | Publication date (day/month/year) |
|---|---|---|---|
| WO 2021-210881 A1 | 21 October 2021 | KR 10-2023-0002366 A | 05 January 2023 |

Form PCT/ISA/210 (patent family annex) (July 2022)